# FASCICULE DE BREVET EUROPEEN

(11) **EP 1 425 091 B1**
(45) Date de publication et mention de la délivrance du brevet: **12.07.2006**
(21) Numéro de dépôt: 02798000.2
(22) Date de dépôt: 09.09.2002
(51) Int. Cl.: B01J 19/00

(54) **APPAREIL AUTOMATIQUE POUR LA SYNTHESE DE PETITES MOLECULES ORGANIQUES ET PROCEDE DE SYNTHESE METTANT EN OEVRE CET APPAREIL**
AUTOMATISCHER VORRICHTUNG ZUR SYNTHESE VON KLEINEN ORGANISCHEN MOLEKÜLEN UND VERFAHREN ZUR ANWENDUNG DIESER VORRICHTUNG
AUTOMATIC APPARATUS FOR SYNTHESIS OF SMALL ORGANIC MOLECULES AND SYNTHESIS METHOD USING SAME

(30) Priorité: 10.09.2001 FR 0111694
(43) Date de publication de la demande: 09.06.2004
(73) Titulaire: CENTRE NATIONAL DE LA RECHERCHE SCIENTIFIQUE (CNRS), 75016 Paris (FR); Les Laboratoires Servier, 92200 Neuilly sur Seine (FR)
(72) Inventeur: NEIMARK, Jean, F-67000 Strasbourg (FR); HENLIN, Jean-Michel, F-92150 Surennes (FR); FAUCHERE, Jean-Luc, F-92210 Saint-Cloud (FR)
(74) Mandataire: Nuss, Pierre
(86) Numéro de dépôt international: PCT/FR2002/003059
(87) Numéro de publication internationale: WO 2003/022420

(56) Documents cités:
- WO-A-01/68237
- WO-A-98/57181
- FR-A- 2 664 602
- US-A- 5 866 342

## Description

La présente invention concerne le domaine de la production par synthèse de molécules organiques, préférentiellement de petites molécules organiques en grand nombre par synthèses parallèles simultanées, et a pour objet un appareil automatique pour la synthèse de molécules organiques, selon des protocoles de synthèses combinatoires ou parallèles, préférentiellement en phase solide.

La synthèse combinatoire fait partie de l'arsenal de l'industrie pharmaceutique pour contribuer à la découverte de nouvelles molécules organiques actives, en particulier de nouveaux médicaments. Elle a pour but la préparation rapide de nombreux produits destinés au criblage pharmacologique. Ce faisant, elle accélère le processus de découverte de nouvelles entités chimiques et augmente leur diversité moléculaire.

Par ailleurs, l'homme du métier connaît les avantages de la synthèse sur phase solide par rapport à la synthèse en solution qui ont été décrits pour les polypeptides et les polynucléotides et pour les autres classes structurales de molécules organiques. Il s'agit, en l'occurrence, de la facile purification intermédiaire des produits par lavages et filtrations, et de l'automatisation possible du processus synthétique.

Par le document FR-A-2 582 655, on connaît déjà un multi-synthétiseur de peptides en phase solide à fonctionnement semi-automatique, présentant plus de deux voies de synthèse simultanée et mettant en oeuvre la technique de synthèse sur phase solide développée par B. MERRIFIELD.

Cet appareil a fait l'objet de développements additionnels et de perfectionnements, notamment en termes d'automatisation et de production continue sans intervention manuelle, pour aboutir à un automate de synthèse simultanée de plusieurs peptides identiques ou différents en phase solide décrit et représenté dans le document FR-A-2 664 602.

Compte tenu des avantages de chacune des deux techniques de synthèse évoquées ci-dessus, différents développements ont été réalisés pour mettre au point des méthodes de synthèse combinatoire sur phase solide. Une telle méthode permet de préparer des mélanges de produits grâce à des opérations de mélange et de redistribution des produits intermédiaires. Cette mise en commun des produits de synthèse intermédiaire, à une ou plusieurs reprises au cours d'un protocole de synthèse complet, est avantageusement utilisée pour réaliser sur lesdits produits intermédiaires mélangés des opérations de synthèse ou autres faisant partie des protocoles de synthèse de chacun des produits à obtenir.

Un tel processus combinatoire multiplie à chaque étape le nombre de produits obtenus par un nombre au plus égal au nombre de réacteurs mis en jeu. Ainsi, cinq étapes de couplage de 20 synthons préalablement mélangés, produisent un nombre attendu de 64 millions de produits hexamères.

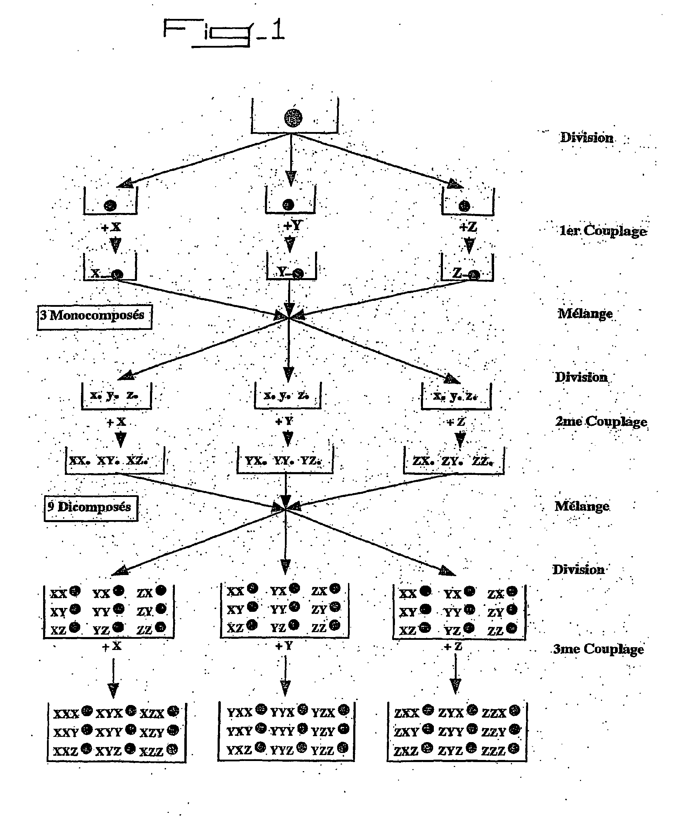

La figure 1 des dessins annexés illustre graphiquement le principe de la synthèse combinatoire sur support solide à l'aide d'un exemple mettant en oeuvre trois composés ou éléments chimiques de base différents, appelés communément synthons, pour produire vingt-sept composés différents formés chacun à partir de trois synthons. L'exemple représenté permet, par conséquent, d'aboutir à trois bibliothèques de neuf tricomposés chacune obtenus au moyen de neuf opérations de synthèses.

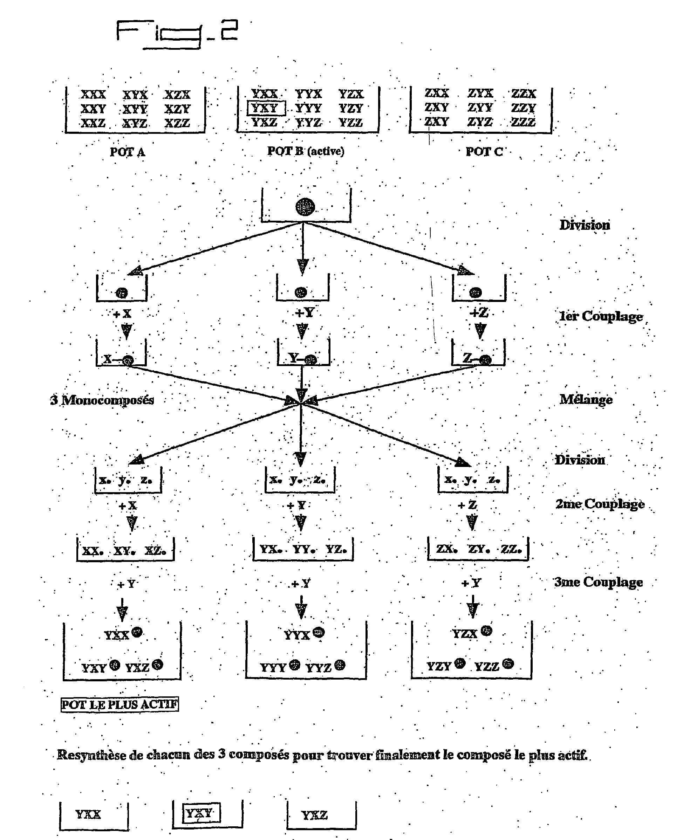

La figure 2 illustre, également à titre d'exemple, une réalisation d'un processus de déconvolution permettant de rechercher, parmi les trois bibliothèques de tricomposés obtenues précédemment, le tricomposé qui est biologiquement le plus actif Après identification du récipient ou pot contenant le produit le plus actif, on réalise une resynthèse des trois tricomposés dudit pot pour déterminer finalement le tricomposé le plus actif.

Une automatisation d'une telle technique de synthèse combinatoire sur phase solide, à température constante et dans des réacteurs ouverts dont le volume intérieur est accessible, a déjà été proposée (cf: Boutin, J.A. & Fauchère, J.L. (1996) "Second-generation robotic synthesizer for peptide, pseudopeptide and non-peptide libraries", Proceedings of the International Symposium on Laboratory Automation and Robotics 1995, Zymark Corp., Hopkinton, MA, USA. Pp. 197-210 / cf: Zuckermann et al. : "Design, construction and application of a fully automated, equimolar peptide mixture synthesizer", Int. J. Peptide Protein Res. 40 (1992) 497).

Par ailleurs, différents automates pour la synthèse parallèle organique de produits individuels sur phase solide ou en solution sont actuellement disponibles dans le commerce, comme par exemple ceux connus sous la description MYRIAD par la société METTLER-TOLEDO, ces automates ne permettant toutefois pas de mettre en oeuvre des techniques de synthèse combinatoire, comprenant au moins une étape de mélange et de redistribution des produits intermédiaires.

Par ailleurs, les appareils connus précités sont généralement dédiés, du fait de leur construction et structure mêmes, à un type de technique de synthèse, comportent des parties, des pièces ou des organes mécaniques en mouvement tels que des bras déplacés en translation et/ou en rotation pour effectuer au moins certains des transferts de substances, notamment de liquides, sont limités dans les possibilités de conditions thermiques applicables aux réactions à opérer et/ou ne permettant pas une extension de capacité par rajout de modules identiques, sans modification de la structure d'ensemble.

Le problème posé à la présente invention consiste notamment à pallier au moins certains des inconvénients précités et à surmonter au moins certaines des limitations des appareils existants.

Le but principal recherché par l'invention est de fournir un appareil automatique pour la synthèse de molécules organiques par application de techniques de synthèse combinatoire dans une grande plage de températures et sous atmosphère contrôlée, ne comportant aucun organe ou pièce mobile dans l'enceinte dudit appareil au cours des phases opératoires et autorisant une extension aisée de sa capacité et une programmation souple et flexible de protocoles de synthèse combinatoire différents, ainsi qu'une reconfiguration aisée pour une utilisation en synthèse parallèle.

A cet effet, la présente invention a pour objet un appareil automatique pour la synthèse de molécules organiques, notamment en phase solide, selon des protocoles de synthèses combinatoires ou parallèles, principalement constitué, d'une part, par plusieurs modules de synthèse comportant chacun entre trois et dix, préférentiellement cinq, réacteurs formés chacun d'un corps tubulaire délimitant, en coopération avec un bouchon supérieur d'injection et de détente et un bouchon inférieur amovible de soutirage contrôlé et de vidange, une chambre de réaction normalement fermée de manière étanche et contrôlée en température par des moyens de chauffage et de refroidissement et pourvus d'un moyen d'agitation du milieu réactionnel par bullage et/ou par l'intermédiaire d'un organe mécanique, un contenant formant chambre de mélange secondaire et dont la contenance correspond au moins à la somme des contenances des réacteurs d'un module, étant associé à chaque module et un contenant supplémentaire étant prévu, formant une chambre de mélange principale dont la contenance correspond au moins à la somme des contenances des différentes chambres de mélange secondaires, d'autre part, par au moins un circuit pour le transfert des contenus des réacteurs vers le contenant associé au module de synthèse considéré et/ou vers le contenant et la répartition contrôlée du contenu d'un ou des contenants entre les réacteurs du module associé et/ou du contenu du contenant entre les contenants ou les réacteurs d'un, de plusieurs ou de tous les modules de l'appareil, ainsi qu'au moins un circuit d'alimentation ou d'évacuation relié notamment aux différentes entrées/sorties des réacteurs et des contenants, ces circuits permettant la circulation de fluide(s) sous l'action d'un gaz propulseur inerte ou neutre et étant formés de conduits ou portions de conduits interconnectés entre eux et reliant lesdits réacteurs et contenants entre eux et à des réservoirs de solutions et à des lignes de détente, d'aspiration et d'injection de gaz propulseur ou de bullage, ces connexions étant établies temporairement au moyen de vannes monovoie ou d'unités de vannes multivoies et monoblocs constituant des noeuds programmables de configuration desdits circuits ou des organes de commande et de gestion des entrées/sorties des réacteurs et contenants et, enfin, par un système superviseur ramifié de gestion et de contrôle de la circulation et de la distribution des fluides dans les circuits précités et de la température et de l'agitation dans les chambres des réacteurs, comprenant notamment une unité informatique associée à des circuits électroniques d'interface et de multiplexage notamment pour la commande des vannes et unités de vannes, des moyens de chauffage et de refroidissement des chambres des réacteurs et, le cas échéant, de l'entraînement des organes mécaniques d'agitation, et intégrant des interfaces de dialogue avec et de programmation par l'utilisateur.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
La figure 3 est une représentation schématique partielle d'un appareil automatique montrant l'organisation de sa structure modulaire et les principaux circuits de circulation et d'échanges fluidiques, en particulier pour l'une des sous-unités ;
la figure 4 est une représentation synoptique partielle montrant symboliquement les circuits connectés aux réacteurs et aux chambres de mélange secondaires (pour des raisons de compréhension et de simplification de la représentation un seul réacteur et une seule chambre de mélange secondaire sont représentés) ;
la figure 5 est une représentation schématique d'un module de synthèse faisant partie de l'appareil selon l'invention, montrant également les différentes entrées/sorties au niveau des bouchons supérieur et inférieur desdits réacteurs (pour des raisons de simplification de la représentation seul le réacteur R5 fait état de la totalité desdites entrées/sorties) ;
la figure 6 est une représentation schématique d'un contenant formant chambre de mélange secondaire, montrant notamment ses différentes entrées/sorties au niveau de ses bouchons supérieur et inférieur ;
la figure 7 est une représentation schématique d'un contenant formant chambre de mélange principale, montrant notamment ses différentes entrées/sorties au niveau de ses bouchons supérieur et inférieur ;
la figure 8 est une représentation schématique du système superviseur ramifié faisant partie de l'appareil automatique selon l'invention ;
la figure 9 est une représentation schématique d'un dispositif de régulation de température d'une sous-unité de l'appareil selon l'invention ;
la figure 10 est un schéma fluidique du circuit de distribution/répartition/mélange faisant partie de la sous-unité comportant un module de synthèse et la chambre de mélange principale ;
la figure 11 est un schéma fluidique du circuit de distribution des synthons et d'une partie au moins des réactifs de couplage de la sous-unité comportant un module de synthèse et la chambre de mélange principale :
la figure 12 est un schéma fluidique montrant le sous-cicrcuit d'alimentation en synthons combinatoires pour un module de synthèse et une chambre de mélange secondaire associée ;
la figure 13 est un schéma fluidique montrant le sous-circuit d'alimentation en synthons secondaires ou communs et en réactifs de couplage pour un module de synthèse et une chambre de mélange secondaire associée ;
la figure 14 est un schéma fluidique du circuit de distribution de solvants de lavage, de nettoyage et de rinçage de la sous-unité comportant un module de synthèse et la chambre de mélange principale ;
la figure 15 est un schéma fluidique partiel du circuit de distribution représentée sur la figure 13 lors d'une opération de lavage des réacteurs d'un module et de la chambre de mélange secondaire associée ;
la figure 16 est un schéma fluidique du circuit de distribution de réactifs de déprotection générale et d'un circuit secondaire de distribution de réactifs de couplage, pour la sous-unité comportant un module de synthèse et la chambre de mélange principale ;
la figure 17 est un schéma fluidique partiel du circuit de distribution de réactifs de déprotection générale alimentant un module de synthèse et la chambre de mélange secondaire associée ;
la figure 18 est un schéma fluidique du circuit de distribution de réactifs de déprotection TFA de la sous-unité renfermant un module de synthèse et la chambre de mélange principale, cette figure représentant également le circuit d'évacuation des déchets et de vidange de cette sous-unité ;
la figure 19 est un schéma fluidique partiel du circuit de distribution de réactifs de déprotection TFA alimentant un module et la chambre de mélange secondaire associée ;
la figure 20 est un schéma fluidique du circuit de détente et du circuit d'évacuation des déchets et de vidange des réacteurs et contenants de mélange secondaires faisant partie d'une sous-unité comportant deux modules de synthèse ;
la figure 21 est un schéma fluidique du circuit de distribution et d'injection de gaz propulseur, en l'occurrence du N2, alimentant l'ensemble des réservoirs, circuits, réacteurs et contenant de l'appareil selon l'invention, pour le transfert des fluides et, le cas échéant, le bullage ;
la figure 22 représente schématiquement la structure des lignes d'injection de résine associées à la sous-unité renferment un module de synthèse et le contenant formant chambre de mélange principale ;
la figure 23 est une vue de dessus d'un module de synthèse de cinq réacteurs et des unités de vannes de gestion des entrées/sorties au niveau des bouchons supérieurs desdites réacteurs, selon un mode de réalisation pratique et non limitatif de l'invention ;
les figures 24A et 24B sont des vues en élévation latérale et de dessus d'une unité de vannes multivoies de gestion des entrées/sorties d'un canal de communication (injection/évacuation) d'un réacteur ;
les figures 25A et 25B sont des vues en élévation latérale et de dessus d'une unité de vannes multivoies de sélection ou de distribution faisant partie de l'appareil selon l'invention ;
les figures 26A et 26B sont des vues en élévation latérale et de dessus d'un bloc distributeur radial faisant partie de l'appareil selon l'invention ;
les figures 27A et 27B sont des vues en élévation latérale et de dessus d'un diviseur équimolaire à quatre voies, ou d'un collecteur à quatre voies, ce en fonction de son montage, faisant partie de l'appareil selon l'invention ;
les figures 28A et 28B sont des vues en élévation latérale et de dessus d'un diviseur équimolaire à deux voies, ou d'un collecteur à deux voies, ce en fonction de son montage, faisant partie de l'appareil selon l'invention ;
la figure 29 est une vue en élévation latérale et partiellement par transparence d'une sous-unité courante d'un appareil de synthèse automatique selon un exemple de réalisation pratique de l'invention ;
la figure 30 est une vue en élévation frontale de la sous-unité représentée sur la figure 29, et,
la figure 31 est une vue en élévation latérale et par transparence, à une échelle différente, de l'étage supérieure de la sous-unité représentée sur la figure 29.

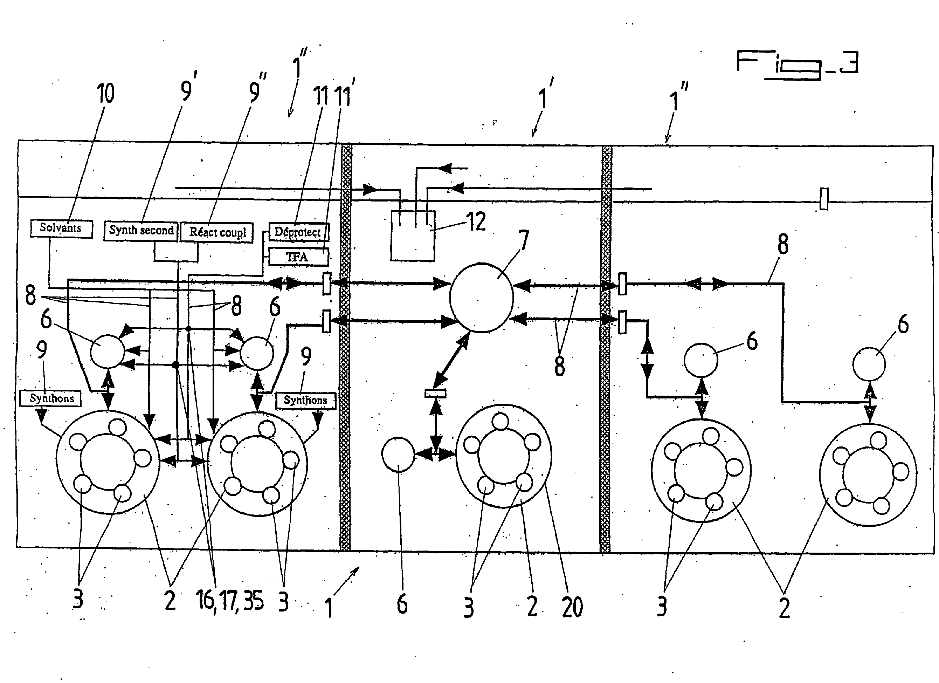

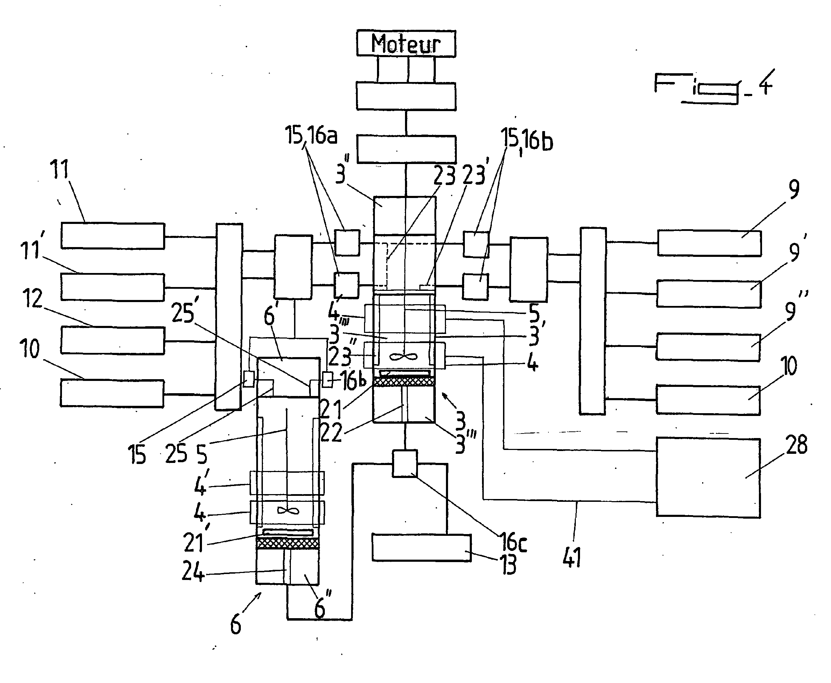

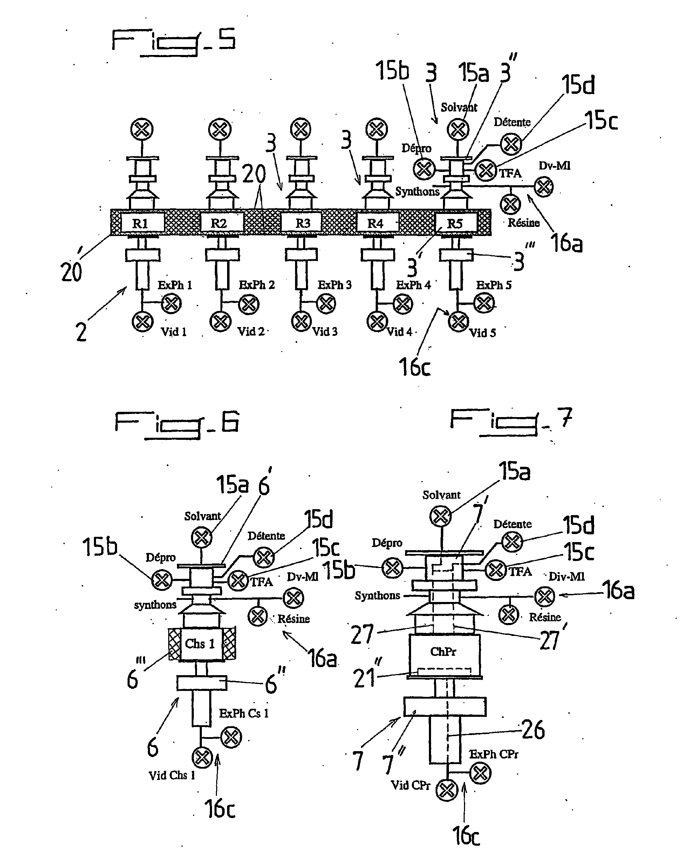

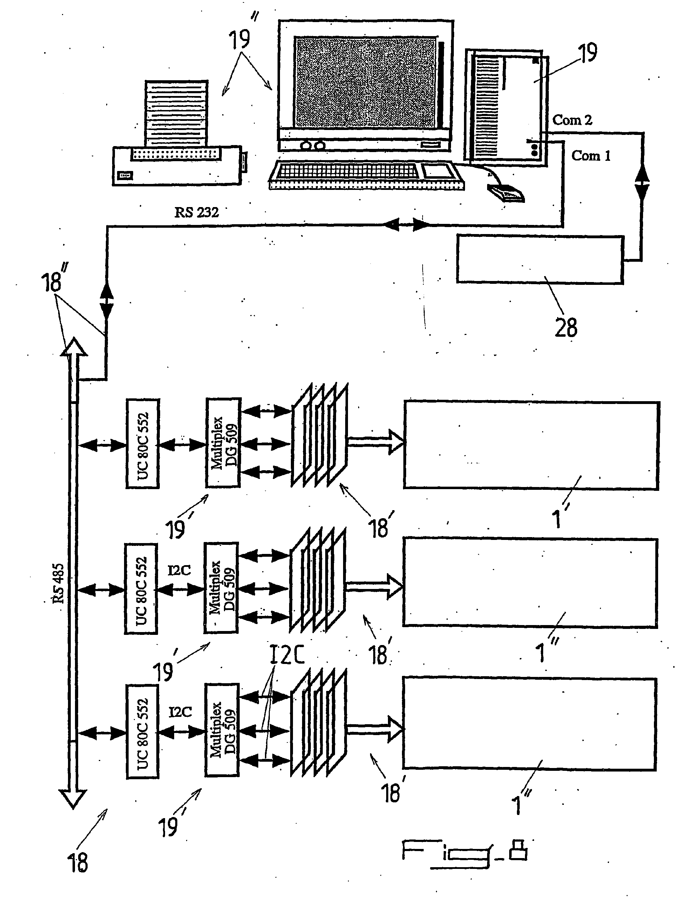

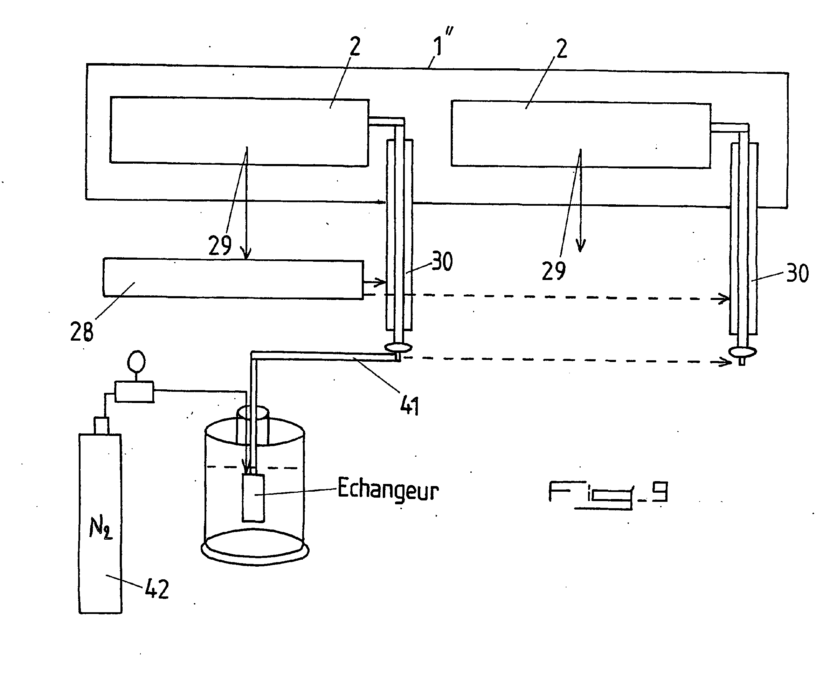

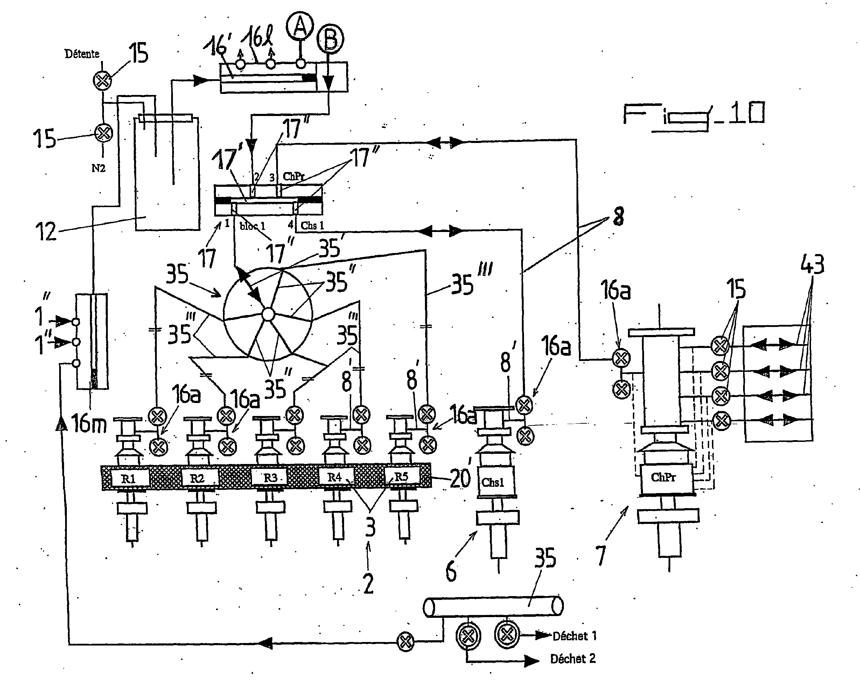

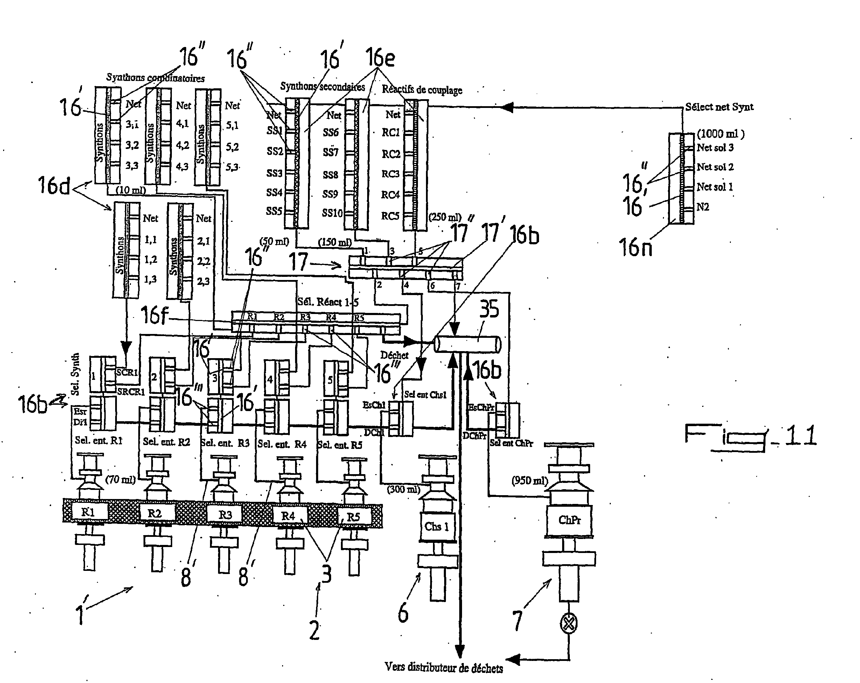

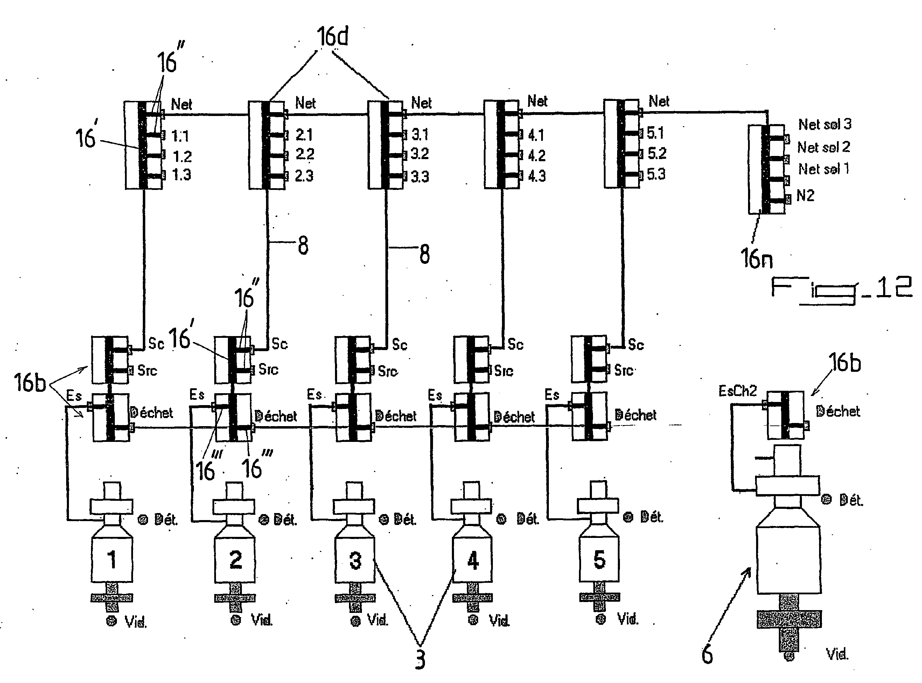

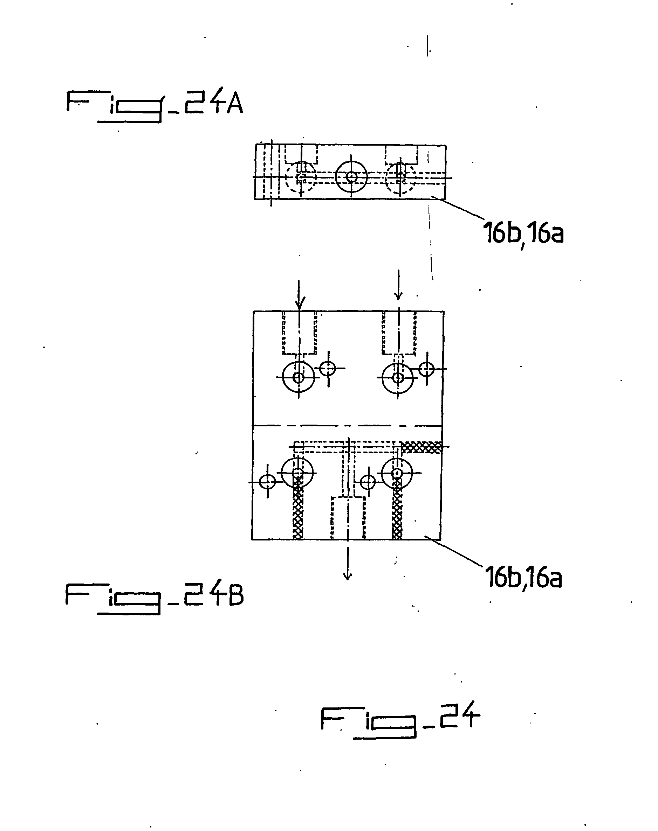

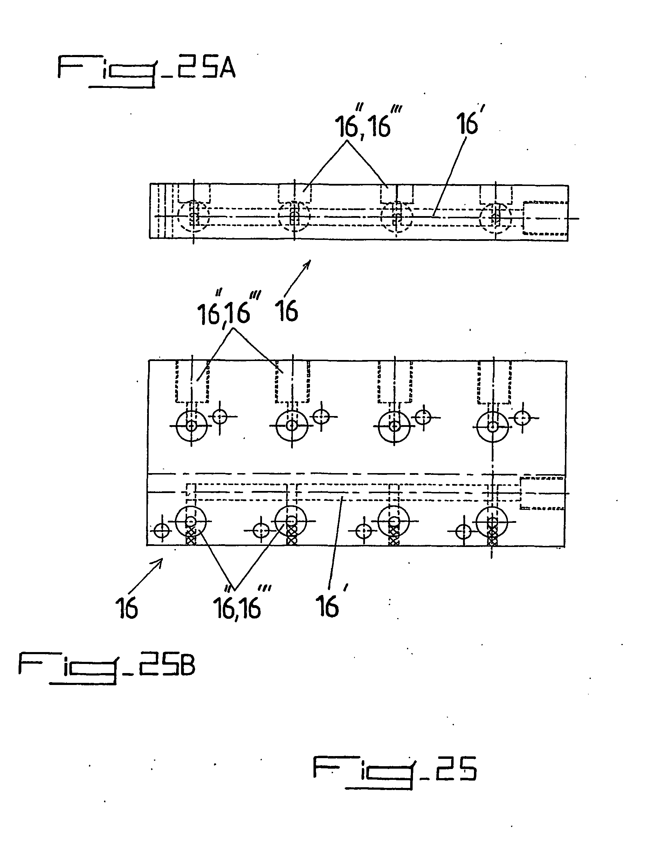

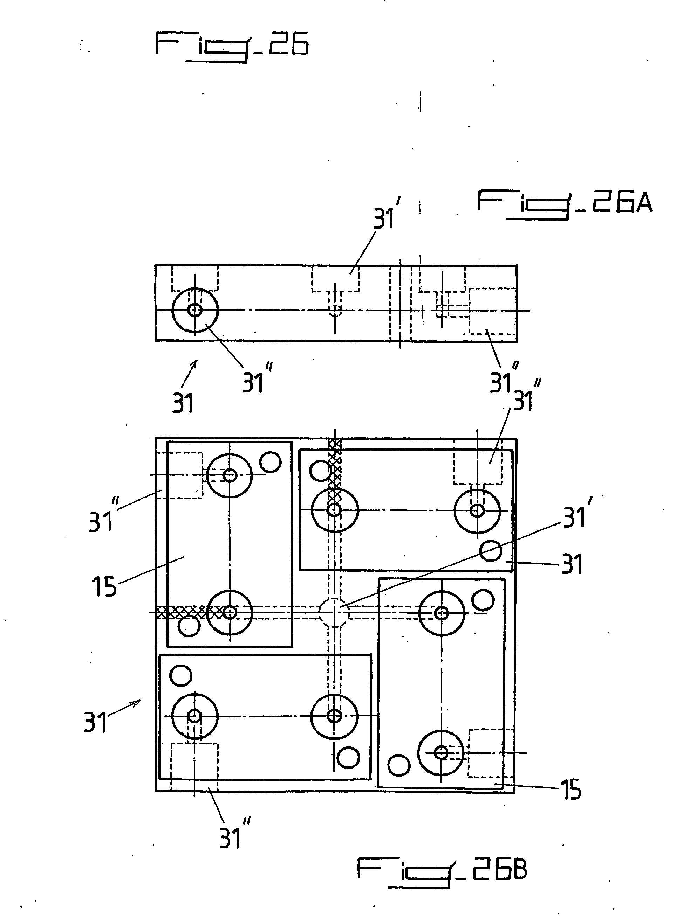

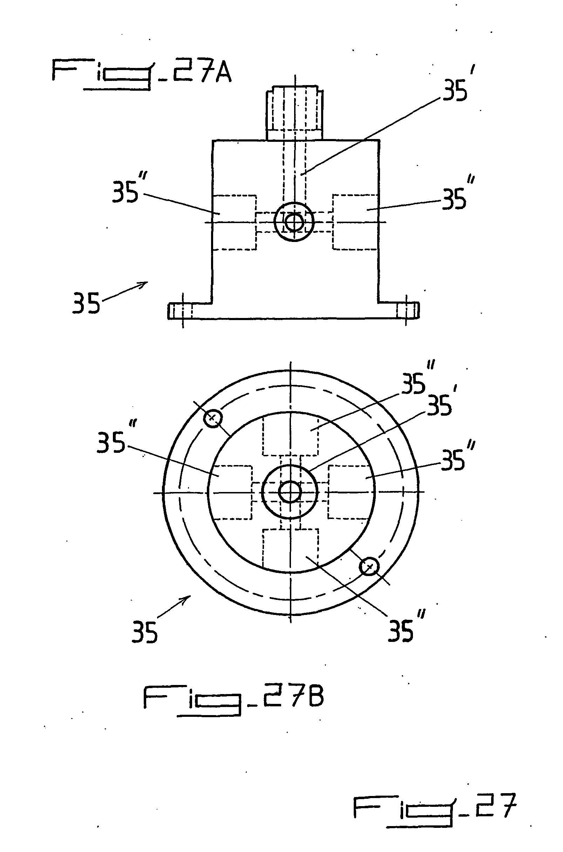

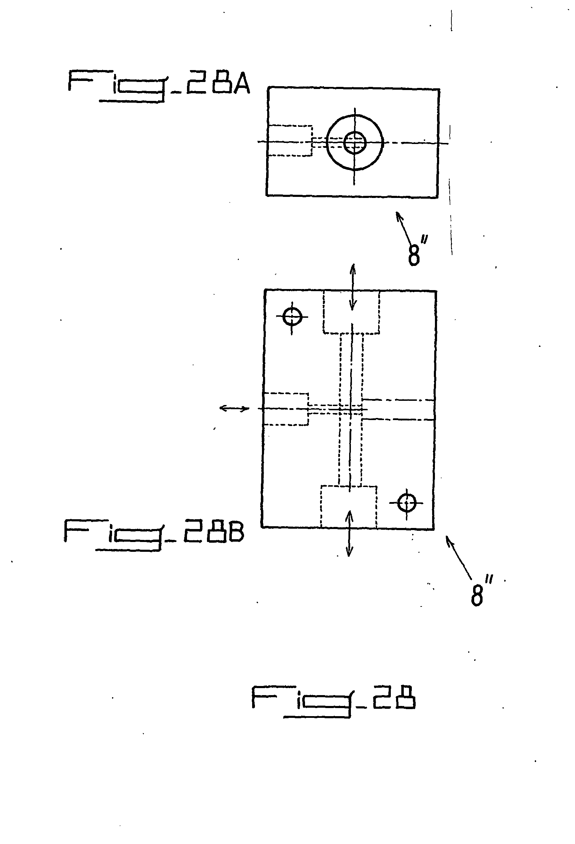

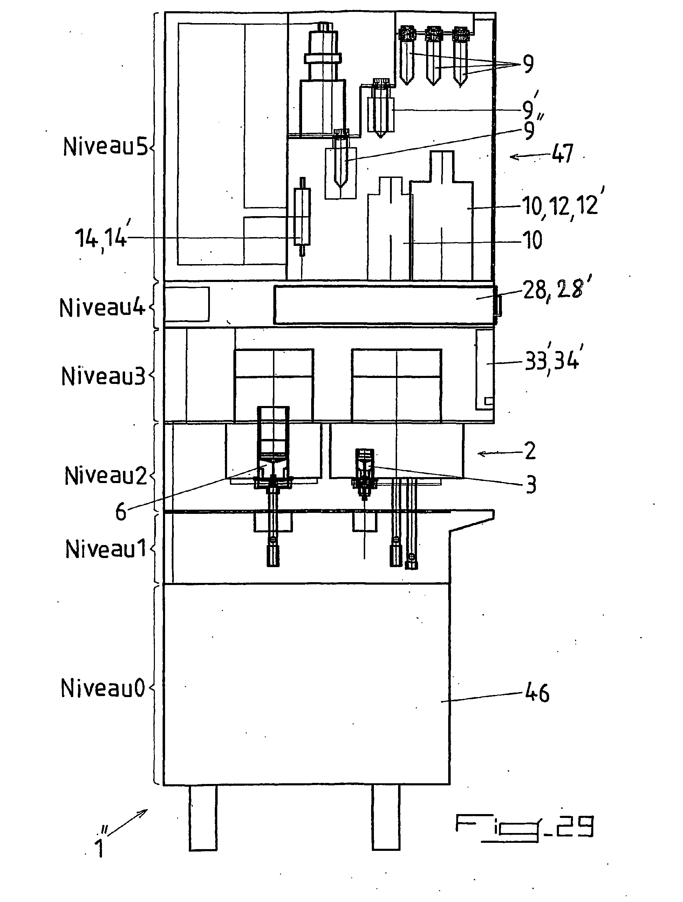

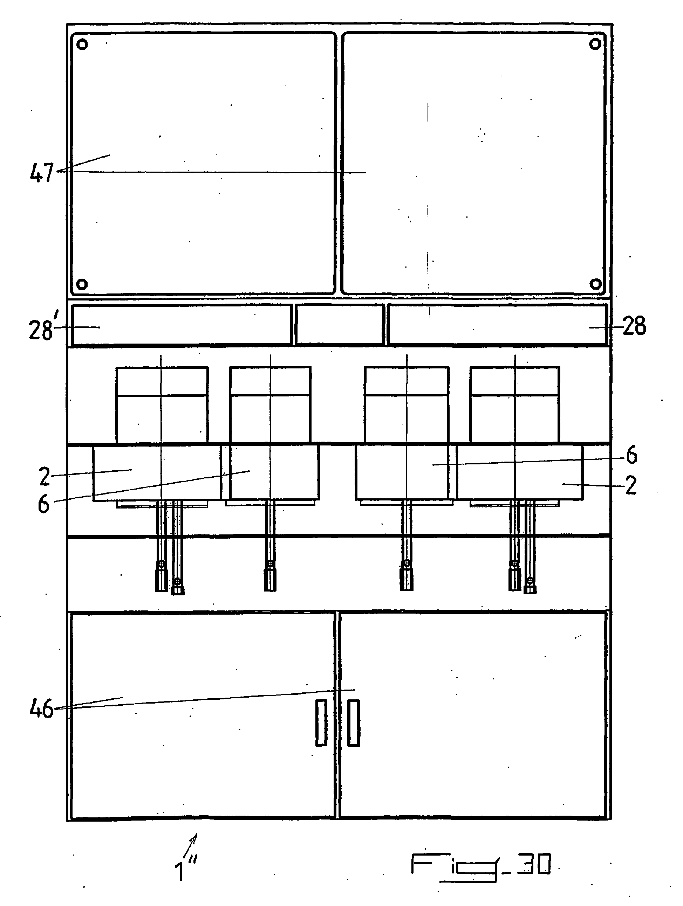

Les figures 3 à 28 illustrent chacune, sous forme plus ou moins schématique, une partie seulement ou un élément constitutif de l'appareil 1 automatique de synthèse de molécules de synthèse de molécules organiques et permettent, par association, de disposer d'une représentation complète de toutes les parties constitutives dudit appareil 1. En particulier les figures 10 à 20 ne représentent chacune qu'un circuit de circulation fluidique donné pour un module 2 ou une sous-unité 1', 1" de l'appareil 1, les autres modules ou sous-unités disposant d'un circuit similaire.

Cet appareil 1 est principalement constitué, d'une part, par plusieurs modules de synthèse 2 comportant chacun entre trois et dix, préférentiellement cinq, réacteurs 3 formés chacun d'un corps tubulaire 3' délimitant, en coopération avec un bouchon supérieur 3" d'injection et de détente et un bouchon inférieur 3"' amovible de soutirage contrôlé et de vidange, une chambre de réaction 3"" normalement fermée de manière étanche et contrôlée en température par des moyens de chauffage et de refroidissement 4 et pourvus d'un moyen d'agitation 5 du milieu réactionnel par bullage et/ou par l'intermédiaire d'un organe mécanique, un contenant 6 formant chambre de mélange secondaire et dont la contenance correspond au moins à la somme des contenances des réacteurs 3 d'un module 2, étant associé à chaque module 3 et un contenant 7 supplémentaire étant prévu, formant une chambre de mélange principale dont la contenance correspond au moins à la somme des contenances des différentes chambres de mélange secondaires 6, d'autre part, par au moins un circuit pour le transfert des contenus des réacteurs 3 vers le contenant 6 associé au module de synthèse 2 considéré et/ou vers le contenant 7 et la répartition contrôlée du contenu d'un ou des contenants 6 entre les réacteurs 3 du module 2 associé et/ou du contenu du contenant 7 entre les contenants 6 ou les réacteurs 3 d'un, de plusieurs ou de tous les modules 2 de l'appareil 1, ainsi qu'au moins un circuit d'alimentation ou d'évacuation relié notamment aux différentes entrées/sorties des réacteurs 3 et des contenants 6, 7, ces circuits permettant la circulation de fluide(s) sous l'action d'un gaz propulseur inerte ou neutre et étant formés de conduits ou portions de conduits 8 interconnectés entre eux et reliant lesdits réacteurs 3 et contenants 6, 7 entre eux et à des réservoirs 9, 10, 11, 12, 13 de solutions et à des lignes de détente, d'aspiration et d'injection de gaz propulseur ou de bullage, ces connexions étant établies temporairement au moyen de vannes monovoie 15 ou d'unités 16, 17 de vannes multivoies et monoblocs constituant des noeuds programmables de configuration desdits circuits ou des organes de commande et de gestion des entrées/sorties des réacteurs 3 et contenants 6, 7 et, enfin, par un système superviseur ramifié 18 de gestion et de contrôle de la circulation et de la distribution des fluides dans les circuits précités et de la température et de l'agitation dans les chambres 3"" des réacteurs 3, comprenant notamment une unité informatique 19 associée à des circuits électroniques 19' d'interface et de multiplexage notamment pour la commande des vannes et unités de vannes 15, 16, 17, des moyens de chauffage et de refroidissement 4, des chambres 3"" des réacteurs 3 et, le cas échéant, de l'entraînement des organes mécaniques d'agitation 5, et intégrant des interfaces 19" de dialogue avec et de programmation par l'utilisateur.

Les conduits 8 des différents circuits de circulation, dont les sections de passage sont adaptées aux débits à véhiculer, définissent, par conséquent, une pluralité de possibilités de connexions fluidiques, d'une part, des réacteurs 3 avec les contenants 6 et 7, d'autre part, des contenants 6 et 7 entre eux et, enfin, desdits réacteurs 3 et contenants 6 et 7 avec des réservoirs d'alimentation 9 à 12, et de récupération 13, le cas échéant par l'intermédiaire de doseurs volumétriques 14, 14'. Les vannes 15 ou unités de vannes 16, 17 constituent des moyens actifs de configuration et d'activation contrôlées des circuits de circulation ou de parties de ces derniers, en ouvrant ou en fermant des passages de liaison entre des conduits ou portions de conduits 8 attenant auxdites vannes ou unités de vannes et interconnectées par ces dernières, en autorisant ou non l'accès au volume interne d'un réacteur 3 ou d'un contenant 6 ou 7 et en autorisant ou non la mise sous pression de réservoirs, de réacteurs ou de contenant(s) par un gaz propulseur assurant l'injection et la circulation des substances présentes dans ces récipients, éventuellement en quantités contrôlées, dans des trajets de transfert définis préalablement par la mise en connexion des conduits 8 adéquats.

Dans le volume clos formé par les différents récipients fermés précités en liaison avec les différents circuits de circulation, le gaz propulseur inerte constitue en outre une atmosphère contrôlée pour le déroulement des différentes réactions.

Le niveau de liquide présent dans les doseurs volumétriques 14 et 14' est avantageusement déterminé par des dispositifs optoélectroniques correspondants connus dont les signaux de sortie sont transmis à l'unité informatique 19 pour évaluation, exploitation et éventuellement action consécutive.

Lesdits dispositifs optoélectroniques pourront, le cas échéant, délivrer un simple signal à deux états, correspondant au dépassement ou non d'un certain niveau prédéfini de liquide dans ces doseurs 14 et 14'.

Conformément à un mode de réalisation préféré de l'invention, représenté à la figure 3 des dessins annexés, ledit appareil présente une structure modulaire et est constitué d'au moins trois sous-unités 1', 1", à savoir une première sous-unité 1' comprenant un module 2 de cinq réacteurs 3, une chambre de mélange secondaire 6 et la chambre de mélange principale 7 et au moins deux autres sous-unités 1" de constitutions identiques comprenant chacune deux modules 2 de cinq réacteurs 3 et leurs chambres de mélange secondaires 6 associées respectives, chaque sous-unité 1', 1" comportant ses propres circuits de circulation de fluides, reliant ses réacteurs 3 et contenants 6, 7 entre eux, aux réservoirs 9 à 13 et à des doseurs volumétriques 14, 14' associés, les réacteurs 3 et les chambres de mélange secondaires 6 des deux sous-unités 1" de même constitution étant toutefois reliés, de manière fluidique, au moins à la chambre de mélange principale 7 faisant partie de la première sous-unité 1'.

L'homme du métier comprendra qu'il est très aisé, sans modification constitutive majeure de la structure décrite précédemment, d'ajouter des sous-unités 1" modulaires supplémentaires pour augmenter les capacités de l'appareil 1.

Ce dernier permet, comme il ressort de la description ci-dessus, des mélanges à deux niveaux différents, à savoir, au niveau d'un module de synthèse 2 en relation avec le contenant 6 associé à ce dernier, mais aussi au niveau de tous les modules de synthèse 2, et/ou des différents contenants 6, c'est-à-dire au niveau de l'appareil 1, en relation avec le contenant 7, dont la capacité interne sera bien entendu adaptée à la somme des capacités des réacteurs des différents modules.

Comme le montre la figure 8 des dessins annexés, il est avantageusement prévu qu'à chaque sous-unité 1', 1" est associée une branche 18' de commande, de contrôle et de mesure du système superviseur 18, ces différentes branches 18' étant toutes connectées à un bus série 18" relié à l'unité informatique 19 contrôlant en particulier le déroulement des différentes phases opératoires et dont les voies de transmissions sont multiplexées vers les organes et moyens à commander et les capteurs et moyens de mesure des différentes sous-unités 1', 1" pour déboucher sur des ports de sortie ou d'entrée des circuits d'interface 19', ces ports étant arrangés et regroupés dans les branches 18' à l'image et en fonction de l'arrangement et du regroupement physiques ou fonctionnels desdits organes et moyens à commander et desdits capteurs et moyens de mesure.

Une extension de la machine 1 par rajout d'une sous-unité 1" supplémentaire se traduira par conséquent par le simple rajout d'une branche 18' supplémentaire correspondante au niveau du système superviseur 18.

Les interfaces 19" pourront, par exemple, comme le montre aussi la figure 8 des dessins annexés, comprendre un écran, un clavier et une imprimante.

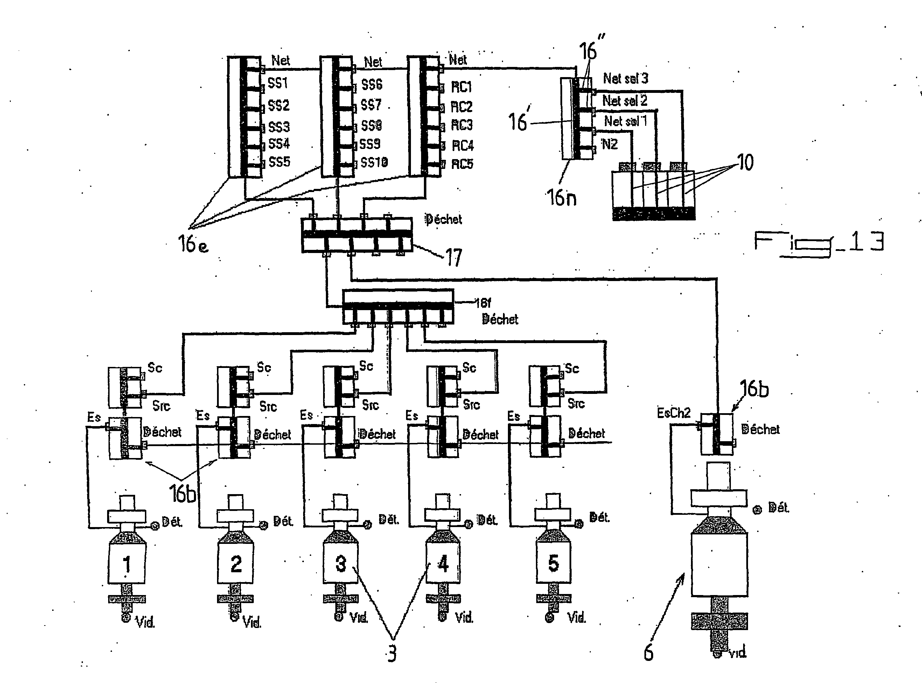

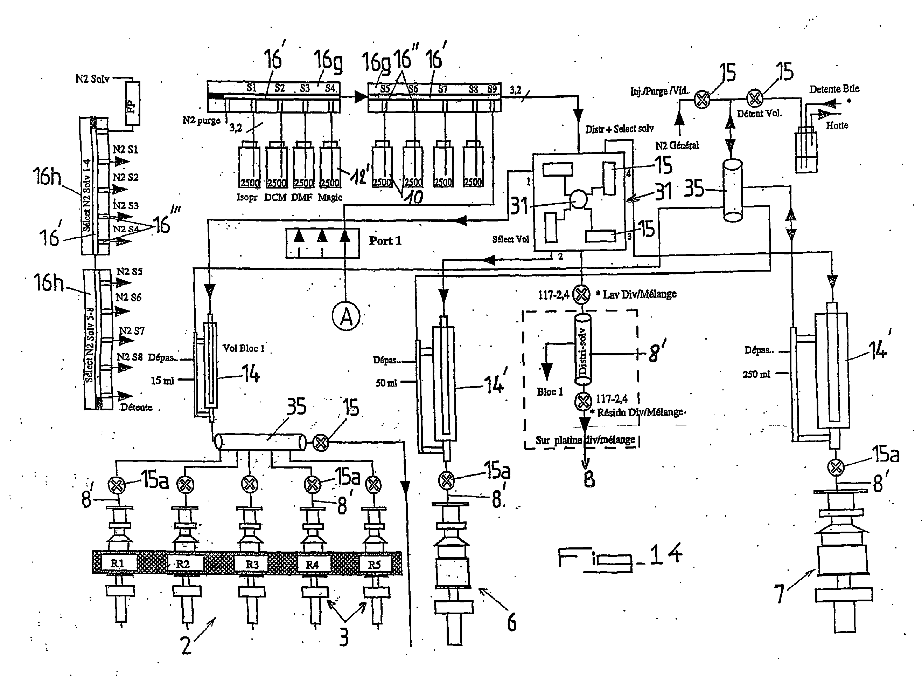

L'écran permettra notamment de visualiser en temps réel les opérations en cours en reproduisant, par exemple, le circuit sollicité et la circulation des fluides dans ce circuit (voir figures 12, 13, 15, 17, 19).

Selon une caractéristique de l'invention, représentée notamment aux figures 3, 5 et 23 des dessins annexés, les réacteurs 3 de chaque module 4 sont arrangés entre eux, de manière équidistante et équiangulaire, selon une configuration circulaire et montés dans une structure support 20 portant notamment également les vannes et les unités de vannes multivoies 15, 16a, 16b contrôlant l'accès aux chambres 3"" des réacteurs 3 pour l'injection de substances et l'extraction ou l'évacuation de gaz ou de substances à récupérer ou à éliminer, ainsi qu'éventuellement les vannes ou l'unité de vannes multivoies 15, 16c contrôlant l'accès auxdites chambres 3"" pour la vidange et le soutirage par phases.

Conformément à une autre caractéristique de l'invention, il est avantageusement prévu que, pour chaque réacteur 3, le bouchon inférieur 3"' amovible assure le maintien étanche d'un filtre de rétention 21 de la résine servant de support de synthèse et comporte un passage 22 pour la vidange contrôlée des liquides contenus dans ledit réacteur 3 et éventuellement l'injection de gaz de bullage et en ce que le bouchon supérieur 3" comporte un ou plusieurs canaux 23 d'injection de substances nécessaires à la synthèse et de divers solvants et au moins un canal 23' de détente et d'évacuation des gaz générés dans le réacteur 3 concerné, chacun desdits canaux 23, 23' étant connecté, au niveau de son ouverture extérieure, par un raccord de branchement 8' adapté, à une ouverture correspondante d'un canal ou d'une portion de canal de sortie 16", 17" ou d'entrée 16', 17' d'au moins une vanne 15 ou unité de vannes multivoies 16a, 16b de gestion des entrées/sorties au niveau d'un bouchon supérieur 3" et affecté au réacteur 3 concerné.

En plus, des canaux de communication des bouchons inférieur et supérieur, chaque réacteur 3 pourra, en outre, être pourvu d'un ou de plusieurs conduits verticaux 23" débouchant dans le volume interne formant chambre de réaction 3"" légèrement au dessus du filtre 21 formant moyen de rétention du support de synthèse, par exemple sous forme de particules de résine.

Afin de pouvoir assurer un contrôle en température précis et des conditions thermiques identiques pour les différents réacteurs 3 d'un même module 2, permettant une simplification des moyens de régulation en température et la mesure de cette dernière dans un unique réacteur 3 par module 2, les réacteurs 3 de chaque module 2 sont isolés thermiquement entre eux et par rapport au milieu extérieur, les réacteurs 3 d'un même module 2 étant par exemple montés dans une structure isolante 20' entourant et isolant chacun d'eux.

Préférentiellement, chaque réacteur 3 est pourvu d'un moyen 4 de chauffage et de refroidissement de la partie inférieure de sa chambre 3"" recevant le milieu réactionnel et d'un moyen de condensation 4' de la partie supérieure de sa chambre 3"" pour condenser les vapeurs générées lors du chauffage du milieu réactionnel, lesdits moyens 4, 4' de chauffage/refroidissement et de condensation, sous la forme de serpentins entourant chaque réacteur 3, montés au niveau de la partie de la chambre 3"" du réacteur 3 à réguler en température et agissant à travers la matière de la paroi du réacteur 3 considéré, et la structure isolante 20' laissant les bouchons supérieur 3" et inférieur 3"' dégagés et accessibles, de manière à pouvoir réaliser une maintenance ou un remplacement aisé(e) de ces derniers.

Les réacteurs 3 et les modules 2 correspondent avantageusement, en ce qui concerne leur structure, leur constitution et leurs accessoires, aux réacteurs et au module décrit et représenté dans la demande de brevet français n° 00 03478, qui est citée à ce titre dans la présente demande.

De même, chaque contenant de mélange secondaire 6 et le contenant de mélange principal 7 présentent des corps de forme tubulaire fermés par un bouchon supérieur 6', 7' comportant un ou plusieurs canaux 25, 27 d'injection de substances nécessaires à la synthèse et de solvants et au moins un canal 25', 27' de détente et d'évacuation des gaz, et auquel sont affectées des vannes 15 et des unités 16a, 16b de vannes multivoies de gestion des entrées/sorties, et par un bouchon inférieur 6", 7" amovible de vidange, pourvu d'un passage d'évacuation 24, 26 dont la sortie est contrôlée par une unité de vannes multivoies 16c et maintenant de manière étanche un filtre de rétention 21', 21" de support de synthèse, lesdits contenants 6 et 7 étant en outre munis d'un organe mécanique d'agitation 5.

Afin de pouvoir également réaliser des réactions de chimie organique dans les contenants 6, après mélange des contenus des réacteurs 3 du module 2 associé, chaque contenant 6 formant chambre de mélange secondaire peut en outre être contrôlé en température, au niveau de sa chambre interne, en étant pourvu d'une isolation thermique 6"' et d'un moyen 4 pour le chauffage et le refroidissement au moins du volume destiné à contenir le milieu réactionnel, associé à un moyen 4' de refroidissement pour la condensation des vapeurs générées lors du chauffage dudit milieu réactionnel.

Une telle disposition permet également, lorsque l'appareil 1 est mis en oeuvre avec des protocoles de synthèse parallèle, de produire les mêmes produits de synthèse dans lesdits contenants 6 que ceux pouvant être fabriqués dans les réacteurs 3, ce qui augmente considérablement le volume de production total de la machine 1.

Lesdits contenants 6 et 7 pourront donc présenter une structure et une constitution identiques, à part la taille, à celles des réacteurs 3 précités.

Toutefois, le contenant 7 formant chambre de mélange principale pourra également avoir une structure et une constitution similaire à celle des réacteurs décrits et représentés dans le document FR-A-2 664 602. Une telle variante de réalisation est également possible pour les contenants 6 formant chambres de mélange secondaires lorsqu'aucun contrôle en température n'est souhaité pour ces contenants 6.

Les vannes 15 et unités de vannes multivoies 16, 17 réalisant les interconnexions programmables entre les portions de conduits 8 formant les différents circuits de circulation de fluides liquide ou gazeux correspondent, conformément à un mode de réalisation préféré de l'invention, en termes de structure, de constitution et de mode d'actionnement aux vannes et aux dispositifs de distribution multivoies décrits et représentés dans le document FR-A-2 664 671 dont le contenu est incorporé en totalité à la présente demande.

Selon les fonctions qui leur sont attribuées, les unités de vannes 16, 17 présenteront des structures différentes qui peuvent toutefois être sensiblement classées dans deux catégories différentes.

Ainsi, comme le montrent par exemple les figures 10 à 16 et 25 des dessins annexés, les unités de vannes multivoies 16 d'un premier type comprennent chacune un canal principal commun 16' d'alimentation ou d'entrée, respectivement collecteur ou de sortie, pouvant être mis en communication fluidique, individuellement ou de manière groupée, avec une pluralité de canaux secondaires de sortie 16"', respectivement d'entrée 16", distincts lors de l'actionnement d'un ou de plusieurs organes correspondants d'ouverture de passage ou de levée de l'obturation, commandés par l'unité informatique 19 du système superviseur 18, ledit canal principal commun 16' pouvant, le cas échéant, être obturé au niveau de son ou de ses ouvertures d'extrémité par un ou des organes similaires pour autoriser l'établissement d'un passage communiquant transversal entre au moins deux canaux secondaires 16", 16"', les volumes de liquide transférés lors de l'ouverture des passages de communication étant contrôlés par l'unité informatique 19 sur la base du temps d'ouverture et de la pression de gaz propulseur, par exemple de l'azote, appliquée aux réservoirs 9 à 13, aux doseurs volumétriques 14, 14', aux réacteurs 3, aux chambres secondaires 6 et/ou à la chambre principale 7.

Dans la présente description, les unités de vannes multivoies 16 présentant la structure générale décrite ci-dessus sont utilisées pour des fonctions différentes, chacune de ces utilisations donnant lieu à des déclinaisons sous forme d'indices a à n.

Des unités de vannes multivoies 17 d'un second type, représentées notamment aux figures 10, 11 et 13 des dessins annexés, comportent un canal principal commun 17' non débouchant sur l'extérieur, reliant entre eux une pluralité de canaux secondaires 17" débouchants, dont certains constituent des canaux d'entrée et dont les autres constituent des canaux de sortie, de manière à former un sélecteur permettant de relier un ou plusieurs canaux d'entrée 17" à un ou plusieurs canaux de sortie 17", en fonction de l'actionnement ou du non actionnement d'un ou de plusieurs organes d'ouverture de passage ou de levée d'obturation contrôlant chacun le passage entre un canal secondaire 17" et le canal principal commun 17.

En plus des deux types d'unités de vannes précitées, l'appareil 1 comporte également, comme le montrent notamment les figures 5 à 7, 10 à 13, 23 et 24 des dessins annexés, des unités de vannes multivoies 16a, 16b et 16c de gestion des entrées/sorties au niveau des réacteurs 3 et des contenants 6 et 7. Ces unités de vannes présentent deux canaux secondaires d'entrée/sortie reliés par un canal principal à un canal primaire d'entrée/sortie, lui-même connecté au conduit, au canal ou au passage d'entrée/sortie du réacteur 3 ou du contenant 6, 7 concerné.

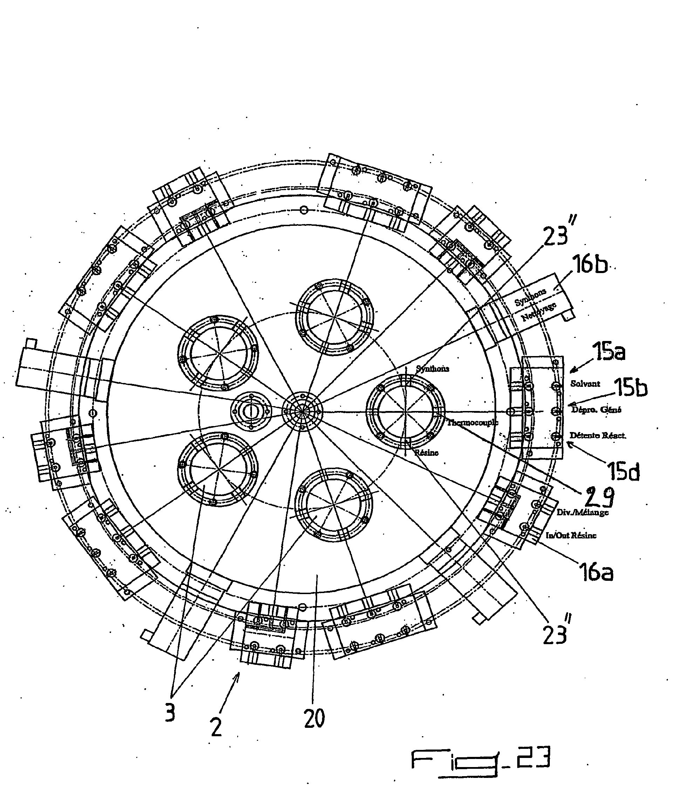

Les vannes monovoie 15 peuvent, quant à elles, être réalisées sous forme de vannes indépendantes, ou être regroupées dans des blocs de vannes renfermant plusieurs vannes 15 montées en parallèles (voir figure 23).

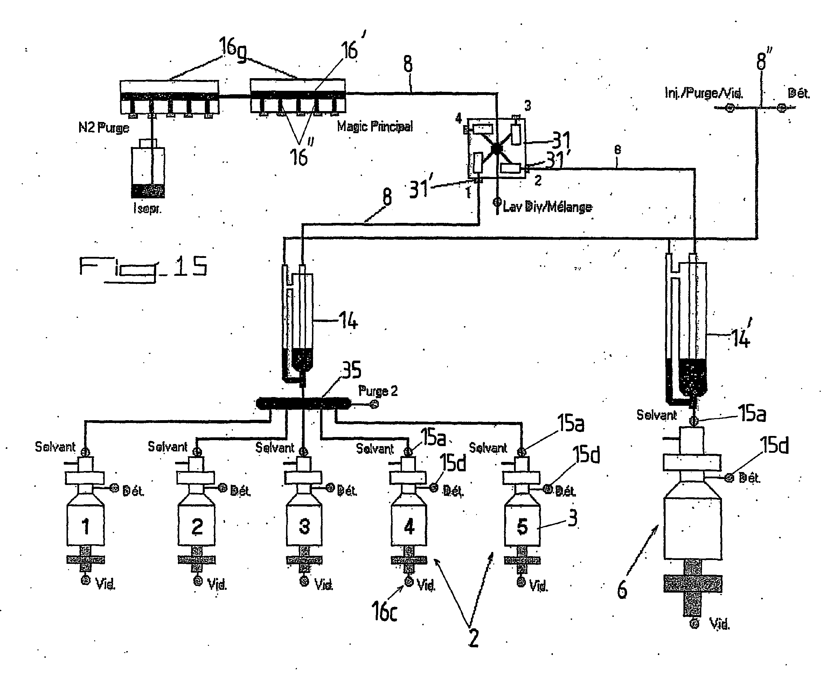

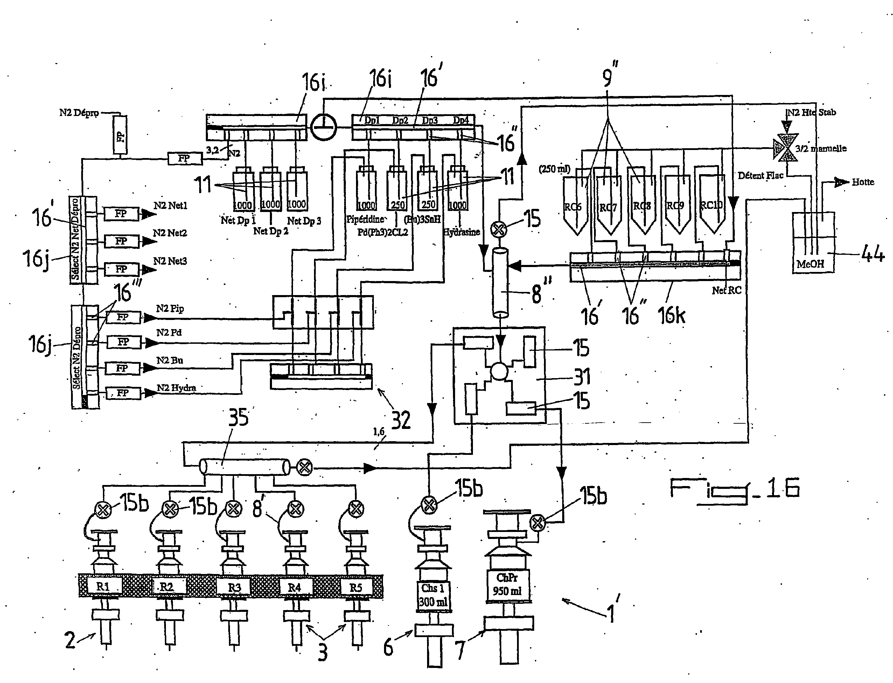

Les vannes 15 peuvent également être regroupées dans un bloc de distribution radiale 31, en étant alimentées de manière commune (voir figures 14 et 26).

Un tel bloc 31 peut, par exemple, correspondre à celui décrit et représenté dans le document DE-A-200.09.234.0 de la société BÜRKERT.

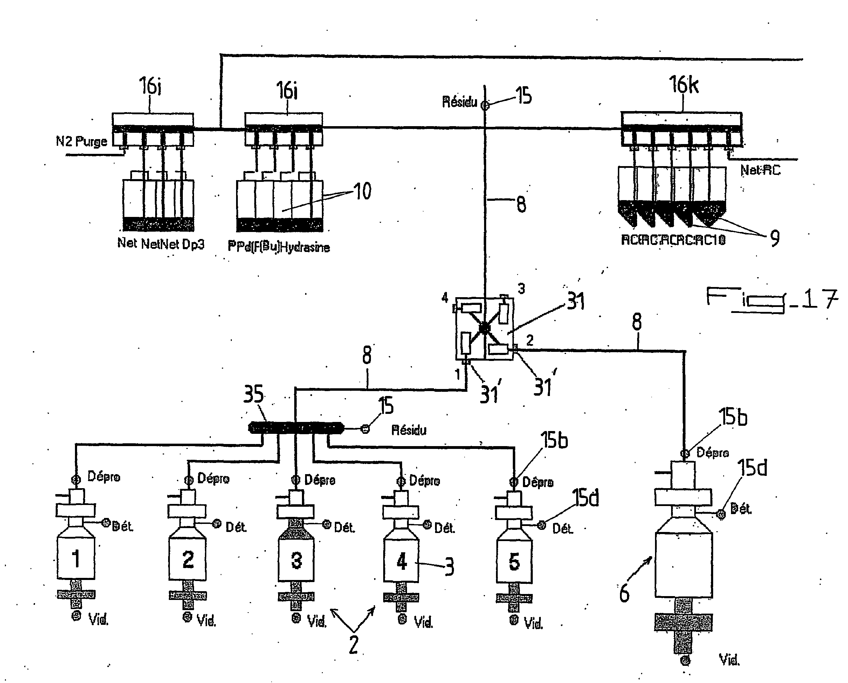

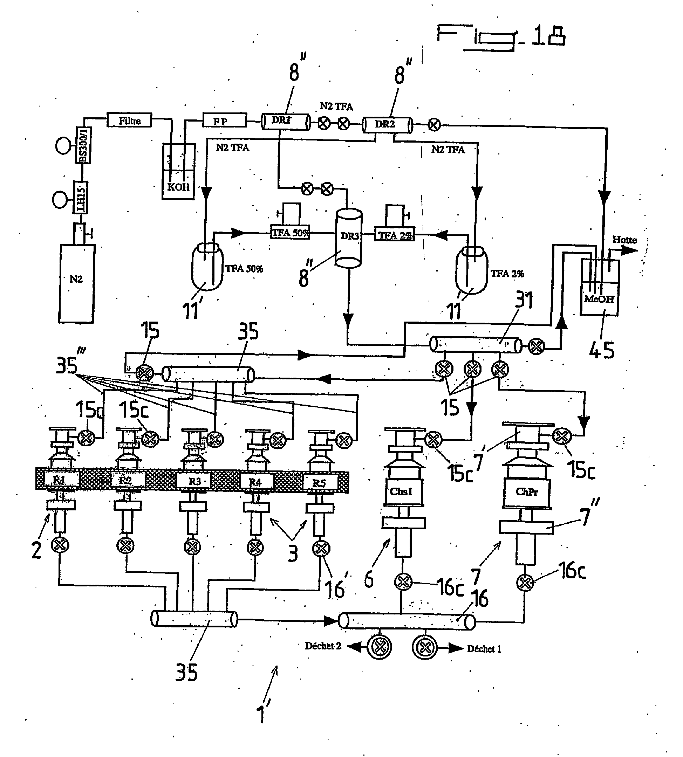

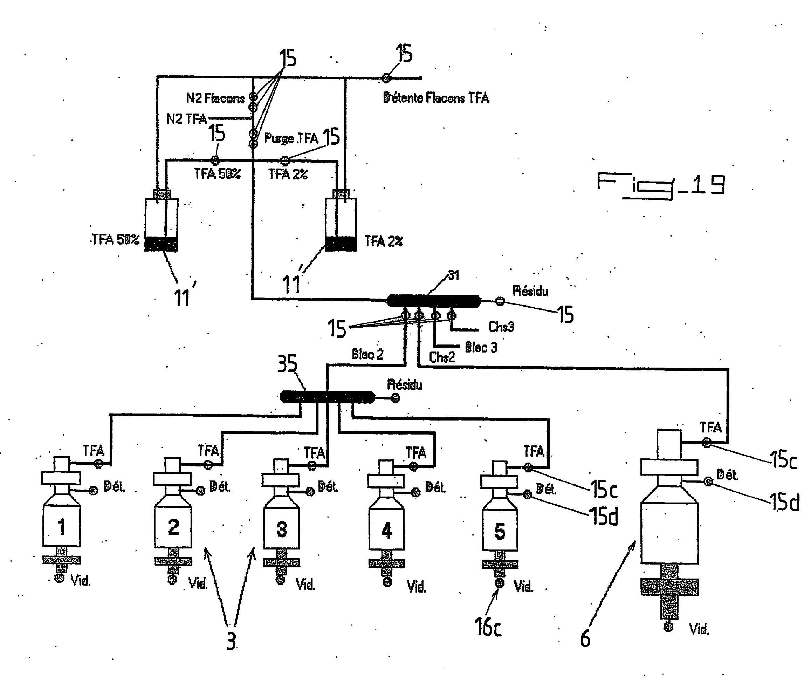

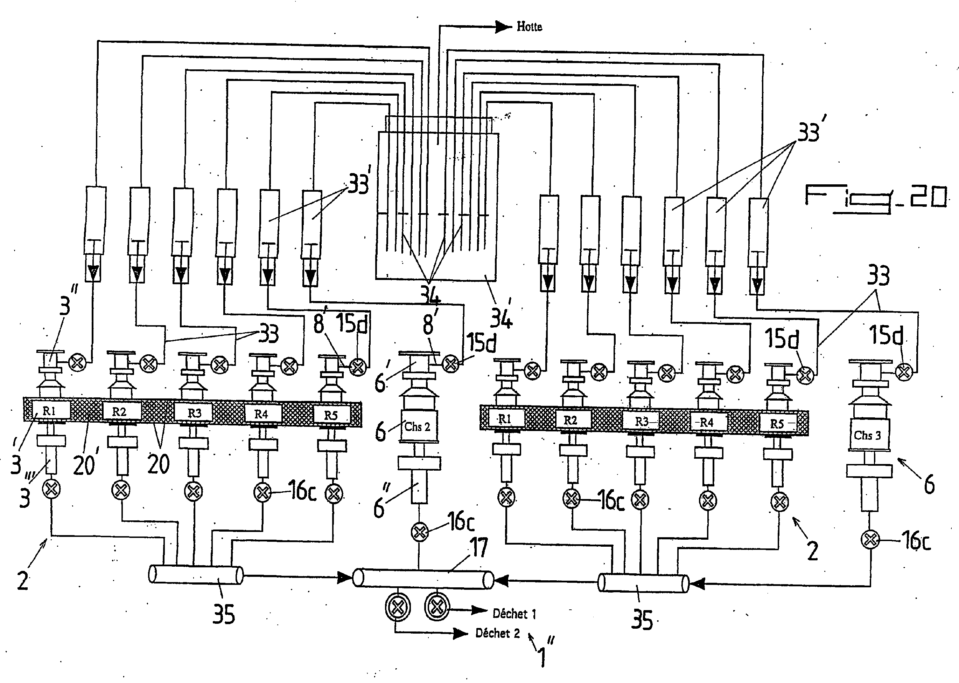

Enfin, certaines parties ou certains embranchements des circuits de circulation sont également définis par des noeuds de connexion multivoies passifs sous forme de diviseurs équimolaires à une voie d'entrée et à quatre voies de sortie 35 (voir figures 10 et 27) ou à deux voies de sortie 8" (voir figures 16 et 18). En inversant les branchements desdits diviseurs 35 et 8", il est possible de réaliser des collecteurs rassemblant plusieurs flux parallèles en un flux unique, à l'inverse des diviseurs.

Lesdits diviseurs/collecteurs 35 et 8" peuvent, le cas échéant, comporter une sortie supplémentaire de vidange ou d'évacuation des résidus, par exemple à l'opposé de la voie d'entrée.

De plus, la ou les sortie(s) ou entrée(s) desdits diviseurs ou collecteurs peuvent, le cas échéant, être contrôlée(s) par des vannes monovoie (15), lorsqu'aucun contrôle postérieur du ou des flux n'est prévu.

Sur les figures 5 à 7, 10, 11, 14, 16, 18 et 20 des dessins annexés, les vannes monovoie 15 ou les vannes individuelles des unités de vannes multivoies 16a, 16b et 16c de gestion des entrées/sorties sont représentées sous la forme d'un symbole constitué par un cercle renfermant une croix ou un signe de multiplication.

Comme le montre la figure 10 à titre d'exemple pour la sous-unité 1', l'appareil 1 comporte pour chaque module 2 un circuit de transfert/répartition/mélange, ce dernier étant principalement constitué par une unité de vanne multivoies formant un sélecteur 17 dont trois canaux secondaires 17" sont respectivement reliés, d'une part, à au moins un réservoir de solution de transfert 12, d'autre part, audit contenant 6 formant chambre de mélange secondaire pour ledit module 2 et, enfin, au contenant 7 formant chambre de mélange principale, à travers une unité de vannes multivoies 16a de gestion des entrées/sorties, au niveau des ouvertures extérieures de conduits verticaux ou de passages radiaux débouchant dans le volume intérieur desdits contenants 6 et 7 légèrement au-dessus du filtre de rétention 21', 21" délimitant le fond de la partie fonctionnelle desdits contenants 6, 7, et dont un quatrième canal secondaire 17', 17" est relié à l'entrée du canal commun 35' d'un diviseur de flux équimolaire 35 dont les sorties des canaux de distribution 35" sont reliées, par l'intermédiaire des portions 35'" de conduits présentant des longueurs identiques et à travers des unités de vannes 16a de gestion des entrées/sorties, aux différents réacteurs 3 du module 2 considéré(e), au niveau des ouvertures extérieures de conduits débouchant dans les parties des volumes intérieurs formant chambres de réaction 3"' desdits réacteurs 3 destinées à contenir les milieux réactionnels, préférentiellement légèrement au-dessus des filtres de rétention 21 délimitant les fonds desdites parties de volumes.

Le contenant 7 est relié par une pluralité de lignes 43 de transfert aux modules 2 des sous-unités 1 ". Ces lignes 43 intègrent chacune une vanne 15 contrôlant la circulation dans la ligne 43 correspondante et peuvent être reliées au contenant 7 au niveau de conduits verticaux ou de passages radiaux (en traits interrompus sur la figure 10).

La figure 10 montre également une partie d'un circuit d'alimentation et de recyclage de la solution de transfert, s'étendant à tout l'appareil 1. Ce circuit est articulé autour du réservoir principal de solution de transfert 12, pouvant être mis sous pression de gaz propulseur ou sous détente par actionnement de vannes 15 adaptées, et comprend une première unité de vannes 161 de contrôle de la distribution de solution de transfert aux différentes sous-unités 1', 1" et une seconde unité de vannes multivoies 16m de contrôle de la collecte de la solution de transfert à partir des différentes sous-unités 1', 1", par l'intermédiaire de collecteurs 35 reliés aux sorties des voies de vidange des unités de vannes 16c de gestion des entrées/sorties des bouchons inférieurs 3"', 6" et 7" des réacteurs 3 et contenants 6 et 7.

On notera que les flux des sorties de l'unité de vannes multivoies 161 ne sont pas directement acheminés vers le canal secondaire d'entrée 17" des sélecteurs 17 concernés des différents modules 2, mais transitent par une portion d'un circuit de distribution de solvants, ce afin de permettre un nettoyage du circuit de transfert/répartition/mélange par ces solvants.

Comme le montrent les figures 11 à 22 des dessins annexés, ledit appareil 1 comprend en outre, pour chaque module 2 ou chaque sous-unité 1', 1 ", d'une part, un circuit d'alimentation en et de distribution des synthons combinatoires et secondaires et des réactifs de couplage, et des segments parallèles de circuits d'injection de résine débouchant directement dans le volume intérieur respectivement des chambres 3"" de réacteurs 3, des chambres de mélange secondaires 6 et de la chambre de mélange principale 7, d'autre part, un circuit d'alimentation en et de distribution de solvants de rinçage, de lavage et de nettoyage, un circuit d'alimentation en et de distribution de solvants de déprotection générale, un circuit d'alimentation en et de distribution de réactifs de déprotection TFA et un circuit de détente des différentes chambres 3"", 6 et 7, reliés à des sites de branchement de canaux d'injection 23, 25, 27 ou d'évacuation 23', 25', 27' ménagés dans le bouchon supérieur 3", 6', 7' respectivement des réacteurs 3, des contenants formant chambres de mélange secondaires 6 et du contenant formant chambre de mélange principal 7 et, enfin, un circuit de soutirage contrôlé de phases liquides présentes dans lesdites chambres et un circuit de vidange et d'évacuation des déchets, reliés à des sites de branchement formés en sortie des passages 22, 24, 26 ménagés dans les bouchons inférieurs des réacteurs 3, des contenants de mélanges secondaires 6 et du contenant de mélange principal 7.

Selon une caractéristique de l'invention, représentée plus particulièrement sur les figures 11 à 13 des dessins annexés, un circuit de distribution des synthons et des réactifs de couplage est associé à chaque sous-unité 1', 1" dudit appareil 1, ce circuit étant éventuellement constitué de deux sous-circuits d'alimentation distincts, à savoir, d'une part, un sous-circuit d'alimentation en synthons combinatoires comprenant une unité 16d de vannes multivoies de sélection de synthons pour chaque réacteur 3 d'un module de synthèse 2, dont la sortie du canal principal commun 16' est reliée à une première, d'une paire montée en cascade, d'unités 16b de vannes multivoies de gestion des entrées/sorties d'un passage ou conduit débouchant dans le volume intérieur du réacteur 3 correspondant, préférentiellement au-dessus d'un filtre de rétention 21 du support de synthèse solide et, d'autre part, un sous-circuit d'alimentation en synthons secondaires et en réactifs de couplage comprenant des unités 16e de vannes multivoies de sélection de synthons et de réactifs, montés en parallèle, dont les sorties des canaux principaux 16' sont reliés aux canaux d'entrée d'un sélecteur 17, les canaux de sortie 17"' de ce dernier étant reliés aux canaux d'entrée 16" correspondants desdites premières unités 16b de vannes multivoies de gestion des entrées/sorties au niveau des réacteurs 3 ou à des canaux d'entrée 16" d'unités de vannes multivoies 16b de gestion des entrées/sorties au niveau de passages ou de conduits débouchant dans les volumes intérieurs des contenants 6, 7 concernés d'un module 2 ou de la sous-unité 1 considéré, le cas échéant par l'intermédiaire d'une unité de vannes multivoies de distribution multiplexée 16f pour la sélection des réacteurs 3 du module 2 concerné, les unités de vannes multivoies de sélection 16d et 16e comportant chacune en outre un canal d'entrée 16" pour l'injection de solvant(s) de lavage et de nettoyage, relié au canal principal 16' correspondant au niveau de son extrémité opposée à sa sortie, et les unités de vannes multivoies de gestion 16b, de sélection 16f et formant sélecteur 17 comportant chacune un canal de sortie 16"' pour l'évacuation des déchets vers des réservoirs 13 de vidange et de récupération par l'intermédiaire d'un collecteur 35, ledit canal de sortie 16"' étant relié au canal principal 16' correspondant de l'unité de vannes 16b, 16f, 17 considérée au niveau ou à proximité de l'une de ses extrémités.

Au circuit de distribution des synthons et des réactifs de couplage décrit ci-dessus est associé, comme le montre également la figure 11, un circuit secondaire de sélection et d'injection de solvants de lavage et de nettoyage comprenant une unité de vanne multivoies 16n permettant l'injection de différents liquides de lavage et de nettoyage et de gaz propulseur (N2) dans des canaux d'entrée 16" respectifs des unités de vannes multivoies de sélection de synthons combinatoires 16d et de sélection de synthons secondaires et de réactifs de couplage 16e.

Il est ainsi possible d'injecter des solvants de nettoyage adéquats dans tout le circuit de distribution précité, avec évacuation vers le distributeur de déchet au niveau de canaux de sortie respectifs des secondes composantes des unités de vannes multivoies 16b.

L'injection des solvants dans les unités de vannes 16d et 16e s'effectue au niveau de canaux d'entrée 16" situés à l'opposé de la sortie du canal principal 16' de chacune desdites unités.

L'injection de tels solvants de nettoyage pourra être réalisée, pour plus d'efficacité, de manière discontinue, avec intercalage d'injection de N2, de manière à constituter des segments liquides et gazeux alternatifs et séquentiels.

Dans les paires d'unités de vannes multivoies 16b affectées à la gestion des entrées/sorties des réacteurs 3 et reliées entre elles par leurs canaux principaux communs, la première unité permet d'effectuer une sélection entre les synthons combinatoires, qui ne sont injectés que dans les réacteurs 3 et non dans les contenants 6 et 7, et les synthons secondaires et les réactifs, la seconde unité comportant un premier canal de sortie relié à l'entrée du passage ou conduit débouchant dans la chambre 3"" et un second canal de sortie relié au collecteur 35 (sur la figure 23 seule la seconde unité est représentée).

Les figures 12 et 13 représentent (avec des symboliques légèrement différentes pour les réacteurs et les contenants) respectivement, de manière disjointe, le sous-circuit d'alimentation en synthons combinatoires et le sous-circuit d'alimentation en synthons secondaires et en réactifs de couplage. Ces figures pourront, par exemple, être affichées sur un écran lors d'une distribution d'une des substances précitées avec mise en évidence des synthons, réactifs ou solvants de nettoyage injectés, ce pour indiquer à l'utilisateur l'opération en cours.

Conformément à une autre caractéristique de l'invention, représentée aux figures 14 et 15 des dessins annexés, un circuit de distribution de solvants de lavage, de nettoyage et de rinçage et de solution de transfert est associé à chaque sous-unité 1', 1", ledit circuit étant principalement constitué par au moins une unité de vannes multivoies de sélection de solvants 16g dont les canaux d'entrée 16" sont reliés à différents réservoirs de solvant(s) et de solution 10, 12 pouvant être mis sous pression séparément au moyen d'au moins une unité 16h de vannes multivoies de mise sous pression sélective dont le canal principal 16' est alimenté en gaz propulseur et dont les canaux de sortie 16"' sont reliés chacun à un réservoir de solvant ou de solution 10, 12, la sortie du canal principal 16' de l'unité de vannes de sélection de solvants 16g étant reliée à l'entrée d'alimentation commune 31' d'un bloc distributeur radial 31 comprenant plusieurs vannes monovoie 15 dont les canaux d'entrée 16" sont reliés à ladite entrée d'alimentation 31' et dont les canaux de sortie 16"' alimentent, à travers des doseurs volumétriques 14, 14' adaptés, d'une part, un diviseur de flux 35 équimolaire dont les canaux de sortie 35" sont reliés à une vanne 15a de contrôle d'entrée d'un canal d'injection 23 d'un bouchon supérieur 3" d'un réacteur 3 du module 2 ou de la sous-unité 1' concerné, d'autre part, le ou un contenant 6 concerné formant chambre de mélange secondaire et, le cas échéant, le contenant 7 formant chambre de mélange principale, ce par l'intermédiaire d'un canal d'injection 25, 27 de leur bouchon supérieur respectif 6', 7", dont l'ouverture est contrôlée par une vanne 15a.

Lorsque le nombre de solvants est important, on installe avantageusement deux unités de vannes multivoies de sélection 16g en série, en les reliant au niveau de leurs canaux principaux 16' respectifs. Un montage similaire pourra être réalisé avec les unités de vannes multivoies 16h de mise sous pression sélective.

Les capillaires de mesure de niveaux des doseurs volumétriques 14 et 14' sont quant à eux reliés, par un collecteur/diviseur 35 au circuit de distribution de gaz propulseur et à un circuit de détente par barbotage, sous le contrôle de deux vannes monovoie 15.

Selon une autre caractéristique de l'invention, et comme le montrent les figures 16 et 17 des dessins annexés, un circuit de distribution de réactifs de déprotection générale est associé à chaque sous-unité 1', 1 ", ledit circuit étant principalement constitué par au moins deux unités 16i de vannes multivoies de sélection de solvants montés en série, dont les canaux d'entrée 16" sont reliés à différents réservoirs 11 de réactif(s) de déprotection générale pouvant être mis sous pression séparément, avantageusement à des pressions différentes, au moyen d'au moins deux unités 16j de vannes multivoies de mise sous pression dont le canal principal 16' est alimenté en gaz propulseur et dont les canaux de sortie 16"" sont reliés chacun à un réservoir 11 de solvants, directement ou par l'intermédiaire d'une structure intermédiaire de détente 32, la sortie du canal principal 16' de l'unité 16i de vannes multivoies de sélection de solvants étant reliée à l'entrée d'alimentation commune 31' d'un bloc distributeur radial 31 comprenant plusieurs vannes monovoie 15 dont les ouvertures d'entrée sont reliées à ladite entrée d'alimentation commune 31' et dont les ouvertures de sortie alimentent, d'une part, le canal d'entrée 35' d'un diviseur de flux 35 dont les canaux de sortie 35" sont reliés chacun, à travers une vanne 15b de contrôle d'entrée, à l'ouverture extérieure d'un canal d'injection 23 d'un bouchon supérieur 3" d'un réacteur 3 du module 2 ou de la sous-unité 1' concerné et, d'autre part, le ou un contenant 6 concerné formant chambre de mélange secondaire et, le cas échéant, le contenant 7 formant chambre de mélange principale, ce à travers un canal d'injection 25, 27 de leur bouchon supérieur respectif 6', 7', dont l'ouverture est contrôlée par une vanne 15b.

Ainsi, chacun des canaux d'entrée 16" des deux unités de vannes 16i est mis sous une pression de gaz propulseur spécifique fournie par un canal de sortie 16"' correspondant d'une des deux unités de vannes 16j, par l'intermédiaire des réservoirs ou bouteilles de réactifs de déprotection 11 concerné(e)s.

En outre, un circuit secondaire de distribution de réactifs de couplage est partiellement interconnecté avec chaque circuit de distribution de réactifs de déprotection, la sortie du canal principal 16' d'une unité 16k de vannes multivoies de sélection de réactifs de couplage, dont les canaux d'entrée 16" sont reliés à différents réservoirs 9" de réactifs de couplage, étant également reliée à l'entrée d'alimentation commune 31' du distributeur radial 31 faisant partie du circuit de distribution des réactifs de déprotection générale, ce éventuellement par l'intermédiaire d'un collecteur 35 formant sélecteur d'alimentation entre les réactifs de déprotection et les réactifs de couplage.

Le canal d'entrée 16" de l'unité de vannes 16k, ainsi que le canal d'entrée 16" de la première des deux unités de vannes 16i, situés aux extrémités des canaux principaux 16' respectifs opposées à leurs sorties sont directement reliés à une ligne d'alimentation en gaz propulseur, ce en vue de la purge du circuit de distribution de réactifs de déprotection et du circuit secondaire de distribution de réactifs de couplage, l'évacuation des résidus s'effectuant par un canal de sortie supplémentaire d'un des deux diffuseurs 35, relié chacun par une ligue d'évacuation correspondante à un récipient 44 de récupération contenant une solution neutralisante.

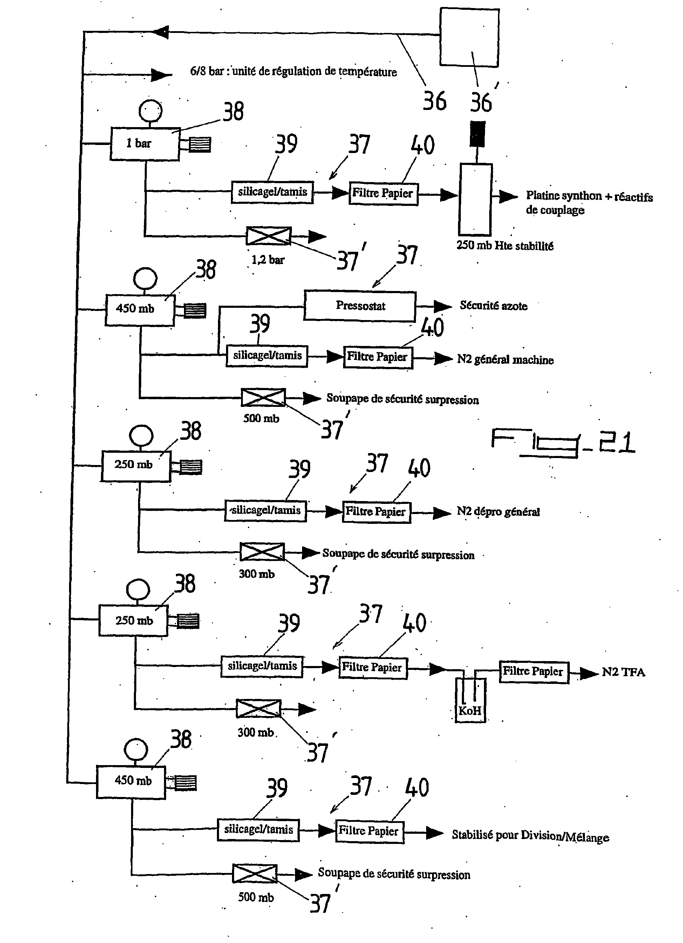

Comme le montrent les figures 18 et 19 des dessins annexés, un circuit de distribution de réactifs de déprotection TFA est prévu pour chaque sous-unité 1', 1 ", ledit circuit étant essentiellement constitué par un distributeur radial 31 dont le canal d'alimentation 31' est alimenté de manière contrôlée par l'intermédiaire d'un collecteur 8" en des solutions de réactifs de déprotection TFA à des concentrations différentes issus de réservoirs séparés 11' et dont les canaux de sortie des vannes 15 sont respectivement reliés, d'une part, à un diviseur de flux 35 dont les canaux de sortie 35" sont reliés chacun, à travers une vanne 15c de contrôle d'entrée, à un canal d'injection 23 d'un bouchon supérieur 3" d'un réacteur 3 du ou des deux module(s) 2 concerné(s), d'autre part, au(x) canaux d'injection 25, 27 des bouchons supérieurs 6', 7' du ou des contenant(s) 6, 7 concerné(s) formant chambre(s) de mélange secondaire(s) ou principale, dont l'ouverture est contrôlée par une vanne 15c correspondante.

Les portions de conduits 35"' reliant les canaux radiaux 35 aux différentes vannes 15c présentent des longueurs identiques et le diffuseur 35, ainsi que le bloc de distribution 31, sont reliés par une ligne d'évacuation des résidus à un récipient 45 contenant une solution neutralisante. Ce circuit de mise sous pression et de détente des deux réservoirs 11' de réactifs de déprotection TFA présentera également une ligne de détente aboutissant en barbotage dans ledit récipient 45.

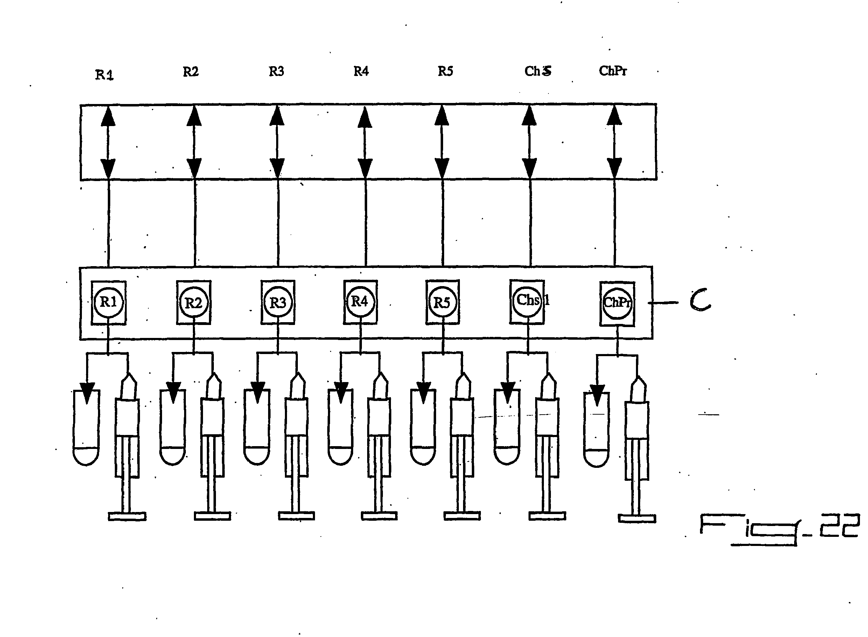

Conformément à une autre caractéristique de l'invention, représentée à la figure 20 des dessins annexés, un circuit de détente est associé à chaque sous-unité 1', 1 ", ledit circuit étant constitué d'une pluralité de lignes de détente parallèles 33 intégrant des valves anti-retour 33', reliés à leur extrémité amont à travers des vannes 15d de contrôle d'entrée correspondantes aux canaux d'évacuation 23', 25', 27' des bouchons supérieurs 3", 6', 7' des réacteurs 3 et contenants concernés 6, 7 et réunis à leurs extrémités aval opposées dans un montage en barbotage 34 dans un liquide décontaminant contenu dans un récipient 34' soumis à l'aspiration d'une hotte.

De même, un circuit d'évacuation des déchets des réacteurs 3 et contenants 6, 7, et le cas échéant de soutirage par leur bouchon inférieur 3"', 6", 7", est prévu pour chaque sous-unité 1', 1", les différentes lignes d'évacuation étant reliées, d'une part, à travers les vannes correspondantes des unités de vannes 16c de gestion des entrées/sorties, aux orifices de sortie des passages 22, 24, 26 des bouchons inférieurs 3"', 6", 7" desdits réacteurs 3 et contenants 6, 7 et, d'autre part, à des canaux d'entrée de collecteurs 8" de déchets, éventuellement montés en cascade par interconnexion et reliés, le cas échéant par un sélecteur de sortie 17, aux réservoirs de vidange et de récupération 13.

Comme le montre la figure 21 des dessins annexés, le circuit de distribution et d'injection de gaz propulseur est principalement constitué par une ligne d'alimentation principale 36 connectée à une source 36' de gaz propulseur sous haute pression et par plusieurs lignes d'alimentation secondaires parallèles 37 dérivées de ladite ligne d'alimentation principale à travers des vannes de détente 38 à pressions calibrées, reliées respectivement, de manière directe, aux réservoirs 9, 9', 9", 10, 11, 12 de solvants, de réactifs et de substances de base pour les synthèses, et, de manière indirecte, aux réacteurs 3 et aux contenants 6, 7 formant chambres de mélange principale et secondaires, par les différents circuits de circulation de fluides, et associées chacune à une soupape de sécurité de surpression 37' montée en parallèle sur la ligne 37 considérée, chaque ligne d'alimentation secondaire 37 intégrant au moins un module déshydrateur 39 au gel de silice et un module à filtre en papier 40 traversés par le flux de gaz propulseur circulant dans ladite ligne secondaire 37.

En vue d'assurer une régulation de température précise pour chaque ensemble module 2/contenant 6, chaque sous-unité 1', 1" dudit appareil 1 comprend un dispositif de régulation de température intégrant une unité 28 de commande et de contrôle, contrôlé par l'unité informatique 19 et formant en coopération avec des sondes 29 de mesure de la température interne dans les chambres des réacteurs 3 et des chambres de mélange secondaires 6 et des tubes de transfert 30 du type Dewar reliées, d'une part, à une source de fluide contrôlé en température et, d'autre part, aux entrées des moyens de chauffage/refroidissement 4, autant de boucles indépendantes de régulation et d'asservissement en température, à savoir une pour chacun des modules 2 de réacteurs 3 et une pour chacune des chambres de mélange secondaires 6 (voir figure 9).

Plus précisément, chaque module de synthèse 2 est pourvu d'un dispositif de régulation de température sous la forme d'une ligne 41 d'alimentation des moyens de chauffage/refroidissement 4 des réacteurs 3, sous forme de serpentins, en fluide gazeux thermorégulé, comprenant essentiellement un tube de transfert 30 du type Dewar intégrant un moyen de chauffage, relié par l'une de ses extrémités auxdits serpentins 4 et par son extrémité opposée à une source 42 de fluide gazeux à une température sensiblement inférieure à la température la plus basse souhaitée pour les réacteurs 3, au moins un, et préférentiellement plusieurs, des réacteurs 3 intégrant une sonde de mesure 29 de la température dans leur volume interne dont le signal de sortie est évalué par une unité 28 de commande et de contrôle du débit du fluide gazeux et de son chauffage dans le tube de transfert 30, formant avec ladite ou lesdites sonde(s) 29 une boucle de régulation de la température de chaque module 2 concerné, ladite unité 28 de commande et de contrôle étant éventuellement commune à au moins deux modules 2 ou à une sous-unité 1', 1".

Chaque réacteur 3 et contenant secondaire 6 comprend, en outre, comme le montre la figure 4, un moyen de condensation 4' permettant, en association avec le circuit de détente représenté sur la figure 20, de contrôler le reflux dans lesdits réacteurs 3 et contenants 6.

Les moyens de condensation 4', par exemple sous forme de serpentins entourant les corps de réacteurs ou contenants à réguler (voir également la demande de brevet français n° 00 03478 précitée), pourront être alimentés en eau à température ambiante dont le débit est régulé en fonction du solvant en présence (point de rosée).

Cette régulation est réalisée avec un contrôle visuel au niveau des valves anti-retour 33' (présentant des corps transparents et montés de manière apparente sur l'appareil), avec vérification de la présence ou non de condensation dans ces dernières, et/ou au niveau du récipient 34' (apparition des bulles).

De même, ces valves 33' permettent d'éviter une événtuelle aspiration de liquide décontaminant dans les réacteurs 3 ou contenants 6 lorsque ces derniers sont soumis à un refroidissement engendrant une dépression dans leurs chambres respectives.

Compte tenu de la constitution et de l'isolation symétriques des modules 2, ainsi que des moyens 4 de chauffage/refroidissement et des moyens de condensation 4', une unique sonde 29 pour chaque module 2 sera suffisante, les réacteurs 3 étant tous soumis à des conditions thermiques identiques.

La figure 22 illustre de manière schématique les lignes d'injection de résine, servant de support de synthèse, dans les réacteurs 3 et les contenants 6, 7 par l'intermédiaire de canaux ou de passages débouchant légèrement au-dessus des filtres de rétention respectifs 21, 21' et 21 ".

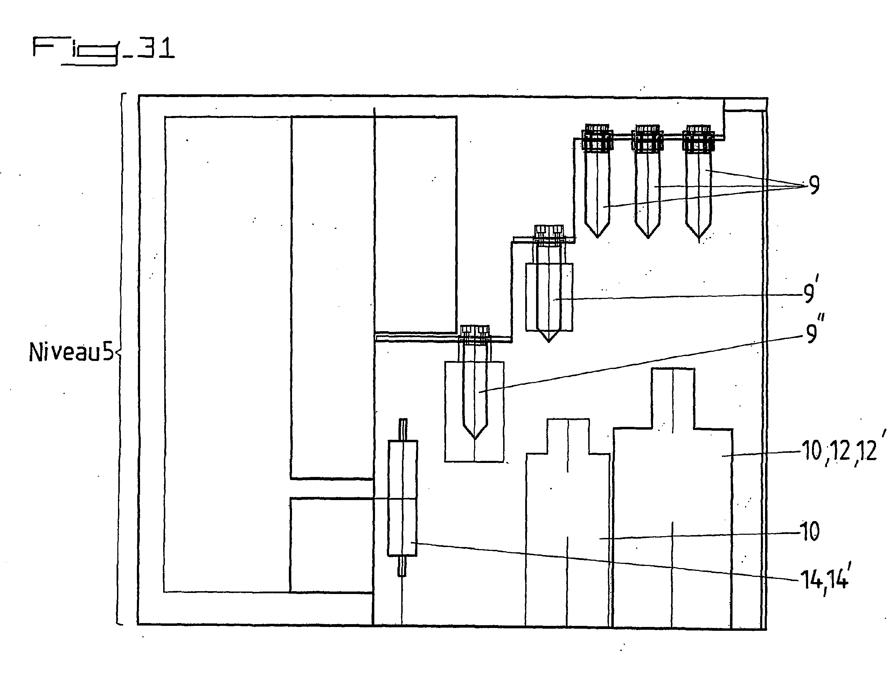

A l'appui des figures 29, 30 et 31, il est procédé ci-après à la description d'un exemple illustratif, mais non limitatif, de réalisation pratique possible d'une sous-unité 1".

Comme le montrent ces figures, une telle sous-unité 1" pourra présenter, outre une constitution fonctionnelle symétrique autour des deux ensembles module 2/contenant 6, également une structure étagée ou par niveaux.

Ainsi, un magasin inférieur 46 recevant les réservoirs 10, 11, 12 de solvants, de réactifs de déprotection générale, de réactifs de déprotection TFA et de solution de transfert recyclée est installé au niveau 0.

Au niveau 1, on trouve les entrées/sorties des lignes d'alimentation des moyens de chauffage/refroidissement 4 et des moyens de condensation 4'.

Les contenants 6 et les réacteurs 3 montés en modules 2 sont installés au niveau 2 et le niveau immédiatement au-dessus (niveau 3) renferme les vannes 15a à 15d et les unités de vannes 16 et 16b gérant les entrées/sorties au niveau des réacteurs 3 et contenants 6, ainsi que les moteurs et les mécanismes d'entraînement des organes d'agitation 5.

Ledit niveau 3 comprend également, en position frontale apparente, les valves anti-retour 33' et le récipient 34' de détente et d'expansion.

Le niveau 4 renferme l'unité 28 de commande et de contrôle régulant la température (de - 80°C à + 100°C) dans les chambres des réacteurs 3 et contenants 6 de la sous-unité 1" considérée ainsi que le superviseur électronique 28' de gestion et de contrôle de ladite sous-unité 1".

Le niveau supérieur (niveau 5) comporte quant à lui un magasin 47 renfermant notamment les réservoirs 9, 9' et 9" de synthons combinatoires, de synthons secondaires et de réactifs de couplage (avec une disposition étagée), les volumètres 14, 14', des réservoirs 10 supplémentaires de solvants de nettoyage, de lavage et de rinçage et le réservoir 12' de solution de transfert pure. En outre, ce magasin 47 pourra également renfermer l'électronique et la fluidique nécessaires pour assurer la distribution contrôlée des substances précitées.

Les différents composants, récipients et parties précités sont bien entendu montés ou disposés sur des supports adaptés, le cas échéant de manière amovible, ces supports étant eux-mêmes installés sur une superstructure porteuse.

La présente invention a également pour objet un procédé de synthèse de molécules organiques au moyen de l'appareil 1, tel que décrit ci-dessus, par application d'un protocole de synthèse combinatoire sur phase solide.

Ce procédé est caractérisé en ce qu'il comprend notamment au moins une opération de transfert et de mélange des produits de synthèse intermédiaires sur leur support de synthèse solide (produits de synthèse + résine) présents dans les différents réacteurs 3 des différents modules 2, dans le contenant 7 formant chambre de mélange principale ou dans les contenants 6 formant chambres de mélange secondaires et associés, respectivement, chacun à un module 2, suivi d'une opération inverse de transfert et de répartition contrôlée des produits de synthèse intermédiaires sur support solide, présents dans les contenants 6 ou dans le contenant 7, soit dans les réacteurs 3 des différents modules 2 ou les réacteurs 3 des modules 2 respectivement concernés, soit dans les différents contenants 6, lesdits produits de synthèse intermédiaires sur support solide, étant, avant chaque opération de transfert, mis en suspension dans une solution de transfert chimiquement inerte par rapport auxdits produits de synthèse intermédiaires, le volume de solution de transfert étant environ dix fois supérieur au volume produits de synthèse intermédiaires sur support solide à mettre en suspension et ladite solution de transfert étant récupérée et recyclée après chaque opération et opération inverse précitées et avant enchaînement de toute phase opératoire consécutive (voir aussi figure 10).

Plus précisément, chaque opération de transfert et de mélange consiste essentiellement, pour un module 2 donné et son circuit de transfert/mélange/répartition, à remplir les portions de conduits 8, 8' et 35"' et les canaux du sélecteur 17 et du diviseur 35 de solution de transfert fraîche en mettant sous pression un réservoir 12' correspondant et en ouvrant, de manière répétée, séquentiellement les vannes correspondantes des unités de vannes 16a des différents réacteurs 3 du module 2 concerné, puis les vannes correspondantes des unités de vannes 16a du contenant 6 et/ou 7, à remplir ensuite lesdites portions de conduits et lesdits canaux par injection de la solution de transfert dans les réacteurs 3 et contenant(s) 6 et/ou 7 respectif(s) et à vidanger lesdits réacteurs 3 et contenants 6 et/ou 7 de leur surplus de solution de transfert dans le réservoir 13 à déchets, puis à remplir lesdits réacteurs 3 de solution de transfert et à actionner les organes d'agitation mécaniques 5 pour mettre en suspension les produits de synthèse intermédiaires sur support solide dans le liquide de transfert présent dans lesdits réacteurs 3, à transférer la majorité, préférentiellement environ 80 %, du contenu desdits réacteurs 3 dans le contenant 6 ou 7, d'une part, en ouvrant les vannes 15 ou unités de vannes 16a de gestion des entrées/sorties, associée chacune à l'ouverture extérieure d'un conduit vertical ou d'un passage radial débouchant dans le volume intérieur du contenant 6 concerné ou du contenant 7 et, d'autre part, en ouvrant de manière répétée et séquentiellement les vannes respectives des unités de vannes 16a de gestion des entrées/sorties des différents réacteurs 3 du module 2 concerné, reliées aux ouvertures extérieures de conduits débouchant dans les chambres de réaction 3"" légèrement au-dessus des filtres de rétention 21, ce en mettant successivement lesdites chambres 3"" sous pression de gaz propulseur pendant des intervalles de temps donnés et après avoir configuré de manière appropriée le sélecteur 17 associé au module 2 concerné, à évacuer ensuite le reste de solution de transfert par les passages de vidange 22 des bouchons inférieurs 3'" desdits réacteurs 3 en l'acheminant dans le réservoir 12, à remplir lesdits réacteurs 3 à nouveau de solution de transfert provenant du réservoir 12 mis sous pression et à agiter leur contenu résultant, à reprendre les opérations de transfert séquentiel et d'évacuation précitées et, enfin, à reprendre au moins une troisième fois lesdites opérations précitées de remplissage des réacteurs 3, d'agitation, de transfert séquentiel et d'évacuation.

Lorsque l'opération de transfert/mélange concerne le contenant 7 et plusieurs, voire la totalité des modules 2, les différentes phases opératoires décrites ci-dessus et affectant les réacteurs 3 pourront être exécutées simultanément au niveau des différents modules 2 et sous-unités 1', 1" concernés.

De même, chaque opération de transfert et de répartition contrôlée consiste essentiellement, après lavage des portions de conduits 8, 35"' et des canaux du sélecteur 17 et du diviseur 35 destinées à former par coopération le circuit de transfert et de répartition souhaité, à mettre en suspension les produits de synthèse intermédiaires, et le cas échéant le support de synthèse associé, par injection de solution de transfert issue d'un réservoir 12 correspondant dans le contenant 7 ou le(s) contenant(s) 6 concerné(s) et agitation consécutive au moyen d'un organe mécanique d'agitation 5, à remplir le circuit de transfert et de répartition de solution de transfert, à ouvrir la ou les vanne(s) 15 ou unité(s) de vanne(s) 16a de gestion des entrées/sorties associées chacune à l'ouverture extérieure d'un conduit vertical ou d'un passage radial débouchant dans le volume intérieur du ou de chacun desdits contenant(s) 6 ou du contenant 7 concerné(s), à configurer le ou les sélecteur(s) 17 associé(s) au(x) module(s) 2 concerné(s) de manière à établir la communication avec le ou les diviseur(s) 15 dudit ou desdits module(s) 2, à mettre sous pression de gaz propulseur le contenant 7 ou le(s) contenant(s) 6, puis à actionner à l'ouverture, séquentiellement et consécutivement, selon des cycles en boucles, les vannes respectives des unités de vannes 16a de gestion des entrées/sorties des différents réacteurs 3 du ou des module(s) 2 concerné(s) contrôlant l'accès au niveau des ouvertures extérieures de conduits débouchant dans les chambres de réaction 3"" desdits réacteurs 3, le cas échéant simultanément pour des réacteurs 3 de différents modules 2, à répéter les cycles précités un nombre de fois suffisant pour réduire sensiblement le volume de solution dans le ou les contenant(s) 6 ou 7, préférentiellement d'environ 75 à 95 %, puis à injecter une quantité additionnelle de solution de transfert dans le ou les contenant(s) 6 ou 7 et à agiter le mélange résultant, à transférer ledit mélange comme précédemment du ou des contenant(s) 6 ou 7 vers les réacteurs 3 concernés, à répéter ces deux dernières phases opératoires au moins une fois encore, puis à vidanger le ou les contenant(s) 6 ou 7 concernés et à extraire la solution de transfert desdits réacteurs 3 et à la recycler par acheminement en retour vers le réservoir 12 correspondant.

Conformément à une caractérisitque de l'invention, la division ou le fractionnement par répartition, entre les différents réacteurs 3 de chaque module 2 concerné, du contenu du contenant 7 ou du contenant 6 associé audit module 2 durant une opération de transfert et de répartition contrôlée, est déterminé par le contrôle des durées d'actionnement à l'ouverture des vannes respectives des unités de vannes 16a de gestion des différents réacteurs 3 dudit module 2 durant chaque cycle d'actionnement.

Afin d'éviter une répartition inégale ou non contrôlée des produits de synthèse intermédiaires du fait d'une mauvaise détermination du début d'injection de ces derniers, il est avantageusement prévu que, pendant une première phase de l'opération de transfert et de répartition contrôlée, correspondant à l'évacuation de la solution de transfert pure, c'est-à-dire non chargée en produits de synthèse intermédiaires, présente dans les portions de circuit 8, 35"' par injections fragmentaires successives dans les différents réacteurs 3 du ou des modules 2 concernés, les durées d'actionnement des vannes des unités de vannes 16a de gestion des entrées/sorties desdits réacteurs 3 sont identiques pour tous les réacteurs 3 et de faible longueur, en particulier en fin de ladite phase d'évacuation et début de la phase d'injection dans les réacteurs 3 de solution de transfert chargée en produits de synthèse intermédiaires provenant du ou des contenants 6, 7.

En vue de réduire les durées des phases de transfert/répartition, il peut, en outre, être prévu que, dans le cas d'une opération de transfert et de répartition contrôlée à partir du contenant 7 vers plusieurs modules 2, les réacteurs 3 de même rang des différents modules 2 concernés sont, de manière répétée et en fonction des cycles d'actionnement, actionnés simultanément et pendant des durées identiques dans le cas d'une répartition équimolaire entre modules 2.

Selon un mode de réalisation préféré de l'invention, la solution de transfert consiste en un mélange de DCM (dichlorométhane) et de DMF (diméthylformamide), avantageusement avec un rapport volumique mutuel d'environ 1.

On notera que la répartition du contenu d'un contenant 6 entre les réacteurs 3 du module 2 associé à ce dernier, et la répartition du contenu du contenant 7 entre les réacteurs 3 des différents modules 2, ou entre les différents contenants 6, peut être effectuée de manière égalitaire (mêmes quantités injectées dans les différents réacteurs 3 ou contenants 6) ou inégalitaire, en contrôlant les quantités distribuées au moyen des temps d'actionnement des vannes ou unités de vannes concernées par ces transferts.

Il convient également de souligner ici la très grande précision, autant en termes quantitatifs que qualificatifs, de l'opération de transfert/répartition, notamment en mettant en oeuvre des séquences d'actionnement des vannes concernées de faibles durées.

Ainsi, quelle que soit la répartition des substances dans les contenants 6 ou le contenant 7, l'opération de transfert/répartition selon l'invention permet de retrouver des images exactes, par duplication, du mélange présent dans ce(s) contenant(s) 6 ou 7 dans les réacteurs 3 destinataires, le prélèvement de substance dans ce(s) contenant(s) 6 ou 7 s'effectuant par strates successives de faible épaisseur dans lesquelles le mélange peut être considéré comme étant sensiblement homogène, ces strates étant ensuite alternativement et régulièrement transférées vers les différents réacteurs 3 concernés.

En outre, l'agitation des contenus des contenants 6 et 7 avant chaque opération de transfert/répartition permet à la fois de désagglomérer éventuellement les substances présentes et d'homogénéiser leur répartition.

Ces opérations de transfert/mélange et de transfert, bien que décrites en relation avec l'appareil automatique de synthèse 1 selon l'invention et dans le cadre d'un procédé de synthèse de molécules organiques, peuvent bien entendu également être mises en oeuvre dans d'autres contextes que celui de la présente invention et dans d'autres applications nécessitant le transfert de substances liquides entre plusieurs contenants primaires (réacteurs 3 par exemple) et un contenant secondaire (contenant 6 ou 7) dont la capacité est suffisante pour accepter les contenus desdits contenants primaires, en particulier lorsqu'il y a lieu de réaliser une répartition homogène et équilibrée précise du contenu du contenant secondaire dans les différents contenants primaires concernés.

En effet, il suffit pour la mise en oeuvre de ces opérations de disposer de moyens de contrôle de l'évacuation et de l'admission de substances au niveau des contenants primaires et du contenant secondaire, pouvant être commandés de manière précise, selon le schéma opératoire décrit ci-dessus, et d'un circuit de lignes de transfert équivalent pour les différents contenants primaires (même longueur, même secton, même rapport de division).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Appareil automatique pour la synthèse de molécules organiques, notamment en phase solide, selon des protocoles de synthèses combinatoires ou parallèles, **caractérisé en ce qu'**il est principalement constitué, d'une part, par plusieurs modules de synthèse (2) comportant chacun entre trois et dix, préférentiellement cinq, réacteurs (3) formés chacun d'un corps tubulaire (3') délimitant, en coopération avec un bouchon supérieur (3") d'injection et de détente et un bouchon inférieur (3"') amovible de soutirage contrôlé et de vidange, une chambre de réaction (3"") normalement fermée de manière étanche et contrôlée en température par des moyens de chauffage et de refroidissement (4) et pourvus d'un moyen d'agitation (5) du milieu réactionnel par bullage et/ou par l'intermédiaire d'un organe mécanique, un contenant (6) formant chambre de mélange secondaire et dont la contenance correspond au moins à la somme des contenances des réacteurs (3) d'un module (2), étant associé à chaque module (3) et un contenant (7) supplémentaire étant prévu, formant une chambre de mélange principale dont la contenance correspond au moins à la somme des contenances des différentes chambres de mélange secondaires (6), d'autre part, par au moins un circuit pour le transfert des contenus des réacteurs (3) vers le contenant (6) associé au module de synthèse (2) considéré et/ou vers le contenant (7) et la répartition contrôlée du contenu d'un ou des contenants (6) entre les réacteurs (3) du module (2) associé et/ou du contenu du contenant (7) entre les contenants (6) ou les réacteurs (3) d'un, de plusieurs ou de tous les modules (2) de l'appareil (1), ainsi qu'au moins un circuit d'alimentation ou d'évacuation relié notamment aux différentes entrées/sorties des réacteurs (3) et des contenants (6, 7), ces circuits permettant la circulation de fluide(s) sous l'action d'un gaz propulseur inerte ou neutre et étant formés de conduits ou portions de conduits (8) interconnectés entre eux et reliant lesdits réacteurs (3) et contenants (6, 7) entre eux et à des réservoirs (9, 10, 11, 12, 13) de solutions et à des lignes de détente, d'aspiration et d'injection de gaz propulseur ou de bullage, ces connexions étant établies temporairement au moyen de vannes monovoie (15) ou d'unités (16, 17) de vannes multivoies et monoblocs constituant des noeuds programmables de configuration desdits circuits ou des organes de commande et de gestion des entrées/sorties des réacteurs (3) et contenants (6, 7) et, enfin, par un système superviseur ramifié (18) de gestion et de contrôle de la circulation et de la distribution des fluides dans les circuits précités et de la température et de l'agitation dans les chambres (3"") des réacteurs (3), comprenant notamment une unité informatique (19) associée à des circuits électroniques (19') d'interface et de multiplexage notamment pour la commande des vannes et unités de vannes (15, 16, 17), des moyens de chauffage et de refroidissement (4) des chambres (3"") des réacteurs (3) et, le cas échéant, de l'entraînement des organes mécaniques d'agitation (5), et intégrant des interfaces (19") de dialogue avec et de programmation par l'utilisateur.

2. Appareil selon la revendication 1, **caractérisé en ce qu'**il présente une structure modulaire et est constitué d'au moins trois sous-unités (1', 1"), à savoir une première sous-unité (1') comprenant un module (2) de cinq réacteurs (3), une chambre de mélange secondaire (6) et la chambre de mélange principale (7) et au moins deux autres sous-unités (1") de constitutions identiques comprenant chacune deux modules (2) de cinq réacteurs (3) et leurs chambres de mélange secondaires (6) associées respectives, chaque sous-unité (1', 1") comportant ses propres circuits de circulation de fluides, reliant ses réacteurs (3) et contenants (6, 7) entre eux, aux réservoirs (9 à 13) et à des doseurs volumétriques (14, 14') associés, les réacteurs (3) et les chambres de mélange secondaires (6) des deux sous-unités (1") de même constitution étant toutefois reliés, de manière fluidique, au moins à la chambre de mélange principale (7) faisant partie de la première sous-unité (1').

3. Appareil selon la revendication 2, **caractérisé en ce qu'**à chaque sous-unité (1', 1 ") est associée une branche (18') de commande, de contrôle et de mesure du système superviseur (18), ces différentes branches (18') étant toutes connectées à un bus série (18") relié à l'unité informatique (19) contrôlant en particulier le déroulement des différentes phases opératoires et dont les voies de transmissions sont multiplexées vers les organes et moyens à commander et les capteurs et moyens de mesure des différentes sous-unités (1', 1 ") pour déboucher sur des ports de sortie ou d'entrée des circuits d'interface (19'), ces ports étant arrangés et regroupés dans les branches (18') à l'image et en fonction de l'arrangement et du regroupement physiques ou fonctionnels desdits organes et moyens à commander et desdits capteurs et moyens de mesure.

4. Appareil selon l'une quelconque des revendications 1 à 3, **caractérisé en ce que** les réacteurs (3) de chaque module (2) sont arrangés entre eux, de manière équidistante et équiangulaire, selon une configuration circulaire et montés dans une structure support (20) portant notamment également les vannes et les unités de vannes multivoies (15, 16a, 16b) contrôlant l'accès aux chambres (3"") des réacteurs (3) pour l'injection de substances et l'extraction ou l'évacuation de gaz ou de substances à récupérer ou à éliminer, ainsi qu'éventuellement les vannes ou l'unité de vannes multivoies (15, 16c) contrôlant l'accès auxdites chambres (3"") pour la vidange et le soutirage par phases.

5. Appareil selon l'une quelconque des revendications 1 à 4, **caractérisé en ce que**, pour chaque réacteur (3), le bouchon inférieur (3"') amovible assure le maintien étanche d'un filtre de rétention (21) de la résine servant de support de synthèse et comporte un passage (22) pour la vidange contrôlée des liquides contenus dans ledit réacteur (3) et éventuellement l'injection de gaz de bullage et **en ce que** le bouchon supérieur (3") comporte un ou plusieurs canaux (23) d'injection de substances nécessaires à la synthèse et de divers solvants et au moins un canal (23') de détente et d'évacuation des gaz générés dans le réacteur (3) concerné, chacun desdits canaux (23, 23') étant connecté, au niveau de son ouverture extérieure, par un raccord de branchement (8') adapté, à une ouverture correspondante d'un canal ou d'une portion de canal de sortie (16", 17") ou d'entrée (16', 17') d'au moins une vanne (15) ou unité de vannes multivoies (16a, 16b) de gestion des entrées/sorties au niveau d'un bouchon supérieur (3") et affecté au réacteur (3) concerné.

6. Appareil selon l'une quelconque des revendications 1 à 5, **caractérisé en ce que** les réacteurs (3) de chaque module (2) sont isolés thermiquement entre eux et par rapport au milieu extérieur, les réacteurs (3) d'un même module (2) étant par exemple montés dans une structure isolante (20') entourant et isolant chacun d'eux, et **en ce que** chaque réacteur (3) est pourvu d'un moyen (4) de chauffage et de refroidissement de la partie inférieure de sa chambre (3"") recevant le milieu réactionnel et d'un moyen de condensation (4') de la partie supérieure de sa chambre (3"") pour condenser les vapeurs générées lors du chauffage du milieu réactionnel, lesdits moyens (4, 4') de chauffage/refroidissement et de condensation, sous la forme de serpentins entourant chaque réacteur (3), montés au niveau de la partie de la chambre (3"") du réacteur (3) à réguler en température et agissant à travers la matière de la paroi du réacteur (3) considéré, et la structure isolante (20') laissant les bouchons supérieur (3 ") et inférieur (3"') dégagés et accessibles.

7. Appareil selon l'une quelconque des revendications 2 à 6, **caractérisé en ce que** chaque contenant de mélange secondaire (6) et le contenant de mélange principal (7) présentent des corps de forme tubulaire fermés par un bouchon supérieur (6', 7') comportant un ou plusieurs canaux (25, 27) d'injection de substances nécessaires à la synthèse et de solvants et au moins un canal (25', 27') de détente et d'évacuation des gaz, et auquel sont affectées des vannes (15) et des unités (16a, 16b) de vannes multivoies de gestion des entrées/sorties, et par un bouchon inférieur (6", 7") amovible de vidange, pourvu d'un passage d'évacuation (24, 26) dont la sortie est contrôlée par une unité de vannes multivoies (16c) et maintenant de manière étanche un filtre de rétention (21', 21 ") de support de synthèse, lesdits contenants (6 et 7) étant en outre munis d'un organe mécanique d'agitation (5).

8. Appareil selon la revendication 7, **caractérisé en ce que** chaque contenant de mélange secondaire (6) est en outre contrôlé en température, au niveau de sa chambre interne, en étant pourvu d'une isolation thermique (6"') et d'un moyen (4) pour le chauffage et le refroidissement au moins du volume destiné à contenir le milieu réactionnel, associé à un moyen (4') de refroidissement pour la condensation des vapeurs générées lors du chauffage dudit milieu réactionnel.

9. Appareil selon l'une quelconque des revendications 1 à 8, **caractérisé en ce que** les unités de vannes multivoies (16) d'un premier type comprennent chacune un canal principal commun (16') d'alimentation ou d'entrée, respectivement collecteur ou de sortie, pouvant être mis en communication fluidique, individuellement ou de manière groupée, avec une pluralité de canaux secondaires de sortie (16"'), respectivement d'entrée (16"), distincts lors de l'actionnement d'un ou de plusieurs organes correspondants d'ouverture de passage ou de levée de l'obturation, commandés par l'unité informatique (19) du système superviseur (18), ledit canal principal commun (16') pouvant, le cas échéant, être obturé au niveau de son ou de ses ouvertures d'extrémité par un ou des organes similaires pour autoriser l'établissement d'un passage communiquant transversal entre au moins deux canaux secondaires (16", 16"'), les volumes de liquide transférés lors de l'ouverture des passages de communication étant contrôlés par l'unité informatique (19) sur la base du temps d'ouverture et de la pression de gaz propulseur, par exemple de l'azote, appliquée aux réservoirs (9 à 13), aux doseurs volumétriques (14, 14'), aux réacteurs (3), aux chambres secondaires (6) et/ou à la chambre principale (7).

10. Appareil selon la revendication 9, **caractérisé en ce que** des unités de vannes multivoies (17) d'un second type comportent un canal principal commun (17') non débouchant sur l'extérieur, reliant entre eux une pluralité de canaux secondaires (17") débouchants, dont certains constituent des canaux d'entrée et dont les autres constituent des canaux de sortie, de manière à former un sélecteur permettant de relier un ou plusieurs canaux d'entrée (17") à un ou plusieurs canaux de sortie (17"), en fonction de l'actionnement ou du non actionnement d'un ou de plusieurs organes d'ouverture de passage ou de levée d'obturation contrôlant chacun le passage entre un canal secondaire (17") et le canal principal commun (17).

11. Appareil selon l'une quelconque des revendications 1 à 10, **caractérisé en ce qu'**il comporte, pour chaque module (2) un circuit de transfert/répartition/mélange, ce dernier étant principalement constitué par une unité de vanne multivoies formant un sélecteur (17) dont trois canaux secondaires (17") sont respectivement reliés, d'une part, à au moins un réservoir de solution de transfert (12), d'autre part, audit contenant (6) formant chambre de mélange secondaire pour ledit module (2) et, enfin, au contenant (7) formant chambre de mélange principale, à travers une unité de vannes multivoies (16a) de gestion des entrées/sorties, au niveau des ouvertures extérieures de conduits verticaux ou de passages radiaux débouchant dans le volume intérieur desdits contenants (6 et 7) légèrement au-dessus du filtre de rétention (21', 21 ") délimitant le fond de la partie fonctionnelle desdits contenants (6, 7), et dont un quatrième canal secondaire (17', 17") est relié à l'entrée du canal commun (35') d'un diviseur de flux équimolaire (35) dont les sorties des canaux de distribution (35") sont reliées, par l'intermédiaire des portions (35"') de conduits présentant des longueurs identiques et à travers des unités de vannes (16a) de gestion des entrées/sorties, aux différents réacteurs (3) du module (2) considéré(e), au niveau des ouvertures extérieures de conduits débouchant dans les parties des volumes intérieurs formant chambres de réaction (3"') desdits réacteurs (3) destinées à contenir les milieux réactionnels, préférentiellement légèrement au-dessus des filtres de rétention (21) délimitant les fonds desdites parties de volumes.

12. Appareil selon l'une quelconque des revendications 5 et 9 à 11, **caractérisé en ce qu'**il comprend, pour chaque module (2) ou chaque sous-unité (1', 1"), d'une part, un circuit d'alimentation en et de distribution des synthons combinatoires et secondaires et des réactifs de couplage, et des segments parallèles de circuits d'injection de résine débouchant directement dans le volume intérieur respectivement des chambres (3"") de réacteurs (3), des chambres de mélange secondaires (6) et de la chambre de mélange principale (7), d'autre part, un circuit d'alimentation en et de distribution de solvants de rinçage, de lavage et de nettoyage, un circuit d'alimentation en et de distribution de réactifs de déprotection générale, un circuit d'alimentation en et de distribution de réactifs de déprotection TFA et un circuit de détente des différentes chambres (3"", 6 et 7), reliés à des sites de branchement de canaux d'injection (23, 25, 27) ou d'évacuation (23', 25', 27') ménagés dans le bouchon supérieur (3", 6', 7') respectivement des réacteurs (3), des contenants formant chambres de mélange secondaires (6) et du contenant formant chambre de mélange principal (7) et, enfin, un circuit de soutirage contrôlé de phases liquides présentes dans lesdites chambres et un circuit de vidange et d'évacuation des déchets, reliés à des sites de branchement formés en sortie des passages (24, 26, 28) ménagés dans les bouchons inférieurs des réacteurs (3), des contenants de mélanges secondaires (6) et du contenant de mélange principal (7).

13. Appareil selon les revendications 7 et 12, **caractérisé en ce qu'**un circuit de distribution des synthons et des réactifs de couplage est associé à chaque sous-unité (1', 1") dudit appareil (1), ce circuit étant éventuellement constitué de deux sous-circuits d'alimentation distincts, à savoir, d'une part, un sous-circuit d'alimentation en synthons combinatoires comprenant une unité (16d) de vannes multivoies de sélection de synthons pour chaque réacteur (3) d'un module de synthèse (2), dont la sortie du canal principal commun (16') est reliée à une première, d'une paire montée en cascade, d'unités (16b) de vannes multivoies de gestion des entrées/sorties d'un passage ou conduit débouchant dans le volume intérieur du réacteur (3) correspondant, préférentiellement au-dessus d'un filtre de rétention (21) du support de synthèse solide et, d'autre part, un sous-circuit d'alimentation en synthons secondaires et en réactifs de couplage comprenant des unités (16e) de vannes multivoies de sélection de synthons et de réactifs, montés en parallèle, dont les sorties des canaux principaux (16') sont reliés aux canaux d'entrée d'un sélecteur (17), les canaux de sortie (17"') de ce dernier étant reliés aux canaux d'entrée (16") correspondants desdites premières unités (16b) de vannes multivoies de gestion des entrées/sorties au niveau des réacteurs (3) ou à des canaux d'entrée (16") d'unités de vannes multivoies (16b) de gestion des entrées/sorties au niveau de passages ou de conduits débouchant dans les volumes intérieurs des contenants (6, 7) concernés d'un module (2) ou de la sous-unité (1) considéré, le cas échéant par l'intermédiaire d'une unité de vannes multivoies de distribution multiplexée (16f) pour la sélection des réacteurs (3) du module (2) concerné, les unités de vannes multivoies de sélection (16d et 16e) comportant chacune en outre un canal d'entrée (16") pour l'injection de solvant(s) de lavage et de nettoyage, relié au canal principal (16') correspondant au niveau de son extrémité opposée à sa sortie, et les unités de vannes multivoies de gestion (16b), de sélection (16f) et formant sélecteur (17) comportant chacune un canal de sortie (16"') pour l'évacuation des déchets vers des réservoirs (13) de vidange et de récupération par l'intermédiaire d'un collecteur (35), ledit canal de sortie (16"') étant relié au canal principal (16') correspondant de l'unité de vannes (16b, 16f, 17) considérée au niveau ou à proximité de l'une de ses extrémités.

14. Appareil selon les revendications 7 et 12, **caractérisé en ce qu'**un circuit de distribution de solvants de lavage et de nettoyage et de rinçage et de solution de transfert est associé à chaque sous-unité (1', 1"), ledit circuit étant principalement constitué par au moins une unité de vannes multivoies de sélection de solvants (16g) dont les canaux d'entrée (16") sont reliés à différents réservoirs de solvant(s) et de solution (10, 12) pouvant être mis sous pression séparément au moyen d'au moins une unité (16h) de vannes multivoies de mise sous pression sélective dont le canal principal (16') est alimenté en gaz propulseur et dont les canaux de sortie (16"') sont reliés chacun à un réservoir de solvant ou de solution (10, 12), la sortie du canal principal (16') de l'unité de vannes de sélection de solvants (16g) étant reliée à l'entrée d'alimentation commune (31') d'un bloc distributeur radial (31) comprenant plusieurs vannes monovoie (15) dont les canaux d'entrée (16") sont reliés à ladite entrée d'alimentation (31') et dont les canaux de sortie (16"') alimentent, à travers des doseurs volumétriques (14, 14') adaptés, d'une part, un diviseur de flux (35) équimolaire dont les canaux de sortie (35") sont reliés à une vanne (15a) de contrôle d'entrée d'un canal d'injection (23) d'un bouchon supérieur (3") d'un réacteur (3) du module (2) ou de la sous-unité (1') concerné, d'autre part, le ou un contenant (6) concerné formant chambre de mélange secondaire et, le cas échéant, le contenant (7) formant chambre de mélange principale, ce par l'intermédiaire d'un canal d'injection (25, 27) de leur bouchon supérieur respectif (6', 7"), dont l'ouverture est contrôlée par une vanne (15a).

15. Appareil selon les revendications 7 et 12, **caractérisé en ce qu'**un circuit de distribution de réactifs de déprotection générale est associé à chaque sous-unité (1', 1"), ledit circuit étant principalement constitué par au moins deux unités (16i) de vannes multivoies de sélection de solvants montés en série, dont les canaux d'entrée (16") sont reliés à différents réservoirs (11) de réactif(s) de déprotection générale pouvant être mis sous pression séparément, avantageusement à des pressions différentes, au moyen d'au moins deux unités (16j) de vannes multivoies de mise sous pression dont le canal principal (16') est alimenté en gaz propulseur et dont les canaux de sortie (16"") sont reliés chacun à un réservoir (11) de solvants, directement ou par l'intermédiaire d'une structure intermédiaire de détente (32), la sortie du canal principal (16') de l'unité (16i) de vannes multivoies de sélection de solvants étant reliée à l'entrée d'alimentation commune (31') d'un bloc distributeur radial (31) comprenant plusieurs vannes monovoies (15) dont les ouvertures d'entrée sont reliées à ladite entrée d'alimentation commune (31') et dont les ouvertures de sortie alimentent, d'une part, le canal d'entrée (35') d'un diviseur de flux (35) dont les canaux de sortie (35") sont reliés chacun, à travers une vanne (15b) de contrôle d'entrée, à l'ouverture extérieure d'un canal d'injection (23) d'un bouchon supérieur (3") d'un réacteur (3) du module (2) ou de la sous-unité (1') concerné et, d'autre part, le ou un contenant (6) concerné formant chambre de mélange secondaire et, le cas échéant, le contenant (7) formant chambre de mélange principale, ce à travers un canal d'injection (25, 27) de leur bouchon supérieur respectif (6', 7'), dont l'ouverture est contrôlée par une vanne (15b).

16. Appareil selon la revendication 15, **caractérisé en ce qu'**un circuit secondaire de distribution de réactifs de couplage est partiellement interconnecté avec chaque circuit de distribution de réactifs de déprotection, la sortie du canal principal (16') d'une unité (16k) de vannes multivoies de sélection de réactifs de couplage, dont les canaux d'entrée (16") sont reliés à différents réservoirs (9") de réactifs de couplage, étant également reliée à l'entrée d'alimentation commune (31') du distributeur radial (31) faisant partie du circuit de distribution des réactifs de déprotection générale, ce éventuellement par l'intermédiaire d'un collecteur (35) formant sélecteur d'alimentation entre les réactifs de déprotection et les réactifs de couplage.

17. Appareil, selon les revendications 7 et 12, **caractérisé en ce qu'**un circuit de distribution de réactifs de déprotection TFA est prévu pour chaque sous-unité (1', 1"), ledit circuit étant essentiellement constitué par un distributeur radial (31) dont le canal d'alimentation (31') est alimenté de manière contrôlée par l'intermédiaire d'un collecteur (8") en des solutions de réactifs de déprotection TFA à des concentrations différentes issus de réservoirs séparés (11') et dont les canaux de sortie des vannes (15) sont respectivement reliés, d'une part, à un diviseur de flux (35) dont les canaux de sortie (35") sont reliés chacun, à travers une vanne (15c) de contrôle d'entrée, à un canal d'injection (23) d'un bouchon supérieur (3") d'un réacteur (3) du ou des deux module(s) (2) concerné(s), d'autre part, au(x) canaux d'injection (25, 27) des bouchons supérieurs (6', 7') du ou des contenant(s) (6, 7) concerné(s) formant chambre(s) de mélange secondaire(s) ou principale, dont l'ouverture est contrôlée par une vanne (15c) correspondante.

18. Appareil selon la revendication 7 et l'une quelconque des revendications 12 à 17, **caractérisé en ce qu'**un circuit de détente est associé à chaque sous-unité (1', 1 "), ledit circuit étant constitué d'une pluralité de lignes de détente parallèles (33) intégrant des valves anti-retour (33'), reliés à leur extrémité amont à travers des vannes (15d) de contrôle d'entrée correspondantes aux canaux d'évacuation (23', 25', 27') des bouchons supérieurs (3", 6', 7') des réacteurs (3) et contenants concernés (6, 7) et réunis à leurs extrémités aval opposées dans un montage de barbotage dans un liquide décontaminant (34) contenu dans un récipient (34') soumis à l'aspiration d'une hotte, et **en ce qu'**un circuit d'évacuation des déchets des réacteurs (3) et contenants (6, 7), et le cas échéant de soutirage par leur bouchon inférieur (3"', 6", 7"), est prévu pour chaque sous-unité (1', 1"), les différentes lignes d'évacuation étant reliées, d'une part, à travers les vannes correspondantes des unités de vannes (16c) de gestion des entrées/sorties, aux orifices de sortie des passages (22, 24, 26) des bouchons inférieurs (3"', 6", 7") desdits réacteurs (3) et contenants (6, 7) et, d'autre part, à des canaux d'entrée de collecteurs (8") de déchets, éventuellement montés en cascade par interconnexion et reliés, le cas échéant par un sélecteur de sortie (17), aux réservoirs de vidange et de récupération (13).

19. Appareil selon l'une quelconque des revendications 12 à 18, **caractérisé en ce que** le circuit de distribution et d'injection de gaz propulseur est principalement constitué par une ligne d'alimentation principale (36) connectée à une source (36) de gaz propulseur sous haute pression et par plusieurs lignes d'alimentation secondaires parallèles (37) dérivées de ladite ligne d'alimentation principale à travers des vannes de détente (38) à pressions calibrées, reliées respectivement, de manière directe, aux réservoirs (9, 9', 9", 10, 11, 12) de solvants, de réactifs et de substances de base pour les synthèses, et, de manière indirecte, aux réacteurs (3) et aux contenants (6, 7) formant chambres de mélange principale et secondaires, par les différents circuits de circulation de fluides, et associées chacune à une soupape de sécurité de surpression (37') montée en parallèle sur la ligne (37) considérée, chaque ligne d'alimentation secondaire (37) intégrant au moins un module déshydrateur (39) au gel de silice et un module à filtre en papier (40) traversés par le flux de gaz propulseur circulant dans ladite ligne secondaire (37).

20. Appareil selon les revendications 2, 6 et 8, **caractérisé en ce que** chaque sous-unité (1', 1") dudit appareil (1) comprend un dispositif de régulation de température intégrant une unité (28) de commande et de contrôle, contrôlé par l'unité informatique (19) et formant en coopération avec des sondes (29) de mesure de la température interne dans les chambres des réacteurs (3) et des chambres de mélange secondaires (6) et des tubes de transfert (30) du type Dewar reliées, d'une part, à une source de fluide contrôlé en température et, d'autre part, aux entrées des moyens de chauffage/refroidissement (4), autant de boucles indépendantes de régulation et d'asservissement en température, à savoir une pour chacun des modules (2) de réacteurs (3) et une pour chacune des chambres de mélange secondaires (6).

21. Appareil selon la revendication 11, **caractérisé en ce que** chaque module de synthèse (2) est pourvu d'un dispositif de régulation de température sous la forme d'une ligne (41) d'alimentation des moyens de chauffage/refroidissement (4) des réacteurs (3), sous forme de serpentins, en fluide gazeux thermorégulé, comprenant essentiellement un tube de transfert (30) du type Dewar intégrant un moyen de chauffage, relié par l'une de ses extrémités auxdits serpentins (4) et par son extrémité opposée à une source (42) de fluide gazeux à une température sensiblement inférieure à la température la plus basse souhaitée pour les réacteurs (3), au moins un, et préférentiellement plusieurs, des réacteurs (3) intégrant une sonde de mesure (29) de la température dans leur volume interne dont le signal de sortie est évalué par une unité (28) de commande et de contrôle du débit du fluide gazeux et de son chauffage dans le tube de transfert (30), formant avec ladite ou lesdites sonde(s) (29) une boucle de régulation de la température de chaque module (2) concerné, ladite unité (28) de commande et de contrôle étant éventuellement commune à au moins deux modules (2) ou à une sous-unité (1', 1 ").

22. Procédé de synthèse de molécules organiques au moyen de l'appareil selon l'une quelconque des revendications 11 à 21, par application d'un protocole de synthèse combinatoire sur phase solide, **caractérisé en ce qu'**il comprend notamment au moins une opération de transfert et de mélange des produits de synthèse intermédiaires avec leur support de synthèse solide présents dans les différents réacteurs (3) des différents modules (2), dans le contenant (7) formant chambre de mélange principale ou dans les contenants (6) formant chambres de mélange secondaires et associés, respectivement, chacun à un module (2), suivi d'une opération inverse de transfert et de répartition contrôlée des produits de synthèse intermédiaires sur support solide et, le cas échéant du support de synthèse, présents dans les contenants (6) ou dans le contenant (7), soit dans les réacteurs (3) des différents modules (2) ou les réacteurs (3) des modules (2) respectivement concernés, soit dans les différents contenants (6), lesdits produits de synthèse intermédiaires sur support solide, étant, avant chaque opération de transfert, mis en suspension dans une solution de transfert chimiquement inerte par rapport auxdits produits de synthèse intermédiaires, le volume de solution de transfert étant environ dix fois supérieur au volume desdits produits de synthèse intermédiaires sur support solide à mettre en suspension et ladite solution de transfert étant récupérée et recyclée après chaque opération et opération inverse précitées et avant enchaînement de toute phase opératoire consécutive.

23. Procédé de synthèse selon la revendication 22, **caractérisé en ce que** chaque opération de transfert et de mélange consiste essentiellement, pour un module (2) donné et son circuit de transfert/mélange/répartition, à remplir les portions de conduits (8, 8') et (35"') et les canaux du sélecteur (17) et du diviseur (35) de solution de transfert fraîche en mettant sous pression un réservoir (12') correspondant et en ouvrant, de manière répétée, séquentiellement les vannes correspondantes des unités de vannes (16a) des différents réacteurs (3) du module (2) concerné, puis les vannes correspondantes des unités de vannes (16a) du contenant (6) et/ou (7), à remplir ensuite lesdites portions de conduits et lesdits canaux par injection de la solution de transfert dans les réacteurs (3) et contenant(s) (6) et/ou (7) respectif(s) et à vidanger lesdits réacteurs (3) et contenants (6) et/ou (7) de leur surplus de solution de transfert dans le réservoir (13) à déchets, puis à remplir lesdits réacteurs (3) de solution de transfert et à actionner les organes d'agitation mécaniques (5) pour mettre en suspension les produits de synthèse intermédiaires sur support solide dans le liquide de transfert présent dans lesdits réacteurs (3), à transférer la majorité, préférentiellement environ 80 %, du contenu desdits réacteurs (3) dans le contenant (6) ou (7), d'une part, en ouvrant les vannes (15) ou unités de vannes (16a) de gestion des entrées/sorties, associée chacune à l'ouverture extérieure d'un conduit vertical ou d'un passage radial débouchant dans le volume intérieur du contenant (6) concerné ou du contenant (7) et, d'autre part, en ouvrant de manière répétée et séquentiellement les vannes respectives des unités de vannes (16a) de gestion des entrées/sorties des différents réacteurs (3) du module (2) concerné, reliées aux ouvertures extérieures de conduits débouchant dans les chambres de réaction (3"") légèrement au-dessus des filtres de rétention (21), ce en mettant successivement lesdites chambres (3"") sous pression de gaz propulseur pendant des intervalles de temps donnés et après avoir configuré de manière appropriée le sélecteur (17) associé au module (2) concerné, à évacuer ensuite le reste de solution de transfert par les passages de vidange (22) des bouchons inférieurs (3"') desdits réacteurs (3) en l'acheminant dans le réservoir (12), à remplir lesdits réacteurs (3) à nouveau de solution de transfert provenant du réservoir (12) mis sous pression et à agiter leur contenu résultant, à reprendre les opérations de transfert séquentiel et d'évacuation précitées et, enfin, à reprendre au moins une troisième fois lesdites opérations précitées de remplissage des réacteurs (3), d'agitation, de transfert séquentiel et d'évacuation.

24. Procédé de synthèse selon l'une quelconque des revendications 22 et 23, **caractérisé en ce que** chaque opération de transfert et de répartition contrôlée consiste essentiellement, après lavage des portions de conduits (8, 35"') et des canaux du sélecteur (17) et du diviseur (35) destinées à former par coopération le circuit de transfert et de répartition souhaité, à mettre en suspension les produits de synthèse intermédiaires, et le cas échéant le support de synthèse associé, par injection de solution de transfert issue d'un réservoir (12) correspondant dans le contenant (7) ou le(s) contenant(s) (6) concerné(s) et agitation consécutive au moyen d'un organe mécanique d'agitation (5), à remplir le circuit de transfert et de répartition de solution de transfert, à ouvrir la ou les vanne(s) (15) ou unité(s) de vanne(s) (16a) de gestion des entrées/sorties associées chacune à l'ouverture extérieure d'un conduit vertical ou d'un passage radial débouchant dans le volume intérieur du ou de chacun desdits contenant(s) (6) ou du contenant (7) concerné(s), à configurer le ou les sélecteur(s) (17) associé(s) au(x) module(s) (2) concerné(s) de manière à établir la communication avec le ou les diviseur(s) (15) dudit ou desdits module(s) (2), à mettre sous pression de gaz propulseur le contenant (7) ou le(s) contenant(s) (6), puis à actionner à l'ouverture, séquentiellement et consécutivement, selon des cycles en boucles, les vannes respectives des unités de vannes (16a) de gestion des entrées/sorties des différents réacteurs (3) du ou des module(s) (2) concerné(s) contrôlant l'accès au niveau des ouvertures extérieures de conduits débouchant dans les chambres de réaction (3"") desdits réacteurs (3), le cas échéant simultanément pour des réacteurs (3) de différents modules (2), à répéter les cycles précités un nombre de fois suffisant pour réduire sensiblement le volume de solution dans le ou les contenant(s) (6 ou 7), préférentiellement d'environ 75 à 95 %, puis à injecter une quantité additionnelle de solution de transfert dans le ou les contenant(s) (6 ou 7) et à agiter le mélange résultant, à transférer ledit mélange comme précédemment du ou des contenant(s) (6 ou 7) vers les réacteurs (3) concernés, à répéter ces deux dernières phases opératoires au moins une fois encore, puis à vidanger le ou les contenant(s) (6 ou 7) concernés et à extraire la solution de transfert desdits réacteurs (3) et à la recycler par acheminement en retour vers le réservoir (12) correspondant.

25. Procédé de synthèse selon la revendication 24, **caractérisé en ce que** le fractionnement par répartition, entre les différents réacteurs (3) de chaque module (2) concerné, du contenu du contenant (7) ou du contenant (6) associé audit module (2) durant une opération de transfert et de répartition contrôlée, est déterminé par le contrôle des durées d'actionnement à l'ouverture des vannes respectives des unités de vannes (16a) de gestion des différents réacteurs (3) dudit module (2) durant chaque cycle d'actionnement.

26. Procédé selon la revendication 25, **caractérisé en ce que** pendant une première phase de l'opération de transfert et de répartition contrôlée, correspondant à l'évacuation de la solution de transfert pure, c'est-à-dire non chargée en produits de synthèse intermédiaires, présente dans les portions de circuit (8, 35"') par injections fragmentaires successives dans les différents réacteurs (3) du ou des modules (2) concernés, les durées d'actionnement des vannes des unités de vannes (16a) de gestion des entrées/sorties desdits réacteurs (3) sont identiques pour tous les réacteurs (3) et de faible longueur, en particulier en fin de ladite phase d'évacuation et début de la phase d'injection dans les réacteurs (3) de solution de transfert chargée en produits de synthèse intermédiaires provenant du ou des contenants (6, 7).

27. Procédé de synthèse selon l'une quelconque des revendications 24 à 26, **caractérisé en ce que**, dans le cas d'une opération de transfert et de répartition contrôlée à partir du contenant (7) vers plusieurs modules (2), les réacteurs (3) de même rang des différents modules (2) concernés sont, de manière répétée et en fonction des cycles d'actionnement, actionnés simultanément et pendant des durées identiques dans le cas d'une répartition équimolaire entre modules (2).

28. Procédé selon l'une quelconque des revendications 24 à 27,
**caractérisé en ce que** la solution de transfert consiste en un mélange de DCM (dichlorométhane) et de DMF (diméthylformamide), avantageusement avec un rapport volumique mutuel d'environ 1.

## Claims

1. Automatic apparatus for the synthesis of organic molecules, particularly in solid phase, according to combinative or parallel synthesis protocols, **characterised in that** it is principally constituted, on the one hand, by a plurality of synthesis modules (2) each comprising between three and ten, preferably five, reactors (3) each formed by a tubular body (3') delimiting, in cooperation with an upper injection and expansion plug (3") and a lower removable plug (3"') for controlled withdrawal and emptying, a reaction chamber (3"") normally closed and sealed and controlled as to temperature by heating and cooling means (4) and provided with agitation means (5) of the reaction medium by bubbling and/or by means of a mechanical member, a container (6) forming a secondary mixing chamber and the capacity of which corresponds at least to the sum of the capacities of the reactors (3) of a module (2), being associated with each module (3) and a supplementary container (7) being provided, forming a principal mixing chamber, the capacity of which corresponds at least to the sum of the capacities of the various secondary mixing chambers (6), on the other hand by at least one circuit for the transfer of the contents of the reactors (3) toward the container (6) associated with the synthesis module (2) in question and/or toward the container (7) and the controlled distribution of the content of one or more of the containers (6) between the reactors (3) of the associated module (2) and/or of the content of the container (7) between the containers (6) or the reactors (3) of one or a plurality of or all of the modules (2) of the apparatus (1), as well as at least one supply or evacuation circuit connected particularly to the various inputs/outputs of the reactors (3) and of the containers (6, 7), these circuits permitting the circulation of the fluid or fluids under the action of an inert or neutral propulsion gas and being formed by conduits or portions of conduits (8) interconnected with each other and connecting said reactors (3) and containers (6, 7) together and to reservoirs (9, 10, 11, 12, 13) of solutions and to expansion, suction and propulsion or bubbling gas injection lines, these connections being established temporarily by means of mono-path valves (15) or units (16, 17) of multi-path and monobloc valves constituting programmable junctions of configuration of said circuits or of control and management members for the inputs/outputs of the reactors (3) and containers (6, 7) and, finally, by a branched supervisor (18) for management and control of the circulation and of the distribution of the fluids in the aforementioned circuits and of the temperature and agitation in the chambers (3"") of the reactors (3), comprising particularly a computer unit (19) associated with electronic circuits (19') for interfacing and multiplexing particularly for the control of the valves and valve units (15, 16, 17), of the heating and cooling means (4) of the chambers (3"") of the reactors (3) and, as the case may be, the driving of the mechanical agitation members (5), and integrating dialogue interfaces (19") with and of programming by the user.

2. Apparatus according to claim 1, **characterised in that** it has a modular structure and is constituted by at least three sub-units (1', 1"), namely a first sub-unit (1') comprising a module (2) of five reactors (3), a secondary mixing chamber (6) and the principal mixing chamber (7) and at least two other sub-units (1") of identical constructions each comprising two modules (2) of five reactors (3) and their secondary mixing chambers (6) respectively associated therewith, each sub-unit (1', 1") comprising its own fluid circulation circuits, connecting its reactors (3) and containers (6, 7) to each other, to the reservoirs (9 to 13) and to associated volumetric dosers (14, 14'), the reactors (3) and the secondary mixing chambers (6) of the two sub-units (1") of the same construction nevertheless being connected, in a fluid manner, at least to the principal mixing chamber (7) forming a portion of the first sub-unit (1').

3. Apparatus according to claim 2, **characterised in that** with each sub-unit (1', 1") is associated a control branch (18'), for control and measurement of the supervisor system (18), these various branches (18') all being connected to a series bus (18") connected to the computer unit (19) controlling in particular the progress of the various operative phases and the transmission paths of which are multiplexed toward the members and means to be controlled and the detectors and measurement means for the various sub-units (1', 1") to open on outlet or inlet ports of the interface circuits (19'), these ports being arranged and grouped in branches (18') with the image and as a function of the arrangement and of the physical or functional grouping of said members and means to be controlled and said detectors and measurement means.

4. Apparatus according to any one of claims 1 to 3, **characterised in that** the reactors (3) of each module (2) are arranged between themselves in an equidistant and equiangular manner, according to a circular configuration and mounted in a support structure (20) carrying particularly also the valves and the multi-path valve units (15, 16a, 16b) controlling the access to the chambers (3"") of the reactors (3) for the injection of substances and the extraction or evacuation of gas or substances to be recovered or eliminated, as well as if desired the valves or the multi-path valve unit (15, 16c) controlling the access to said chambers (3"") for emptying and withdrawing by phases.

5. Apparatus according to any one of claims 1 to 4, **characterised in that**, for each reactor (3), the lower removable plug (3"") ensures the sealing of a retention filter (21) of the resin serving as a synthesis support and comprises a passage (22) for controlled emptying of the liquids contained in said reactor (3) and if desired the injection of a bubbling gas and **in that** the upper plug (3") comprises one or more channels (23) for the injection of substances necessary for the synthesis and of various solvents and at least one channel (23') for expansion and evacuation of the gases generated in the reactor (3) in question, each of said channels (23, 23') being connected, at its external opening, with a suitable branching connection (8'), to a corresponding opening of a channel or a portion of outlet channel (16", 17") or input channel (16', 17') of at least one valve (15) or unit of multi-path valves (16a, 16b) for management of the inputs/outputs of an upper plug (3") and belonging to the reactor (3) in question.

6. Apparatus according to any one of claims 1 to 5, **characterised in that** the reactors (3) of each module (2) are thermally insulated from each other and from the external medium, the reactors (3) of a single module (2) being for example mounted in an insulating structure (20') surrounding and isolating each one from the others, and **in that** each reactor (3) is provided with heating and cooling means (4) of the lower portion of its chamber (3"") receiving the reaction medium and with a condensation means (4') of the upper portion of its chamber (3"") to condense vapours generated during heating of the reaction medium, said heating/cooling and condensation means (4, 4'), in the form of coils surrounding each reactor (3), mounted in the portion of the chamber (3"") of the reactor (3) to be regulated as to temperature and acting through the material of the wall of the reactor (3) in question, and the insulating structure (20') leaving the upper and lower plugs (3", 3"') exposed and accessible.

7. Apparatus according to any one of claims 2 to 6, **characterised in that** each secondary mixture container (6) and the principal mixture container (7) have bodies of tubular shape closed by an upper plug (6', 7') comprising one or more channels (25, 27) for the injection of substances necessary for the synthesis and of solvents and at least one channel (25', 27') for expansion and evacuation of gases, and with which are associated valves (15) and units (16a, 16b) of multi-path valves for management of the inputs/outputs, and by a lower removable emptying plug (6", 7"), provided with an evacuation passage (24, 26) of which the outlet is controlled by a multi-path valve unit (16c) and maintaining sealed a retention filter (21', 21") for synthesis support, said containers (6 and 7) being moreover provided with a mechanical agitation member (5).

8. Apparatus according to claim 7, **characterised in that** each secondary mixture container (6) is moreover controlled as to temperature, in its internal chamber, by being provided with thermal insulation (6"') and means (4) for heating and cooling at least the volume adapted to contain the reaction medium, associated with a cooling means (4') for the condensation of vapours generated during heating of said reaction medium.

9. Apparatus according to any one of claims 1 to 8, **characterised in that** the multi-path valve units (16) of a first type each comprise a common principal channel (16') for supply or input, respectively collector or outlet, being adapted to be placed in fluid communication, individually or group-wise, with a plurality of output secondary channels (16"'), respectively of input channels (16"), separate during actuation of one or more corresponding members for opening the passage or for eliminating the closure, controlled by the computer unit (19) of the supervisory system (18), said common principal channel (16') being adapted, as the case may be, to be closed at its end opening or openings by one or more similar members to permit the establishment of a transverse communication passage between at least two secondary channels (16", 16"'), the volumes of liquid transferred during opening of the communication passages being controlled by the computer unit (19) based on the opening time and the pressure of the propulsion gas, for example nitrogen, applied to the reservoirs (9 to 13), to the volumetric dosers (14, 14'), to the reactors (3), to the secondary chambers (6) and/or to the principal chamber (7).

10. Apparatus according to claim 9, **characterised in that** multi-path valve units (17) of a second type comprise a common principal channel (17') that does not open to the outside, connecting together a plurality of opening secondary channels (17") of which certain ones constitute input channels and of which the others constitute output channels, so as to form a selector allowing one or more input channels (17") to be connected to one or more output channels (17"), as a function of the actuation or inactivation of one or more members for opening a passage or for eliminating closure each controlling the passage between a secondary channel (17") and the common principal channel (17).

11. Apparatus according to any one of claims 1 to 10, **characterised in that** it comprises, for each module (2), a transfer/distribution/mixing circuit, this latter being principally constituted by a multi-path valve unit forming a selector (17) of which three secondary channels (17") are respectively connected, on the one hand, to at least one reservoir of transfer solution (12) and, on the other hand, to said container (6) forming a secondary mixing chamber for said module (2) and, finally, to the container (7) forming a principal mixing chamber, via a multi-path valve unit (16a) for management of the inputs/outputs, at the external openings of vertical conduits or radial passages opening into the internal volume of said containers (6 and 7) slightly above the retention filter (21', 21 ") delimiting the bottom of the functional portion of said containers (6, 7), and of which a fourth secondary channel (17', 17") is connected to the input of the common channel (35') of an equimolar flow divider (35), of which the outputs of the distribution channels (35") are connected, by means of portions (35"') of conduits having identical lengths and via valve units (16a) for management of the inputs/outputs, to the various reactors (3) of the module (2) in question, at external openings of conduits opening into the portions of the internal volumes forming reaction chambers (3"') of said reactors (3) adapted to contain the reaction media, preferably slightly above retention filters (21) limiting the bottoms of said portions of volumes.

12. Apparatus according to any one of claims 5 and 9 to 11, **characterised in that** it comprises, for each module (2) or each sub-unit (1', 1"), on the one hand, a circuit for the supply and distribution of combinatory and secondary synthons and coupling reagents, and parallel segments of injection circuits for resin opening directly into the internal volume respectively of the chambers (3"") of reactors (3), of the secondary mixing chambers (6) and of the principal mixing chamber (7), on the other hand, a circuit for the supply and distribution of rinsing, washing and cleaning solvents, a circuit for the supply and distribution of general de-protection reagents, a circuit for the supply and distribution of TFA de-protection reagents and an expansion circuit for the various chambers (3"", 6 and 7), connected to branch sites of injection channels (23, 25, 27) or evacuation channels (23', 25', 27') provided in the respective upper plug (3", 6', 7') of the reactors (3), of the containers forming secondary mixing chambers (6) and of the container forming the principal mixing chamber (7) and, finally, a controlled withdrawal circuit of liquid phases present in said chambers and a circuit for emptying and evacuation of waste, connected to branch sites formed at the outlet of passages (24, 26, 28) provided in the lower plugs of the reactors (3), of the secondary mixing containers (6) and of the principal mixing container (7).

13. Apparatus according to claims 7 and 12, **characterised in that** a distribution circuit of synthons and coupling reagents is associated with each sub-unit (1', 1") of said apparatus (1), this circuit being if desired constituted by two separate supply sub-circuits, namely, on the one hand, a supply sub-circuit for combinatory synthons comprising a unit (16d) of multi-path valves for selection of synthons for each reactor (3) of a synthesis module (2), of which the output of the common principal channel (16') is connected to a first unit of a pair, mounted in cascade, of units (16b) of multi-path valves for the management of inputs/outputs of a passage or conduit opening into the internal volume of the corresponding reactor (3), preferably above a retention filter (21) for the solid synthesis support and, on the other hand, a sub-circuit for the supply of secondary synthons and coupling reagents comprising units (16e) of multi-path valves for selection of synthons and of reagents, mounted in parallel, of which the outputs of the principal channels (16') are connected to the input channels of a selector (17), the output channels (17"') of said selector being connected to the corresponding input channels (16") of said primary units (16b) of multi-path valves for management of inputs/outputs in the reactors (3) or with input channels (16") of multi-path valve units (16b) for management of the inputs/outputs of passages or conduits opening into the internal volumes of the containers (6, 7) in question of a module (2) or of the sub-unit (1) in question, as the case may be by means of a multi-path valve unit for multiplexed distribution (16f) for the selection of the reactors (3) of the module (2) in question, the multi-path valve units for selection (16d and 16e) each comprising moreover an input channel (16") for the injection of washing and cleaning solvent or solvents, connected to the corresponding principal channel (16') at its end opposite its output, and the units of multi-path management valves (16b), for selection (16f) and for forming a selector (17) each comprising an output channel (16"') for the evacuation of waste toward reservoirs (13) for emptying and recovery by means of a collector (35), said output channel (16"') being connected to the corresponding principal channel (16') of the valve unit (16b, 16f, 17) in question at or adjacent to one of its ends.

14. Apparatus according to claims 7 and 12, **characterised in that** a distribution circuit for solvents for washing and cleaning and rinsing and for transfer solution is associated with each sub-unit (1', 1"), said circuit being principally constituted by at least one unit of multi-path valves for selection of solvents (16g), the input channels (16") of which are connected to various solvent and solution reservoirs (10, 12) that can be placed under pressure separately by means of at least one unit (16h) of multi-path valves for placing under pressure selectively, the principal channel (16') of which is supplied with propulsive gas and the output channels (16"') of which are each connected to a reservoir of solvent or solution (10, 12), the output of the principal channel (16') of the valve unit for selection of solvents (16g) being connected to the common supply input (31') of a radial distributor block (31) comprising a plurality of mono-path valves (15), the input channels (16") of which are connected to said supply input (31') and the output channels (16"') of which supply, via suitable volumetric dosers (14, 14'), on the one hand an equimolar flow divider (35), the output channels (35") of which are connected to a valve (15a) for the control of the input of an injection channel (23) of an upper plug (3") of a reactor (3) of the module (2) or of the sub-unit (1') in question, on the other hand, the or a container (6) in question forming a secondary mixing chamber and, as the case may be, the container (7) forming the principal mixing chamber, by means of an injection channel (25, 27) of their respective upper plug (6', 7"), of which the opening is controlled by a valve (15a).

15. Apparatus according to claims 7 and 12, **characterised in that** a distribution circuit for general de-protection reagents is associated with each sub-unit (1', 1"), said circuit being principally constituted by at least two units (16i) of multi-path valves for selection of solvents, mounted in series, the input channels (16") of which are connected to various reservoirs (11) of general de-protection reagent or reagents that can be separately placed under pressure, advantageously at different pressures, by means of at least two units (16j) of multi-path valves for placing under pressure, the principal channel (16') of which is supplied with propulsive gas and the output channels (16"") of which are each connected to a reservoir (11) of solvents, directly or by means of an intermediate expansion structure (32), the output of the principal channel (16') of the unit (16i) of multi-path valves for selection of solvents being connected to the common supply input (31') of a radial distributor block (31) comprising a plurality of mono-path valves (15), the input openings of which are connected to said common supply input (31') and the output openings of which supply, on the one hand, the input channel (35') of a flow divider (35), the output channels (35") of which are each connected, via a valve (15b) for input control, to the external opening of an injection channel (23) of an upper plug (3") of a reactor (3) of the module (2) or of the sub-unit (1') in question and, on the other hand, the or a container (6) in question forming the secondary mixing chamber and, as the case may be, the container (7) forming the principal mixing chamber, via an injection channel (25, 27) of their respective upper plug (6', 7'), the opening of which is controlled by a valve (15b).

16. Apparatus according to claim 15, **characterised in that** a secondary distribution circuit for coupling reagents is partially interconnected with each distribution circuit for de-protection reagents, the output of the principal channel (16') of a unit (16k) of multi-path valves for selection of coupling reagents, the input channels (16") of which are connected to various reservoirs (9") of coupling reagents, being also connected to the common supply input (31') of the radial distributor (31) forming part of the distribution circuit for general de-protection reagents, if desired by means of a collector (35) forming a supply selector between the de-protection reagents and the coupling reagents.

17. Apparatus according to claims 7 and 12, **characterised in that** a distribution circuit for TFA de-protection reagents is provided for each sub-unit (1', 1"), said circuit basically being constituted by a radial distributor (31), the supply channel (31') of which is supplied in a controlled manner by means of a collector (8") with solutions of TFA de-protection reagents at various concentrations from separate reservoirs (11'), and of which the output channels of the valves (15) are respectively connected, on the one hand, to a flow divider (35), the output channels (35") of which are each connected, via a valve (15c) for input control, to an injection channel (23) of an upper plug (3") of a reactor (3) of the one or two modules (2) in question, on the other hand to the injection channel or channels (25, 27) of the upper plugs (6', 7') of the container or containers (6, 7) in question forming a secondary or principal mixing chamber or chambers, the opening of which is controlled by a corresponding valve (15c).

18. Apparatus according to claim 7 and any one of claims 12 to 17, **characterised in that** an expansion circuit is associated with each sub-unit (1', 1"), said circuit being constituted by a plurality of parallel expansion lines (33) including non-return valves (33'), connected at their upstream end via valves (15d) for input control corresponding to the evacuation channels (23', 25', 27') of the upper plugs (3", 6', 7') of the reactors (3) and containers (6, 7) in question, and connected at their opposite downstream ends in a bubbling mounting in a decontaminant liquid (34) contained in a receptacle (34') subjected to the suction of a hood, and **in that** an evacuation circuit for waste from the reactors (3) and containers (6, 7), and as the case may be for withdrawal by their lower plug (3"', 6", 7"), is provided for each sub-unit (1', 1"), the various evacuation lines being connected, on the one hand, via the corresponding valves of the valve units (16c) for management of the inputs/outputs, to the outlet openings of the passages (22, 24, 26) of the lower plugs (3"', 6", 7") of said reactors (3) and containers (6, 7) and, on the other hand, to input channels of collectors (8") of waste, if desired mounted in cascade by interconnection and connected, as the case may be, by an outlet selector (17), to the emptying and recovery reservoirs (13).

19. Apparatus according to any one of claims 12 to 18, **characterised in that** the circuit for distribution and injection of propulsive gas is principally constituted by a principal supply line (36) connected to a source (36) of propulsive gas under high pressure and by a plurality of parallel secondary supply lines (37) derived from said principal supply line via expansion valves (38) of calibrated pressures, connected respectively directly to the reservoirs (9, 9', 9", 10, 11, 12) for solvents, reagents and basic substances for syntheses, and, indirectly, to the reactors (3) and the containers (6, 7) forming principal and secondary mixing chambers, by the various circuits for circulation of fluids, and each associated with a safety valve (37') for overpressure mounted in parallel in the line (37) in question, each secondary supply line (37) including at least one module (39) for the dehydration of silica gel and a paper filter module (40) traversed by the stream of propulsive gas circulating in said secondary line (37).

20. Apparatus according to claims 2, 6 and 8, **characterised in that** each sub-unit (1' 1") of said apparatus (1) comprises a temperature regulating device including a unit (28) for command and control, controlled by the computer unit (19) and forming in cooperation with probes (29) for measuring the internal temperature of the chambers of the reactors (3) and secondary mixing chambers (6) and transfer tubes (30) of the Dewar type connected, on the one hand, to a source of fluid controlled as to temperature and, on the other hand, to the inputs of the heating/cooling means (4), as many independent loops for regulation and control of temperature, namely one for each of the modules (2) of reactors (3) and one for each of the secondary mixing chambers (6).

21. Apparatus according to claim 11, **characterised in that** each synthesis module (2) is provided with a device for temperature regulation in the form of a supply line (41) of the heating/cooling means (4) of the reactors (3), in the form of coils, with thermoregulated gaseous fluid, basically comprising a transfer tube (30) of the Dewar type having a heating means, connected by one of its ends to said coils (4) and by its opposite end to a source (42) of gaseous fluid at a temperature substantially below the lowest temperature desired for the reactors (3), at least one, and preferably a plurality, of the reactors (3) having a probe (29) for measuring the temperature in their internal volume, the output signal of which is evaluated by a unit (28) for command and control of the flow of gaseous fluid and of its heating in the transfer tube (30), forming with said probe or probes (29) a regulation loop of the temperature of each module (2) in question, said command and control unit (28) being if desired common to at least two modules (2) or to a sub-unit (1', 1").

22. Process for the synthesis of organic molecules by means of the apparatus according to any one of claims 11 to 21, by application of a combinative synthesis protocol in solid phase, **characterised in that** it comprises particularly at least one operation of transfer and mixture of intermediate synthesis products with their solid synthesis support present in the various reactors (3) of the various modules (2), in the container (7) forming a principal mixing chamber or in the containers (6) forming secondary mixing chambers and each respectively associated with a module (2), followed by an inverse operation of transfer and controlled distribution of the intermediate synthesis products on solid support and, as the case may be, of the synthesis support, present in the containers (6) or in the container (7), either in the reactors (3) of the various modules (2) or the reactors (3) of the modules (2) respectively in question, or in the various containers (6), said intermediate synthesis products on solid support being, before each transfer operation, placed in suspension in a transfer solution that is chemically inert relative to said intermediate synthesis products, the volume of transfer solution being about ten times greater than the volume of said intermediate synthesis products on solid support to be placed in suspension and said transfer solution being recovered and recycled after each operation and inverse operation mentioned above and before undertaking any consecutive operative phase.

23. Synthesis process according to claim 22, **characterised in that** each transfer operation and mixing operation basically consists, for a given module (2) and its transfer/mixing/distribution circuit, in filling the portions of conduits (8, 8') and (35"') and the channels of the selector (17) and of the divider (35) with fresh transfer solution by placing under pressure a corresponding reservoir (12') and by opening in a repetitive manner, sequentially, the corresponding valves of the valve units (16a) of the various reactors (3) of the module (2) in question, then the corresponding valves of the valve units (16a) of the container (6 and/or 7), then in filling said portions of conduits and said channels by injection of the transfer solution into the reactors (3) and respective container or containers (6 and/or 7), and in emptying said reactors (3) and containers (6 and/or 7) of their surplus of transfer solution into the waste reservoir (13), then in filling said reactors (3) with transfer solution and in actuating the mechanical agitation members (5) to place in suspension the intermediate synthesis products on solid support in the transfer liquid present in said reactors (3), in transferring the majority, preferably about 80 %, of the content of said reactors (3) into the container (6 or 7), on the one hand, by opening the valves (15) or valve units (16a) for management of the inputs/outputs, each associated with the external opening of a vertical conduit or of a radial passage opening into the internal volume of the container (6) in question or of the container (7) and, on the other hand, by opening in a repetitive and sequential manner the respective valves of the valve units (16a) for management of the inputs/outputs of the various reactors (3) of the module (2) in question, connected to the external openings of conduits opening into the reaction chambers (3"") slightly above retention filters (21), by successively placing said chambers (3"") under pressure of propulsive gas during given time intervals and after having suitably configured the selector (17) associated with the module (2) in question, in then evacuating the rest of the transfer solution through emptying passages (22) of the lower plugs (3"') of said reactors (3) by moving it into the reservoir (12), in filling said reactors (3) again with transfer solution from the reservoir (12) placed under pressure and in agitating the resulting content, in repeating the operations of sequential transfer and of evacuation mentioned above, and, finally, in repeating at least a third time said aforementioned operations of filling the reactors (3), of agitation, of sequential transfer and of evacuation.

24. Synthesis process according to either claim 22 or claim 23, **characterised in that** each operation of transfer and controlled distribution basically consists, after washing portions of conduits (8, 35"') and channels of the selector (17) and of the divider (35) adapted to form by cooperation the desired transfer and distribution circuit, in placing in suspension the intermediate synthesis products, and as the case may be the associated synthesis support, by injection of transfer solution from a corresponding reservoir (12) into the container (7) or the container or containers (6) in question, and subsequent agitation by means of a mechanical agitation member (5), in filling the transfer and distribution circuit with transfer solution, in opening the valve or valves (15) or valve unit or units (16a) for management of the inputs/outputs each associated with the external opening of a vertical conduit or of a radial passage opening into the internal volume of the or each of said containers (6) or of the container (7) in question, in configuring the selector or selectors (17) associated with the module or modules (2) in question so as to establish communication with the divider or dividers (15) of said module or modules (2), in placing under the pressure of propulsive gas the container (7) or the container or containers (6), then in actuating the opening, sequentially and consecutively, according to cycles in loops, of the respective valves of the valve units (16a) for management of the inputs/outputs of the various reactors (3) of the module or modules (2) in question controlling the access to the external openings of conduits opening into the reaction chambers (3"") of said reactors (3), as the case may be simultaneously for the reactors (3) of various modules (2), in repeating the aforementioned cycles a number of times sufficient substantially to reduce the volume of solution in the container or containers (6 or 7), preferably by about 75 to 95 %, then in injecting an additional quantity of transfer solution into the container or containers (6 or 7) and in agitating the resulting mixture, in transferring said mixture as before from the container or containers (6 or 7) toward the reactors (3) in question, in repeating these last two operative phases at least once more, then in emptying the container or containers (6 or 7) in question and withdrawing the transfer solution from said reactors (3) and in recycling it by bringing it back to the corresponding reservoir (12).

25. Synthesis process according to claim 24, **characterised in that** the fractionation by distribution, between the various reactors (3) of each module (2) in question, of the content of the container (7) or of the container (6) associated with said module (2) during a controlled transfer and distribution operation is determined by controlling the durations of actuation of the opening of the respective valves of the valve units (16a) for managing the various reactors (3) of said module (2) during each cycle of actuation.

26. Process according to claim 25, **characterised in that** during a first phase of the controlled transfer and distribution operation, corresponding to the evacuation of the pure transfer solution, which is to say not loaded with intermediate synthesis products, present in the circuit portions (8, 35"') by successive fragmentary injections into the various reactors (3) of the module or modules (2) in question, the durations of actuation of the valves of the valve units (16a) for management of the inputs/outputs of said reactors (3) are identical for all the reactors (3) and of short length, in particular at the end of said evacuation phase and the beginning of the injection phase into the reactors (3) of transfer solution loaded with intermediate synthesis products from the container or containers (6, 7).

27. Synthesis process according to any one of claims 24 to 26, **characterised in that**, in the case of a controlled transfer and distribution operation from the container (7) toward a plurality of modules (2), the reactors (3) of the same row of the various modules (2) in question are, in a repetitive manner and as a function of the actuation cycles, actuated simultaneously and for identical lengths of time in the case of an equimolar distribution between modules (2).

28. Process according to any one of claims 24 to 27, **characterised in that** the transfer solution consists of a mixture of DCM (dichloromethane) and DMF (dimethylformamide), advantageously with a mutual volumetric ratio of about 1.

## Patentansprüche

1. Automatisches Gerät zum Synthetisieren organischer Moleküle, insbesondere in der festen Phase, nach kombinatorischen oder parallelen Syntheseprotokollen,
**dadurch gekennzeichnet, dass** es hauptsächlich einerseits aus mehreren Synthesemodulen (2) besteht, die jeweils zwischen drei und zehn, bevorzugterweise fünf, Reaktoren (3) umfassen, die jeweils aus einem rohrförmigen Körper (3') gebildet sind, der zusammen mit einem oberen Injektions- und Entspannungsstopfen (3") und einem herausnehmbaren unteren Stopfen (3"') zur kontrollierten Entnahme und zum Entleeren, eine Reaktionskammer (3"") abgrenzt, die normalerweise wasserdicht geschlossen ist und deren Temperatur mittels Heiz- und Kühlmittel (4) kontrolliert wird, wobei diese Kammer ein Rührmittel (5) des Reaktionsmilieus durch Blasenbildung oder mit Hilfe eines mechanischen Organs aufweist, wobei ein Aufnahmegefäß (6), das eine sekundäre Mischkammer bildet und deren Aufnahmekapazität mindestens der Summe der Aufnahmekapazitäten der Reaktoren (3) eines Moduls (2) entspricht, einem jeden Modul (3) zugeordnet ist und wobei ein zusätzliches Aufnahmegefäß (7) vorgesehen ist, das eine Hauptmischkammer bildet, deren Aufnahmekapazität mindestens der Summe der Aufnahmekapazitäten der verschiedenen sekundären Mischkammern (6) entspricht, andererseits **dadurch**, dass das Gerät aus mindestens einem Kreislauf zum Transfer der Inhalte der Reaktoren (3) zu dem mit den betrachteten Synthesemodul (2) assoziierten Aufnahmegefäß (6) und/oder zum Aufnahmegefäß (7) und zur kontrollierten Verteilung des Inhaltes eines der Aufnahmegefäße (6) unter den Reaktoren (3) des assoziierten Moduls (2) und/oder des Inhaltes des Aufnahmegefäßes (7) unter den Aufnahmegefäßen (6) oder den Reaktoren (3) des einen Moduls, mehrerer Module oder aller Module (2) des Gerätes (1) sowie mindestens eines Kreislaufes zum Einspeisen oder zum Ableiten, der insbesondere mit den verschiedenen Ein-/Ausgängen der Reaktoren (3) und der Aufnahmegefäße (6, 7) verbunden ist, wobei diese Kreisläufe, die das Zirkulieren der Flüssigkeit(en) unter der Wirkung eines inerten oder neutralen Antriebsgases erlauben und aus untereinander verbundene Leitungen oder Teilen von Leitungen (8) bestehen, welche die Reaktoren (3) und die Aufnahmegefäße (6, 7) untereinander und mit Behältern (9, 10, 11, 12, 13) für Lösungen sowie mit Leitungen verbinden, die der Entspannung, dem Aufsaugen und dem Injizieren von Antriebsgasen oder von Gasen zur Blasenbildung dienen, wobei diese Verbindungen vorübergehend mit Hilfe von Einwegventilen (15) oder von Einheiten (16, 17) von Mehrweg- und Monoblockventilen hergestellt werden, die programmierbare Knoten zur Konfiguration dieser Kreisläufe oder der Steuerungs- und Lenkungsorgane der Ein-/Ausgänge der Reaktoren (3) und der Aufnahmegefäße (6, 7) bilden und, zuletzt, **dadurch**, dass das Gerät aus einem verzweigten Überwachungssystem (18) zum Lenken und Steuern der Zirkulation und zur Verteilung der Flüssigkeiten in den bereits benannten Kreisläufen sowie der Temperatur und des Rührens in den Kammern (3"") der Reaktoren (3) gebildet wird, wobei es insbesondere einen Rechner (19) umfasst, der mit elektronischen Kreisläufen (19') assoziiert ist, welche der Schnittstellenbildung und der Multiplexierung dienen, insbesondere zum Steuern der Ventile und der Ventileinheiten (15, 16, 17), der Heiz- und Kühlmittel (4), der Kammern (3"") der Reaktoren (3) und, gegebenenfalls zum Steuern des Antriebs der mechanischen Rührmittel (5), wobei dieser Rechner (19) Schnittstellen (19") für den Dialog mit dem Benutzer und zum Programmieren durch den Benutzer umfasst.

2. Gerät nach Anspruch 1, **dadurch gekennzeichnet, dass** es eine modulare Struktur aufweist und von mindestens 3 Untereinheiten (1', 1 ") gebildet wird, nämlich eine erste Untereinheit (1'), welche ein Modul (2) von fünf Reaktoren (3), eine sekundäre Mischkammer (6) und die Hauptmischkammer (7) umfasst, sowie mindestens zwei weitere, identische aufgebaute Untereinheiten (1"), die jeweils zwei Module (2) von fünf Reaktoren (3) und ihren jeweils assoziierten sekundären Mischkammern (6), wobei jede Untereinheit (1', 1") ihre eigenen Flüssigkeitszirkulationskreisläufe umfasst, welche die Reaktoren (3) und die Aufnahmegefäße (6, 7) untereinander, mit den Behältern (9 bis 13) und mit assoziierten Volumendosiereinheiten (14, 14') verbinden, wobei jedoch die Reaktoren (3) und die sekundären Mischkammern (6) der zwei Untereinheiten gleicher Bauart (1") strömungsmechanisch mindestens mit der Hauptmischkammer (7), die Teil der ersten Untereinheit (1') ist, verbunden sind.

3. Gerät nach Anspruch 2, **dadurch gekennzeichnet, dass** einer jeden Untereinheit (1', 1"), ein Zweig (18') zum Steuern, zum Kontrollieren und zum Messen des Überwachungssystems (18) assoziiert ist, wobei diese verschiedenen Zweige (18') alle einem Serienbus (18") angeschlossen sind, der selbst mit dem Rechner (19) verbunden ist, welcher insbesondere die Abwicklung der verschiedenen Betriebsphasen steuert und deren Übertragungswege in Richtung auf die Organe und Steuermittel sowie der Fühler und Messmittel der verschiedenen Untereinheiten (1', 1 ") multiplexiert sind, um bei Aus- oder Eingangsports der Schnittstellenkreisläufe (19') aufzulaufen, wobei diese Ports in den Zweigen (18') geordnet und umgruppiert sind, nach Abbild und Funktion der Anordnung und der physischen oder funktionellen Umgruppierung der Organe und Steuermittel sowie der Steuermittel und der Fühler und Messmittel.

4. Gerät nach einem der Ansprüche 1 bis 3, **dadurch gekennzeichnet, dass** die Reaktoren (3) aus jedem Modul (2) so angeordnet sind, dass sie, nach einer kreisförmigen Konfiguration, untereinander denselben Abstand und denselben Winkel bilden und in einer tragenden Struktur (20) eingebaut sind, welche insbesondere ebenfalls die Ventile und die Mehrwegventileinheiten (15, 16a, 16b) trägt, die den Zugang zu den Kammern (3"") der Reaktoren (3) zum Injizieren von Substanzen und zum Extrahieren oder Ableiten von Gasen oder von Substanzen, die wiedergewonnen oder entsorgt werden sollen und auch eventuell die Ventile oder die Mehrwegventileinheit (15, 16c) trägt, welche den Zugang zu den Kammern (3"") zum Entleeren oder Entfernen in Phasen steuern.

5. Gerät nach einem der Ansprüche 1 bis 4, **dadurch gekennzeichnet, dass** für jeden Reaktor (3), der abnehmbare untere Stopfen (3"') das Halten, unter Wahrung der Dichtheit, eines Filters (21) zum Zurückhalten des Harzes sicherstellt, das als Syntheseträger dient und einen Durchgang (22) zum kontrollierten Entleeren von in dem Reaktor (3) enthaltenen Flüssigkeiten und eventuell zum Injizieren von Gas zur Blasenbildung aufweist und **dadurch**, dass der obere Stopfen (3") einen Kanal oder mehrere Kanäle (23) zum Injizieren von zur Synthese benötigten Stoffen und verschiedener Lösungsmittel sowie mindestens einen Kanal (23') zum Entspannen und Ableiten von in dem betroffenen Reaktor (3) erzeugten Gasen umfasst, wobei jeder der erwähnten Kanäle (23, 23') auf der Höhe seiner Außenöffnung mittels einer geeigneten Anschlussleitung (8') mit einer entsprechenden Öffnung eines Ausgangskanals oder eines Teils eines Ausgangskanals (16", 17") oder eines Eingangskanals (16', 17') von mindestens einem Ventil (15) oder einer Mehrwegeventileinheit (16a, 16b) zum Lenken der Ein-/Ausgänge auf der Ebene eines höheren Stopfens (3") verbunden ist und dem betroffenen Reaktor (3) zugeordnet ist.

6. Gerät nach einem der Ansprüche 1 bis 5, **dadurch gekennzeichnet, dass** die Reaktoren (3) eines jeden Moduls (2) untereinander und gegenüber der Außenwelt thermisch isoliert sind, wobei die Reaktoren (3) eines selben Moduls (2) beispielsweise in einer isolierenden Struktur (20') eingebaut sind, welche jeden dieser Reaktoren umfasst und isoliert sowie **dadurch**, dass jeder Reaktor (3) über ein Heiz- und Kühlmittel (4) für den unteren, das reagierende Mittel aufnehmende Teil seiner Kammer (3"") sowie über ein Kondensationsmittel (4') des oberen Teiles seiner Kammer (3"") verfügt, zum Kondensieren der beim Aufwärmen der Reaktionsmittel erzeugten Dämpfe, wobei diese Heiz-/Kühlmittel sowie Kondensationsmittel (4, 4') in der Form von Rohrschlangen vorliegen, welche jeden Reaktor (3) umgeben, auf der Höhe der Kammer (3"") des Temperatur geregelten Reaktors (3) angebracht sind und durch das Wandmaterial des betrachteten Reaktors (3) wirken, wobei die isolierende Struktur (20') die freie Lage und Zugänglichkeit der oberen Stopfen (3") und der unteren Stopfen (3"') erhält.

7. Gerät nach einem der Ansprüche 2 bis 6, **dadurch gekennzeichnet, dass** jedes Aufnahmegefäß für die Sekundärmischung (6) und das Aufnahmegefäß für die Hauptmischung (7) rohrförmige Körper aufweisen, die durch einen oberen Stopfen (6', 7) verschlossen sind, der einen Kanal oder mehrere Kanäle (25, 27) zum Injizieren von zur Synthese notwendigen Substanzen und von Lösungsmitteln sowie mindestens einen Kanal (25', 27') zum Entspannen und Ableiten der Gase aufweist und wobei diesem Stopfen Ventile (15) und Mehrwegventileinheiten (16a, 16b) zum Lenken der Ein-/Ausgänge zugeordnet sind; ferner sind die rohrförmigen Körper durch einen unteren, abnehmbaren Entleerungsstopfen (6", 7") verschlossen, der einen Ablaufdurchgang (24, 26) aufweist, deren Ausgang durch eine Mehrwegventileinheit (16c) gesteuert wird und wobei dieser Stopfen einen die Synthese tragenden Rückhaltefilter (21', 21 ") dicht hält, wobei die Aufnahmegefäße (6 und 7) ferner mit einer mechanischen Rührvorrichtung (5) ausgestattet sind.

8. Gerät nach Anspruch 7, **dadurch gekennzeichnet**, das jedes Aufnahmegefäß für eine Sekundärmischung (6) darüber hinaus auf der Höhe seiner inneren Kammer eine Temperatursteuerung sowie eine thermische Isolierung (6"') und ein Heiz- und Kühlmittel (4) für zumindest das Volumen aufweist, welches das reagierende Milieu enthalten soll, assoziiert mit einem Kühlmittel (4') zum Kondensieren der beim Erwärmen des reagierenden Milieus erzeugten Dämpfe.

9. Gerät nach einem der Ansprüche 1 bis 8, **dadurch gekennzeichnet, dass** die Mehrwegventileinheiten (16) einer ersten Art jeweils einen gemeinsamen Hauptkanal (16') aufweisen, der zum Speisen oder als Eingang bzw. zum Sammeln oder als Ausgang dient, wobei dieser Kanal strömungsmechanisch, individuell oder in Gruppen, mit einer Vielzahl von sekundären Ausgangskanälen (16"') bzw. Eingangskanälen (16") verbunden werden kann, die beim Betätigen eines entsprechenden Organs oder mehrerer entsprechender Organe zum Öffnen des Durchgangs oder zum Aufheben der Abdichtung verschieden sind und die vom Rechner (19) des Überwachungssystems (18) gesteuert werden, wobei der erwähnte gemeinsame Hauptkanal (16') gegebenenfalls auf der Höhe seiner Endöffnung(en) durch ein Organ oder durch mehrere ähnliche Organe verschlossen werden kann, um das Erstellen eines kommunizierenden seitlichen Durchgangs zwischen mindestens zwei Sekundärkanälen (16", 16"') zu ermöglichen, wobei die beim Öffnen dieser Verbindungsdurchgänge transferierten Flüssigkeitsvolumina durch den Rechner (19) gesteuert werden, auf der Grundlage der Öffnungszeit und des auf den Behältern (9 bis 13), auf den Volumendosiereinheiten (14, 14'), auf die Reaktoren (3), auf die Sekundärkammern (6) und/oder auf die Hauptkammer (7) ausgeübten Treibgasdrucks, wobei es sich beim Treibgas beispielsweise um Stickstoff handelt.

10. Gerät nach Anspruch 9, **dadurch gekennzeichnet, dass** Mehrwegventileinheiten (17) zweiter Art einen gemeinsamen Hauptkanal (17') umfassen, der nicht nach außen führt und eine Vielzahl von nach außen führenden Sekundärkanälen (17") untereinander verbindet, wobei es sich bei einigen um Eingangskanäle und bei anderen um Ausgangskanäle handelt, um eine Auswahlvorrichtung zu bilden, mit der ein Eingangskanal oder mehrere Eingangskanäle (17") mit einem Ausgangskanal oder mehreren Ausgangskanälen (17") verbunden werden können, als Funktion der Tatsache, ob ein Organ bzw. mehrere Organe zum Öffnen des Durchgangs oder zum Aufheben des Verschlusses, welches bzw. welche jeweils den Durchgang zwischen einem Sekundärkanal (17") und dem gemeinsamen Hauptkanal (17) steuert (steuern), betätigt wird (werden) oder nicht.

11. Gerät nach einem der Ansprüche 1 bis 10, **dadurch gekennzeichnet, dass** es für jedes Modul (2) einen Kreislauf zum Transfer/Verteilen/Vermischen umfasst, wobei dieser Kreislauf hauptsächlich aus einer Mehrwegventileinheit besteht, welche eine Auswahlvorrichtung (17) bildet, von der drei Sekundärkanäle (17") jeweils einerseits mit mindestens einem Transferlösungsbehälter (12) und andererseits mit dem die sekundäre Mischkammer für das Modul (2) bildende Aufnahmegefäß (6) und zuletzt mit dem Aufnahmegefäß (7) verbunden sind, das die Hauptmischkammer bildet, über eine Mehrwegventileinheit (16a) zum Steuern der Ein-/Ausgänge auf der Höhe der Außenöffnungen vertikaler Leitungen oder der Radialdurchgänge, die im Innenraum dieser Aufnahmegefäße (6 und 7) münden, und zwar etwas oberhalb des Rückhaltefilters (21', 21"), der den Boden des funktionellen Teils. dieser Aufnahmegefäße (6, 7) begrenzt und von denen ein vierter Sekundärkanal (17', 17") mit dem Eingang des gemeinsamen Kanals (35') eines gleichmolaren Flussteilers (35) verbunden ist, wobei die Verteilerausgänge (35") dieses gleichmolaren Flussteilers über Leitungsstücke (35"') gleicher Länge und über Ventileinheiten (16a) zum Lenken der Ein-/Ausgänge mit den verschiedenen Reaktoren (3) des betrachteten Moduls (2) verbunden sind, auf der Höhe der Außenöffnungen der Leitungen, die in den Teilen der Innenräume münden, welche die Reaktionskammern (3"') der besagten Reaktoren (3) bilden, welche die reagierenden Milieus enthalten sollen, bevorzugterweise etwas oberhalb der die Böden der erwähnten Innenraumteile begrenzenden Rückhaltefilter (21).

12. Gerät nach einem der Ansprüche 5 und 9 bis 11, **dadurch gekennzeichnet, dass** es für jedes Modul (2) oder für jede Untereinheit (1', 1 ") einerseits einen Kreislauf zum Zuführen und zum Verteilen der kombinatorischen und sekundären Synthone sowie der Kupplungsreagenzien, sowie parallele Segmente von Kreisläufen zum Injizieren von Harz aufweist, welche unmittelbar jeweils im Innenraum der Kammern (3"") der Reaktoren (3), der sekundären Mischkammern (6) und der Hauptmischkammer (7) münden und andererseits einen Kreislauf zur Zufuhr und zur Verteilung von Lösungsmitteln zum Spülen, Waschen und Reinigen, einen Kreislauf zur Zufuhr und zur Verteilung der allgemeinen Aufspaltungsreagenzien, einen Kreislauf zur Zufuhr und zur Verteilung der TFA Aufspaltungsreagenzien und einen Kreislauf zur Entspannung der verschiedenen Kammern (3"", 6 und 7), die mit jeweils in dem oberen Stopfen (3", 6', 7') des Reaktors (3),der sekundäre Mischkammern bildende (6) Aufnahmegefäße und des die Hauptmischkammer (7) bildenden Aufnahmegefäßes angebrachten Anschlüssen der Kanäle zum Injizieren (23, 25, 27) oder zum Ableiten (23', 25', 27') verbunden sind, aufweist, sowie **dadurch**, dass es einen Kreislauf zur kontrollierten Entnahme der in diesen Kammern vorhandenen Flüssigkeiten und einen Kreislauf zum Entleeren und Abführen der Abfälle aufweist, wobei diese Kreisläufe mit Anschlussstellen verbunden sind, die am Ausgang der Durchgänge (24, 26, 28) ausgebildet sind, welche in den unteren Stopfen der Reaktoren (3), der Aufnahmegefäße für Sekundärmischungen (6) und des Aufnahmegefäßes für die Hauptmischung (7) angebracht sind.

13. Gerät nach den Ansprüchen 7 und 12, **dadurch gekennzeichnet, dass** ein Kreislauf zum Verteilen der Synthone und der Kupplungsreagenzien mit jeder Untereinheit (1' ,1") des Gerätes (1) assoziiert ist, wobei dieser Kreislauf eventuell aus zwei verschiedenen Zufuhrkreisläufen gebildet wird, nämlich einerseits ein Zufuhrunterkreislauf für kombinatorische Synthone, der eine Mehrwegventileinheit (16d) zum Wählen der Synthone für jeden Reaktor (3) eines Synthesemoduls (2) aufweist, deren Ausgang des gemeinsamen Hauptkanals (16') mit einer ersten eines in Kaskade angebrachten Paars von Einheiten (16b) von Mehrwegventileinheiten verbunden ist, wobei diese Mehrwegventileinheiten die Ein-/Ausgänge eines Durchganges oder einer Leitung lenken, die im Innenraum des entsprechenden Reaktors (3) münden, bevorzugterweise oberhalb eines Rückhalterfilters (21) des Trägers der festen Synthese und andererseits **dadurch**, dass ein Zufuhrunterkreislauf für sekundäre Synthone und für Kupplungsreagenzien, welche parallel angebrachte Mehrwegventileinheiten (16e) zum Wählen der Synthone und der Reagenzien aufweist, deren Hauptkanalausgänge (16') mit den Einganskanälen einer Auswahlvorrichtung (17) verbunden sind, deren Ausgangskanäle (17"') mit den entsprechenden Eingangskanälen (16") dieser ersten Mehrwegventileinheiten (16b) zum Lenken der Ein-/Ausgänge auf der Höhe der Reaktoren (3) oder mit Eingangskanälen (16") von Mehrwegventileinheiten (16b) zum Lenken der Ein-/Ausgänge auf der Höhe der Durchgänge oder von Leitungen, die in den Innenräumen der betroffenen Aufnahmegefäße (6, 7) eines Moduls (2) oder der betrachteten Untereinheit (1) münden, gegebenenfalls über eine multiplexierte Verteilungs-Mehrwegventileinheit (16f) zum Wählen der Reaktoren (3) des betroffenen Moduls (2), wobei die Mehrwegventileinheiten zum Wählen (16d und 16e) jeweils darüber hinaus einen Eingangskanal (16") zum Injizieren von Lösungsmittel(n) zum Waschen und zum Reinigen umfassen, der mit dem entsprechenden Hauptkanal (16') auf der Höhe des seinem Ausgang gegenüberliegenden Endes verbunden ist und wobei die Mehrwegventileinheiten zum Lenken (16b), zum Wählen (6f) und die eine Auswahlvorrichtung (17) bilden, jeweils einen Ausgangskanal (16"') zum Ableiten der Abfälle zu Entleerungs- und Wiedergewinnungsbehältern (13) über einen Kollektor (35) umfassen, wobei der besagte Ausgangskanal (16"') mit dem entsprechenden Hauptkanal (16') der betrachteten Ventileinheit (16b, 16f, 17) auf der Höhe oder in der Nähe eines seiner Enden verbunden ist.

14. Gerät nach den Ansprüchen 7 und 12, **dadurch gekennzeichnet, dass** ein Kreislauf zum Verteilen von Lösungsmitteln zum Waschen, Reinigen und Spülen sowie von Transferlösungen, mit jeder Untereinheit (1', 1") assoziiert ist, wobei dieser Kreislauf hauptsächlich von mindestens einer Mehrwegventileinheit zum Wählen der Lösungsmittel (16g) gebildet wird, deren Eingangskanäle (16") mit verschiedenen Behältern für Lösungsmittel(n) und für Lösungen (10, 12) verbunden sind, welche getrennt mit Hilfe von mindestens einer Mehrwegventileinheit (16h) zur selektiven Druckerzeugung unter Druck gesetzt werden können, deren Hauptkanal (16') mit Treibgas versorgt wird und deren Ausgangskanäle (16"') jeweils mit einem Behälter für Lösungsmittel oder für Lösungen (10, 12) verbunden sind, wobei der Ausgang des Hauptkanals (16') der Mehrwegventileinheit für die Wahl von Lösungsmitteln (16g) mit dem gemeinsamen Zufuhreingang (31') eines radialen Verteilerblocks (31) verbunden ist, der mehrere Einwegventile (15) umfasst, deren Eingangskanäle (16") mit dem besagten Zuführeingang (31') verbunden sind und deren Ausgangskanäle (16"') über angepasste Volumendosiereinheiten (14, 14'), einerseits einen gleichmolaren Flussteiler (35), deren Ausgangskanäle (35") mit einem Steuerventil (15a) des Eingangs eines Injizierungskanals (23) eines oberen Stopfens (3") eines Reaktors (3) des Moduls (2) oder der betroffenen Untereinheit (1') und andererseits das oder ein betroffenes, eine sekundäre Mischkammer bildendes Aufnahmegefäß (6) und, gegebenenfalls, das die Hauptmischkammer bildende Aufnahmegefäß (7) versorgen, und zwar über einen Injizierungskanal (25, 27) ihres jeweiligen oberen Stopfens (6', 7"), dessen Öffnung durch ein Ventil (15a) gesteuert wird.

15. Gerät nach den Ansprüchen 7 und 12, **dadurch gekennzeichnet, dass** ein Kreislauf zum Verteilen von allgemeinen Spaltungsreagenzien jeder Untereinheit (1', 1 ") zugeordnet ist, wobei dieser Kreislauf hauptsächlich von mindestens zwei in Serie angebrachte Einheiten (16i) von Mehrwegventileinheiten zum Wählen von Lösungsmitteln gebildet wird, deren Eingangskanäle (16") mit verschiedenen Behältern (11) für allgemeine Spaltungsreagenzien verbunden sind, die getrennt, und vorteilhafterweise unter verschiedene Drücke, unter Druck gesetzt werden können, mit Hilfe von mindestens zwei Mehrwegventileinheiten (16j) zum Unterdrucksetzen, deren Hauptkanal (16') mit Treibgas versorgt wird und deren Ausgangskanäle (16"") jeweils mit einem Lösungsmittelbehälter (11) verbunden sind, direkt oder über eine dazwischen liegende Entspannungsvorrichtung (32), wobei der Ausgang des Hauptkanals (16') der Mehrwegventileinheit (16i) zum Wählen der Lösungsmittel mit dem gemeinsamen Zufuhreingang (31') eines radialen, mehrere Einwegventile (15) umfassenden Verteilerblocks (31) verbunden ist, deren Eingangsöffnungen mit der gemeinsamen Versorgungsöffnung (31') verbunden sind und deren Ausgangsöffnungen einerseits den Eingangskanal (35') eines Strömungsteilers (35), deren Ausgangkanäle (35") jeweils über ein Eingangs-Steuerventil (15b) mit der Außenöffnung eines Injizierungskanals (23) eines oberen Stopfens (3") eines Reaktors (3) des Moduls (2) oder der betroffenen Untereinheit (1') und andererseits, das oder ein betroffenes, die sekundäre Mischkammer bildendes Aufnahmegefäß (6) versorgen und, gegebenenfalls, das die Hauptmischkammer bildende Aufnahmegefäß (7), über einen Injizierungskanal (25, 27) ihres jeweiligen oberen Stopfens (6', 7') verbinden, dessen Öffnung durch ein Ventil (15b) gesteuert wird.

16. Gerät nach Anspruch 15, **dadurch gekennzeichnet, dass** ein sekundärer Verteilungskreislauf für Kupplungsreagenzien teilweise mit jedem Kreislauf zum Verteilen von Spaltungsreagenzien verbunden ist, wobei der Ausgang des Hauptkanals (16') einer Mehrwegventileinheit (16k) zum Wählen der Kupplungsreagenzien, deren Eingangskanäle (16") mit verschiedenen Behältern (9") für Kupplungsreagenzien verbunden sind, wobei sie ebenfalls mit dem gemeinsamen Zufuhreingang (31') des radialen Verteilers (31) verbunden sind, der Teil des Verteilungskreislaufs für allgemeine Spaltungsreagenzien ist, und dies möglicherweise über einen Kollektor (35), der eine Zufuhrauswahlvorrichtung zwischen den Spaltungsreagenzien und den Kupplungsreagenzien bildet.

17. Gerät nach Anspruch 7 und 12, **dadurch gekennzeichnet, dass** ein Kreislauf zum Verteilen von TFA Spaltungsreagenzien für jede Untereinheit (1', 1") vorgesehen ist, wobei dieser Kreislauf im Wesentlichen durch einen radialen Verteiler (31) gebildet wird, deren Zufuhrkanal (31') in kontrollierter Weise über einen Kollektor (8") mit Lösungen von TFA Spaltungsreagenzien mit verschiedenen Konzentrationen versorgt wird, die aus getrennten Behältern (11') kommen und deren Ventilausgangskanäle (15) jeweils einerseits mit einem Strömungsteiler (35) deren Ausgangskanäle (35") jeweils über ein Eingangssteuerventil (15c) mit einem Injizierungskanal (23) eines oberen Stopfens (3") eines Reaktors (3) des betroffenen Moduls (2) oder der zwei betroffenen Module (2) verbunden sind und andererseits mit dem Injizierungskanal (bzw. mit den Injizierungskanälen) (25, 27) der oberen Stopfen (6', 7') des betroffenen, eine sekundäre Mischkammer bzw. eine Hauptmischkammer bildenden Aufnahmegefäßes bzw. der betroffenen, sekundäre Mischkammern bzw. Hauptmischkammern bildende Aufnahmegefäße (6, 7) verbunden sind, deren Öffnung durch ein entsprechendes Ventil (15c) gesteuert wird.

18. Gerät nach Anspruch 7 und nach einem der Ansprüche 12 bis 17, **dadurch gekennzeichnet**, das ein Entspannungskreislauf mit einer jeden Untereinheit (1', 1 ") assoziiert ist, wobei dieser Kreislauf aus einer Vielzahl von parallelen Entspannungsleitungen (33) besteht, die Ventile mit Rücklaufsperre (33') umfassen und an ihren stromaufwärts liegenden Enden über Eingangssteuerungsventile (15d) verbunden sind, welche den Ablaufkanälen (23', 25', 27') der oberen Stopfen (3". 6', 7') der betroffenen Reaktoren (3) und Aufnahmegefäße (6, 7) entsprechen und an ihren entgegen gesetzten, stromabwärts liegenden Enden innerhalb einer Vorrichtung zum Durchblasen in einer dekontaminierenden Flüssigkeit (34) zusammengefügt sind, wobei diese Flüssigkeit sich in einem Behälter (34') befindet, der dem Sog eines Abzuges unterliegt und **dadurch**, dass ein Kreislauf zum Ableiten der Abfälle aus den Reaktoren (3) und Aufnahmegefäße (6, 7) und gegebenenfalls zum Abziehen über den unteren Stopfen (3"', 6", 7") für jede Untereinheit (1', 1") vorgesehen ist, wobei die verschiedenen Ablaufleitungen einerseits über die entsprechenden Ventile der Ventileinheiten (16c) zum Steuern der Ein-/Ausgänge an den Ausgangsöffnungen der Durchgänge (22, 24, 26) der unteren Stopfen (3"', 6", 7") der besagten Reaktoren (3) und Aufnahmegefäße (6, 7) verbunden sind und andererseits mit Eingangskanälen von Abfallkollektoren (8") verbunden sind, die eventuell in Kaskade durch innere Verbindung und gegebenenfalls durch eine Ausgangsauswahlvorrichtung (17) mit den Entleerungs- und Wiedergewinnungsbehältern (13) verbunden sind.

19. Gerät nach einem der Ansprüche 12 bis 18, **dadurch gekennzeichnet, dass** der Kreislauf zum Verteilen und Injizieren von Treibgäsen hauptsächlich aus einer Hauptzufuhrleitung (36) gebildet wird, die mit einer Hochdruck-Treibgasquelle (36) verbunden ist und ferner durch mehrere sekundäre, parallele Zufuhrleitungen (37) gebildet wird, die aus der Hauptzufuhrleitung über Entspannungsventile (38) mit kalibriertem Druck hergeleitet werden, die jeweils direkt mit den Behältern (9, 9', 9", 10, 11, 12) für Lösungsmittel, Reagenzien und Grundsubstoffe für die Synthesen und indirekt mit den Reaktoren (3) und den Aufnahmegefäßen (6, 7), welche Hauptmischkammer und sekundäre Mischkammern bilden, über die verschiedenen Flüssigkeitszirkulationskreisläufe verbunden und jeweils einem Überdrucksicherheitsventil (37') zugeordnet sind, das parallel auf der betrachteten Leitung (37) angebracht ist, wobei jede sekundäre Zufuhrleitung (37) mindestens ein mit Siliziumgel arbeitendes Entwässerungsmodul (39) und ein Papierfiltermodul (40) umfasst, das von der durch die besagte Sekundärleitung (37) fließenden Treibgasströmung durchströmt wird.

20. Gerät nach den Ansprüchen 2, 6 und 8, **dadurch gekennzeichnet, dass** jede Untereinheit (1', 1") des Gerätes (1) eine Vorrichtung zum Regulieren der Temperatur umfasst, welche eine vom Rechner (19) gesteuerte Steuerungs- und Kontrolleinheit (28) enthält und durch Zusammenwirken mit Temperaturmessfühlern (29) für die innere Temperatur der Kammern der Reaktoren (3) und der sekundären Mischkammern (6) sowie mit Transferrohren (30) des Typs Dewar, die einerseits mit einer flüssigen Quelle, deren Temperatur reguliert wird und andererseits mit den Eingängen der Heiz-/Kühlmittel (4) verbunden sind, eine Anzahl von unabhängigen Schleifen zum Regulieren der Temperatur sowie zur automatischen Temperaturrückkopplung bilden, nämlich eine für jedes Modul (2) der Reaktoren (3) und für jede sekundäre Mischkammer (6).

21. Gerät nach Anspruch 11, **dadurch gekennzeichnet, dass** jedes Synthesemodul (2) über eine Vorrichtung zum Regeln der Temperatur in der Form einer Zufuhrleitung (41) der Heiz-/Kühlmittel (4) der Reaktoren (3), welche die Form von Schlangenrohrleitungen aufweist, verfügt, wobei diese Zufuhrleitung (41) eine Gasströmung mit gesteuerter Temperatur zuführt und im Wesentlichen eine Transferleitung (30) des Typs Dewar umfasst, welche eine Heizungsvorrichtung umfasst, die über ein Ende mit den Schlangenrohrleitungen (4) und über das entgegengesetzte Ende mit einer Gasquelle (42) verbunden ist, wobei die Temperatur dieses Gases deutlich tiefer als die tiefste für die Reaktoren (3) gewünschte Temperatur liegt und wobei mindestens ein Reaktor (3) und bevorzugterweise mehrere Reaktoren (3) einen Temperaturmessfühler (29) in ihrem Innenraum aufweisen, dessen Ausgangssignal von einer Steuer-und Kontrolleinheit (28) des Gasdurchsatzes und seiner Heizung im Transferrohr (30) bewertet wird, wobei sie mit dem Fühler bzw. mit den Fühlern (29) eine Temperaturregelschleife für jedes betroffene Modul (2) bildet und wobei die besagte Steuer- und Kontrolleinheit (28) eventuell mindestens zwei Modulen (2) oder einer Untereinheit (1', 1 ") gemeinsam ist.

22. Syntheseverfahren für organische Moleküle mit Hilfe des Geräts nach einem der Ansprüche 11 bis 21, durch Anwendung eines kombinatorischen Syntheseprotokolls in fester Phase, **dadurch gekennzeichnet, dass** es insbesondere mindestens einen Transfer- und einen Mischvorgang der Synthesezwischenprodukte mit ihren festen Syntheseträgern umfasst, die in den verschiedenen Reaktoren (3) der verschiedenen Module (2), in dem die Hauptmischkammer bildenden Aufnahmegefäß (7) oder in den die sekundären Mischkammern bildende Aufnahmegefäße (6), welche jeweils mit einem Modul (2) assoziiert sind, vorhanden sind, wobei dieser Vorgang gefolgt wird von einem umgekehrten, kontrollierten Transfervorgang der Zwischensyntheseprodukte auf festem Träger und, gegebenenfalls des Syntheseträgers, welche in den Aufnahmegefäßen (6) oder im Aufnahmegefäß (7) vorhanden sind, entweder in die Reaktoren (3) der verschiedenen Module (2) oder der jeweils betroffenen Reaktoren (3) der Module (2) oder in die verschiedenen Aufnahmegefäße (6), wobei diese Zwischensyntheseprodukte auf festem Träger vor jedem Transfervorgang in Suspension in eine gegenüber der Zwischensyntheseprodukten chemisch inerten Transferlösung gebracht werden, wobei das Transfervolumen der Lösung in etwa zehn mal größer als das Volumen der Zwischensyntheseprodukte auf festem Träger ist, welche in der Transferlösung in Suspension gebracht werden sollen und wobei diese Transferlösung nach jedem Vorgang und Umkehrvorgang sowie nach dem Anschluss eines jeden nachfolgenden Betriebsvorgangs wiedergewonnen und rezykliert wird.

23. Syntheseverfahren nach Anspruch 22, **dadurch gekennzeichnet, dass** jeder Transfer- und Mischvorgang im Wesentlichen darin besteht, für ein gegebenes Modul (2) und für seinen Transfer-/Misch-/Verteilungskreislauf, die Leitungsteile (8, 8') und (35"') sowie die Kanäle der Auswahlvorrichtung (17) und des Teilers (35) mit frischer Transferlösung zu füllen, indem ein entsprechender Behälter (12') unter Druck gesetzt wird und indem die entsprechenden Ventile der Ventileinheiten (16a) der verschiedenen Reaktoren (3) des betroffenen Moduls (2), und danach die entsprechenden Ventile der Ventileinheiten (16a) des (der) Aufnahmegefäßes (Aufnahmegefäße) (6) und/oder (7), wiederholt und nacheinander geöffnet werden, ferner darin, dass danach die erwähnten Leitungsteile und Kanäle durch Injizieren der Transferlösung in die Reaktoren (3) und in das (die) entsprechende(n) Aufnahmegefäß(e) (6) und/oder (7) gefüllt werden und im Entleeren der Reaktoren (3) und des (der) Aufnahmegefäßes (Aufnahmegefäße) (6) und/oder (7) von den in ihnen befindlichen Transferlösungsüberschüssen, wobei diese Lösungsüberschüsse in den Abfallbehälter (13) geleitet werden, wonach die Reaktoren (3) mit Transferlösung gefüllt werden und die mechanischen Rührmittel (5) in Gang gesetzt werden, um die Zwischensyntheseprodukte auf festem Träger in der in den besagten Reaktoren (3) befindlichen Transferflüssigkeit in Suspension zu bringen, dann im Transferieren des größten Teils, vorzugsweise ca. 80 % des Inhaltes dieser Reaktoren (3), in das Aufnahmegefäß (6) oder (7), einerseits durch Öffnen der Ventile (15) oder der Ventileinheiten (16a) zum Lenken der Ein-/Ausgänge, die jeweils mit der Außenöffnung einer vertikalen Leitung oder eines in den Innenraum des betroffenen Aufnahmegefäßes (6) oder (7) mündenden radialen Durchgangs assoziiert sind und andererseits, indem die entsprechenden Ventile der Ventileinheiten (16a) zum Lenken der Ein-/Ausgänge der verschiedenen Reaktoren (3) des betroffenen Moduls (2) wiederholt und nacheinander geöffnet werden, wobei diese Ventile mit den Außenöffnungen der Leitungen verbunden sind, die in den Reaktionskammern (3"") etwas oberhalb der Rückhaltefilter (21) münden, wobei dies **dadurch** erfolgt, dass diese Kammern (3"") nacheinander unter Treibgasdruck während vorgegebener Zeitspannen gesetzt werden und, nachdem die mit dem betroffenen Modul 2 assoziierte Auswahlvorrichtung (17) ordnungsgemäß konfiguriert wurde, die Reste der Transferlösung danach durch die Entleerungsdurchgänge (22) der unteren Stopfen (3"') der Reaktoren (3) abgeleitet werden, indem diese Transferlösungsreste in den unter Druck gesetzten Behälter (12) geleitet werden und im Rühren des sich so ergebenden Inhalts, wonach die bereits erwähnten sequentiellen Transfer- und die Entleerungsvorgänge wieder aufgenommen werden und die Vorgangsfolge des Füllens der Reaktoren (3), des Rührens, des sequentiellen Transfers und des Ableitens mindestens ein drittes Mal wiederholt wird.

24. Syntheseverfahren nach einem der Ansprüche 22 und 23, **dadurch gekennzeichnet, dass** jeder Transfer- und kontrollierter Verteilungsvorgang im Wesentlichen darin besteht, nach dem Waschen der Leitungsteile (8, 35"') und der Kanäle der Auswahlvorrichtung (17) und des Teilers (35), die durch Zusammenwirken den gewünschten Transfer- und Verteilungskreislauf bilden, die Zwischensyntheseprodukte und gegebenenfalls den assoziierten Syntheseträger in Suspension zu bringen, durch Injizieren von aus einem entsprechenden Behälter (12) kommender Transferlösung in das betroffene Aufnahmegefäß (7) bzw. in die betroffenen Aufnahmegefäße (6) und durch nachfolgendes Rühren mit Hilfe eines mechanischen Rührwerkes (5), im Füllen des Transfer- und Verteilungskreislaufs mit Transferlösung, im Öffnen des Ventils oder der Ventile (15) oder der Ventileinheit(en) (16a) zum Lenken der Ein-/Ausgänge, die jeweils mit der Außenöffnung einer vertikalen Leitung oder eines radialen Durchgangs assoziiert sind, welche in den Innenraum des betroffenen Aufnahmegefäßes bzw. der betroffenen Aufnahmegefäße (6) oder des betroffenen Aufnahmegefäßes (7) münden, im Konfigurieren der mit dem (den) betroffenen Modul(en) (2) assoziierten Auswahlvorrichtung(en) (17), um eine Verbindung mit dem (den) Teiler(n) (15) des (der) Moduls (Module) (2) herzustellen, im Aufbau eines Treibgasdrucks im Aufnahmegefäß (7) oder im Aufnahmegefäß (in den Aufnahmegefäßen) (6) und dann, beim Öffnen, im sequentiellen und aufeinanderfolgenden Betätigen der entsprechenden Ventile der Ventileinheiten (16a) zum Lenken der Ein-/Ausgänge der verschiedenen Reaktoren (3) des (der) betroffenen Moduls (Module) (2), welche den Zugang auf der Höhe der Außenöffnungen von Leitungen kontrollieren, die in den Reaktionskammern (3"") der besagten Reaktoren (3) münden, wobei dies gegebenenfalls gleichzeitig für Reaktoren (3) verschiedener Module (2) erfolgt, ferner im Wiederholen der bereits erwähnten Zyklen, und zwar oft genug, um das Lösungsvolumen in dem (den) Aufnahmegefäß(en) (6 oder 7) merklich, vorzugsweise um 75 bis 95 %, zu verringern, und dann im Injizieren einer zusätzlichen Menge von Transferlösung in das (die) Aufnahmegefäß(e) (6 oder 7) und im Rühren der daraus sich ergebenden Mischung, im Transferieren dieser Mischung, wie oben, aus dem (den) Aufnahmegefäß(en) (6 oder 7) zu den betroffenen Reaktoren (3) und im mindestens einmaligen Wiederholen dieser zwei letzten Betriebsphasen, dann im Entleeren des (der) betroffenen Aufnahmegefäßes (Aufnahmegefäße) (6 oder 7) und im Extrahieren der Transferlösung aus den Reaktoren (3) und im Rezyklieren dieser Transferlösung durch Rückführung dieser Transferlösung in den entsprechenden Behälter (12).

25. Syntheseverfahren nach Anspruch 24, **dadurch gekennzeichnet, dass** die Fraktionierung durch Verteilung zwischen den verschiedenen Reaktoren (3) eines jeden betroffenen Moduls (2) des Inhaltes des Aufnahmegefäßes (7) oder des mit dem Modul (2) assoziierten Aufnahmegefäßes (6) im Verlauf eines Transfervorgangs und einer kontrollierten Verteilung durch die Kontrolle der jeweiligen Betätigungsdauer beim Öffnen der entsprechenden Ventile der Ventileinheiten (16a) zum Lenken der verschiedenen Reaktoren (3) des Moduls (2) während eines jeden Betätigungszyklus bestimmt wird.

26. Verfahren nach Anspruch 25, **dadurch gekennzeichnet, dass** im Verlauf einer ersten Phase des Transfers und der kontrollierten Verteilung, die dem Ableiten der reinen, d.h., nicht mit Zwischensyntheseprodukten belasteten Transferlösung entspricht, aus den Leitungsteilen (8, 35"') durch aufeinanderfolgendes Teilinjizieren in die verschiedenen Reaktoren (3) des (der) betroffenen Moduls (Module) (2), die Betätigungszeitdauern der Ventile aus den Ventileinheiten (16a) zum Lenken der Ein-/Ausgänge dieser Reaktoren (3) für alle Reaktoren (3) identisch und nur von kurzer Dauer sind, insbesondere am Ende der besagten Ableitungsphase und am Anfang der Phase zum Injizieren von mit aus dem (den) Aufnahmegefäß(en) (6, 7) kommenden Zwischensyntheseprodukten belasteten Transferlösung in die Reaktoren (3).

27. Syntheseverfahren nach einem der Ansprüche 24 bis 26, **dadurch gekennzeichnet, dass** im Falle eines Transfers und einer kontrollierten Verteilung vom Aufnahmegefäß (7) hin zu mehreren Modulen (2), die gleichrangigen Reaktoren (3) der verschiedenen betroffenen Modulen (2) wiederholt und, als Funktion der Betätigungszyklen, für den Fall einer gleichmoiaren Verteilung zwischen den Modulen (2) gleichzeitig und über identische Zeiträume betrieben werden.

28. Verfahren nach einem der Ansprüche 24 bis 27, **dadurch gekennzeichnet, dass** die Transferlösung aus einem Gemisch aus DCM (Dichlormethan) und DMF (Dimethylformamid) besteht, wobei vorteilhafterweise ein gegenseitiges Volumenverhältnis von etwa 1 eingehalten wird.
